(19) Europäisches Patentamt
European Patent Office
Office européen des brevets

(11) **EP 4 238 752 A1**

(12) **EUROPEAN PATENT APPLICATION**
published in accordance with Art. 153(4) EPC

(43) Date of publication:
06.09.2023 Bulletin 2023/36

(21) Application number: 21886417.1

(22) Date of filing: 29.10.2021

(51) International Patent Classification (IPC):
*B29K 23/00* (2006.01)     *B29K 105/04* (2006.01)
*B29L 7/00* (2006.01)     *C08J 9/26* (2006.01)
*C08J 9/36* (2006.01)     *H01G 11/52* (2013.01)
*B29C 67/20* (2006.01)     *H01G 9/02* (2006.01)
*H01M 50/414* (2021.01)     *H01M 50/417* (2021.01)
*H01M 50/449* (2021.01)     *H01M 50/451* (2021.01)
*H01M 50/457* (2021.01)     *H01M 50/489* (2021.01)
*H01M 50/491* (2021.01)     *H01M 50/494* (2021.01)

(52) Cooperative Patent Classification (CPC):
B29C 67/20; C08J 9/26; C08J 9/36; H01G 9/02;
H01G 11/52; H01M 50/414; H01M 50/417;
H01M 50/449; H01M 50/451; H01M 50/457;
H01M 50/489; H01M 50/491; H01M 50/494;
B29K 2023/00; B29K 2105/04;       (Cont.)

(86) International application number:
PCT/JP2021/040160

(87) International publication number:
WO 2022/092300 (05.05.2022 Gazette 2022/18)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 30.10.2020 JP 2020183213
22.03.2021 JP 2021047962

(71) Applicant: Asahi Kasei Kabushiki Kaisha
Tokyo 1000006 (JP)

(72) Inventors:
• MIZUTANI, Wataru
Tokyo 100-0006 (JP)
• OKUBO, Tomosato
Tokyo 100-0006 (JP)
• OKADA, Masaaki
Tokyo 100-0006 (JP)
• MATSUBAYASHI, Takeshi
Tokyo 100-0006 (JP)

(74) Representative: dompatent von Kreisler Selting
Werner -
Partnerschaft von Patent- und Rechtsanwälten
mbB
Deichmannhaus am Dom
Bahnhofsvorplatz 1
50667 Köln (DE)

(54) **POLYOLEFIN MICROPOROUS MEMBRANE**

(57)     A polyolefin porous film is provided which has a film thickness of 1-30 $\mu$m and an air permeability of at most 500 sec/100 cm$^3$, and which has a 30% or higher porosity after compression, measured in a compression test under the conditions in which the temperature is 70°C, the pressure is 8 MPa and the compression time is 3 minutes.

EP 4 238 752 A1

FIG. 1

(52) Cooperative Patent Classification (CPC): (Cont.)
B29L 2007/00; Y02E 60/10

**Description**

FIELD

The present invention relates to a polyolefin microporous membrane.

BACKGROUND

Polyolefin microporous membranes exhibit excellent electrical insulation and ion permeability; therefore, they are used in, for example, separators for batteries, separators for capacitors, materials for fuel cells, and microfiltration membranes, particularly as separators for lithium ion secondary batteries.

In recent years, lithium ion secondary batteries are used in small electronic devices such as mobile phones and laptop computers, as well as in electric vehicles such as electric cars and small electric motorcycles. Separators for such lithium ion secondary batteries are required to be safe in various safety tests, in addition to having sufficient mechanical properties and ion permeability. From the standpoint of heat resistance or rigidity of separators for lithium ion secondary batteries and cycle characteristics and the like of lithium ion secondary batteries, studies have been conducted on the crystallinity of polyolefins contained in separators, or the press test characteristics of polyolefin microporous membranes used as separators (PTLs 1 to 4).

In PTL 1, from the standpoint of obtaining both excellent lithium ion permeability and excellent heat resistance, the long period of lamellar crystal parts, which is measured by a small-angle X-ray scattering (SAXS) method, is described for a polyolefin microporous film that is stretched and porosified by a dry process.

In PTL 2, from the standpoint of achieving both low heat shrinkage and high rigidity, the long period of a polymer crystal of a stretched polypropylene film, which is measured by an SAXS method, is described.

In PTLs 3 and 4, from the standpoint of the compression resistance of a separator for a lithium ion secondary battery as well as the cycle characteristics and the like of a lithium ion secondary battery, for example, the thickness change rate of a polyolefin microporous membrane before and after a 60-minute thermal compression test conducted at a temperature of 80°C and a pressure of 1 MPa (PTL 3), and the air permeability change rate and the thickness change rate of a polyolefin microporous membrane before and after a 5-minute thermal compression test conducted at a temperature of 90°C and a pressure of 5.0 MPa (PTL 4) are described.

Further, polyolefin microporous membranes used as separators have been studied from the standpoint of, for example, balancing the mechanical properties, the heat resistance, the compression resistance, the dimensional stability, the liquid absorbability, the safety, the battery characteristics, and the like under various environments such as the inside of a battery provided with special electrodes, and a high-temperature, a high-pressure, or a large-size environment (PTLs 5 to 9).

In PTL 5, with regard to those cases where a pressurization treatment was performed at specific pressure and temperature from the standpoint of widening the difference between the shutdown temperature and the meltdown temperature of a thin-film separator and thereby ensuring battery safety, the rate of change in the air permeability of a microporous membrane measured before and after the pressurization treatment as well as the puncture strength per thickness of 12 $\mu$m are described.

In PTL 6, with regard to those cases where a pressurization treatment was performed at specific pressure and temperature from the standpoint of balancing the shutdown characteristics, the meltdown characteristics, the permeability, the mechanical strength, the heat shrinkage resistance, and the compression resistance for a polyethylene multilayer microporous membrane that includes a polyethylene resin layer and a layer containing a polyethylene resin and a heat-resistant resin other than polypropylene, the amount of increase in the air permeability measured before and after the compression treatment as well as the puncture strength per thickness of 20 $\mu$m are described.

In PTL 7, with regard to the production of a polyethylene multilayer microporous membrane, a method of controlling the average pore size distribution in the membrane thickness direction from the standpoint of balancing the permeability, the mechanical properties, the heat shrinkage resistance, the compression resistance, the electrolyte solution absorbability, the shutdown characteristics, and the meltdown characteristics is described and, for those cases where a pressurization treatment of the resulting membrane was performed at specific pressure and temperature, the air permeability attained before and after the pressurization treatment as well as the puncture strength per thickness of 20 $\mu$m are exemplified.

In PTL 8, from the standpoint of balancing the durability of a separator in the thickness direction, the safety, and the film properties, the compressive elastic modulus and the average surface roughness value of a microporous membrane containing at least either a polyethylene or a polypropylene are described, and porosification is performed by a dry process in the production of the microporous membrane.

In PTL 9, with regard to a case of using a separator along with a negative electrode material that exhibits severe expansion and contraction, the air permeability before and after extraction of a plasticizer in the production of a microporous membrane and the air permeability after a sandblast treatment of the resulting separator are described for satisfying both long-term battery cycle characteristics and safety.

[CITATION LIST]

[PATENT LITERATURE]

[PTL 1] WO 2014/175252
[PTL 2] WO 2015/012324
[PTL 3] WO 2018/164056
[PTL 4] WO 2015/194504
[PTL 5] WO 2018/043331
[PTL 6] WO 2007/023918
[PTL 7] WO 2007/037289
[PTL 8] Japanese Unexamined Patent Publication (Kokai) No. 2017-25294
[PTL 9] Japanese Patent No. 5295834

SUMMARY

[TECHNICAL PROBLEM]

Nonaqueous secondary batteries such as lithium ion secondary batteries have been developed in various shapes such as a cylindrical shape, a prismatic shape, and a pouch shape in accordance with the intended use of the respective batteries. Methods of producing these batteries vary, depending on the shape of each battery; however, for example, the production of a prismatic battery includes the steps of pressing a wound body or laminate of electrodes and a polyolefin microporous membrane, and inserting the thus pressed wound body or laminate into a rectangular parallelepiped outer casing.

However, the pressing step in the battery production using a conventional polyolefin microporous membrane, such as the one described in any of PTLs 1 to 4, may cause deterioration of the cycle characteristics and the output characteristics in the resulting battery. The same phenomenon also occurs prominently when a high-capacity and easily expandable electrode is used.

In recent years, in association with, for example, improvements in electrode materials and high-density modularization (increase in module volume energy density) of plural nonaqueous secondary batteries (single cells), it is increasingly demanded to ensure an ion permeability of a microporous membrane used as a separator as well as output characteristics or cycle characteristics of a battery including the microporous membrane, even in a condition where an external pressure is applied to the cells and the separator.

Meanwhile, a simple attempt of improving the porosity for improvement of the ion permeability of a separator can lead to deterioration in, for example, the safety of a nonaqueous secondary battery that includes the separator in a nail penetration safety test and the like.

Accordingly, in a nonaqueous secondary battery that includes a conventional polyethylene microporous membrane as a separator, the battery characteristics in a pressurized state, such as output characteristics and cycle characteristics, are in a trade-off relationship with the safety in a nail penetration safety test and the like.

In view of the above-described circumstances, an object of the present invention is to provide: a polyolefin microporous membrane which allows a nonaqueous secondary battery to achieve a high output and excellent cycle characteristics, and/or to achieve both satisfactory battery characteristics and satisfactory safety; and a nonaqueous secondary battery separator and a nonaqueous secondary battery, which include the polyolefin microporous membrane.

[SOLUTION TO PROBLEM]

The present inventors completed the present invention by discovering that the above-described problems can be solved by specifying, for a polyolefin microporous membrane, for example: the post-compression porosity; the crystallinity of a polyethylene contained as a main component in the polyolefin microporous membrane; the basis weight-converted puncture strength; the difference between a maximum value and a minimum value of the air permeability measured at three spots along the width direction (TD); and the air permeability at 30°C in a pressurized state of 3 MPa. Modes of the present invention are exemplified below.

(1) A polyolefin microporous membrane, having:

a membrane thickness of 1 $\mu$m to 30 $\mu$m;
an air permeability of 500 sec/100 cm$^3$ or less; and
a post-compression porosity, which is measured in a compression test conducted at a temperature of 70°C and a pressure of 8 MPa for a compression time of 3 minutes, of 30% or higher.

(2) A polyolefin microporous membrane, containing a polyethylene as a main component,
wherein the polyolefin microporous membrane has a crystal long period of 37.0 nm or longer as measured by a small-angle X-ray scattering (SAXS) method.
(3) The polyolefin microporous membrane according to (1) or (2), containing a polyethylene as a main component, wherein the polyethylene has a crystallite size of 28.0 nm or smaller.
(4) The polyolefin microporous membrane according to any one of (1) to (3), having a porosity of 35% or higher.
(5) A polyolefin microporous membrane, having:

a basis weight-converted puncture strength of 50 gf/(g/m$^2$) or more;
a difference of 15 sec/100 cm$^3$ or less between a maximum value and a minimum value of an air permeability measured at a total of three spots along the width direction (TD), which spots consist of two spots at 10% of a full width from the respective ends inward to the center and one central spot; and
a pressurized-state air permeability of 140 sec/100 cm$^3$ or less at 30°C in a pressurized state of 3 MPa.

(6) The polyolefin microporous membrane according to any one of (1) to (5), having a porosity of 40% or higher at 30°C in a pressurized state of 3 MPa.
(7) The polyolefin microporous membrane according to any one of (1) to (6), having a puncture strength of 220 gf or more.
(8) The polyolefin microporous membrane according to any one of (1) to (7), wherein the content of a polyethylene component having a weight-average molecular weight (Mw) of 1,000,000 or more as measured by GPC is not less than 7% with respect to all eluted components measured by GPC.
(9) The polyolefin microporous membrane according to any one of (1) to (8), having a melt flow index (MI) of 1.0 or less.
(10) The polyolefin microporous membrane according to any one of (1) to (9), having a TD heat shrinkage of 20% or less at 120°C.
(11) The polyolefin microporous membrane according to any one of (1) to (10), wherein a ratio (MD/TD tensile strength ratio) of a tensile strength in the longitudinal direction (MD) to a tensile strength in the width direction (TD) is 0.5 to 2.0.
(12) A separator, including:

the polyolefin microporous membrane according to any one of (1) to (11); and
an inorganic porous layer arranged on at least one surface of the polyolefin microporous membrane.

(13) A separator, including:

the polyolefin microporous membrane according to any one of (1) to (11); and
a thermoplastic resin layer arranged on at least one surface of the polyolefin microporous membrane.

(14) A separator, including:

the polyolefin microporous membrane according to any one of (1) to (11); and
at least one layer which is arranged on at least one surface of the polyolefin microporous membrane and selected from the group consisting of a multi-functional layer, an inorganic porous layer, and a thermoplastic resin layer.

(15) A nonaqueous secondary battery, including the polyolefin microporous membrane according to any one of (1) to (11), or the separator according to any one of (12) to (14).

[ADVANTAGEIOUS EFFECTS OF INVENTION]

In the present invention, by specifying the post-compression porosity and/or the crystallinity of a polyolefin microporous membrane, the resistance of the polyolefin microporous membrane is reduced after the pressing step in the production of a nonaqueous secondary battery that includes the polyolefin microporous membrane, and/or the structural homogeneity of the membrane and the reaction homogeneity in the nonaqueous secondary battery are improved, as a result of which the nonaqueous secondary battery can achieve a high output and excellent cycle characteristics. Further, in the present invention, by specifying the basis weight-converted puncture strength, the difference between a maximum value and a minimum value of the air permeability measured at three spots along the TD, and the air permeability measured at 30°C in a pressurized state of 3 MPa for the polyolefin microporous membrane, a nonaqueous secondary battery that includes the polyolefin microporous membrane is allowed to achieve both satisfactory battery characteristics and satisfactory safety.

Moreover, according to the present invention, even when an electrode that is likely to expand and contract is used in a cell of a nonaqueous secondary battery including the polyolefin microporous membrane, or when a separator is compressed during modularization of the nonaqueous secondary battery, a high porosity and a low air permeability, i.e., a high ion permeability, of the polyolefin microporous membrane can be maintained and an increase in the resistance can thus be inhibited, as a result of which battery characteristics and safety can be ensured.

BRIEF DESCRIPTION OF DRAWINGS

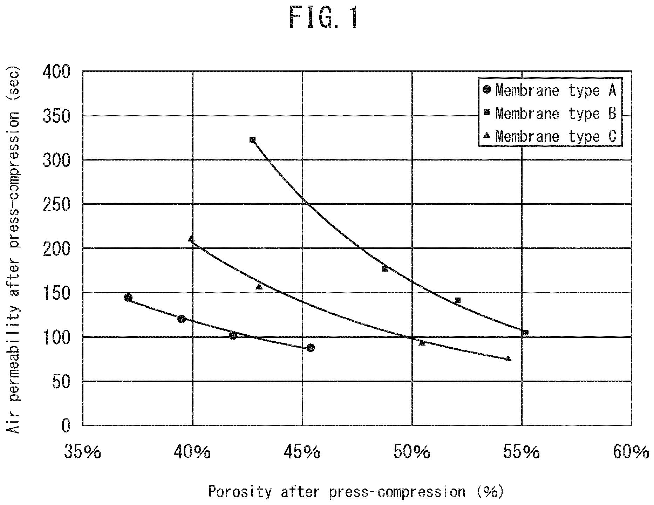

FIG. 1 is an example of power approximation curve relating to the post-compression porosity and the post-compression air permeability.

DESCRIPTION OF EMBODIMENTS

Modes for carrying out the present invention (hereinafter, each simply referred to as "embodiment") will now be described in detail. It is noted here, however, that the present invention is not limited to the below-described embodiments and can be carried out with various modifications within the scope of the gist of present invention.

Hereinafter, the term "longitudinal direction (MD)" means a machine direction in continuous molding of a microporous membrane, and the term "width direction (TD)" means a direction that crosses the MD of a microporous membrane at an angle of 90°.

In the present specification, upper limit values and lower limit values of each numerical range may be combined as desired. Further, when a certain member contains a specific component as a main component, it means that the content of the specific component is not less than 50% by weight, based on the weight of the member. Unless otherwise specified, all physical properties and numerical values described in the present specification are measured or calculated by the corresponding methods described below in the section of Examples.

<Polyolefin Microporous Membrane>

One mode of the present invention is a polyolefin microporous membrane. This polyolefin microporous membrane contains a polyolefin resin as a main component and is capable of exhibiting excellent electrical insulation and ion permeability; therefore, it can be used in, for example, a nonaqueous secondary battery, specifically as a separator for the nonaqueous secondary battery.

(Embodiment 1)

The polyolefin microporous membrane according to Embodiment 1 has the following characteristic features:

the membrane thickness is 1 $\mu$m to 30 $\mu$m;
the air permeability is 500 sec/100 cm$^3$ or less; and
the post-compression porosity, which is measured in a compression test conducted at a temperature of 70°C and a pressure of 8 MPa for a compression time of 3 minutes, is 30% or higher.

By having an air permeability of 500 sec/100 cm$^3$ or less and a post-compression porosity of 30% or higher in a thickness range of 1 $\mu$m to 30 $\mu$m, the polyolefin microporous membrane according to Embodiment 1 enables to reduce the electrical resistance of a polyolefin microporous membrane and inhibit an increase in the electrical resistance after the pressing step in, for example, the production of a nonaqueous secondary battery that includes the polyolefin microporous membrane as a separator, and to thereby achieve a high output and excellent cycle characteristics in the nonaqueous secondary battery. The inhibition of an increase in the resistance by the polyolefin microporous membrane according to Embodiment 1 is prominent when an electrode that is likely to expand and contract is used in a cell of the nonaqueous secondary battery, and it is more prominent when a high-capacity electrode or a silicon (Si)-containing negative electrode, which is used in vehicle-mounted batteries and the like, is used.

A method of conducting a compression test at a temperature of 70°C and a pressure of 8 MPa for a compression time of 3 minutes will be described below in detail in the section of Examples. The post-compression porosity is believed to be associated with the structure of a main component of the polyolefin microporous membrane that plays a role in reducing the resistance and/or inhibiting an increase in the resistance in a nonaqueous secondary battery. From this standpoint, the post-compression porosity of the polyolefin microporous membrane according to Embodiment 1 is preferably 31% or higher, more preferably 32% or higher, still more preferably 33% or higher. An upper limit value of the post-compression porosity of the polyolefin microporous membrane according to Embodiment 1 can be determined in accordance with the pre-compression porosity and may be, for example, 50% or lower, or lower than 50%.

The post-compression porosity of the polyolefin microporous membrane according to Embodiment 1 can be adjusted to be in the above-described numerical range by controlling, in the production process of the polyolefin microporous membrane, for example, the molecular weight of a polyolefin raw material, the molecular weight and the content ratio of a polyethylene raw material, the stretching ratio in the biaxial stretching step, the preheating coefficient in the biaxial stretching step, the stretching coefficient in the biaxial stretching step, the MD/TD stretching temperature in the biaxial stretching step, and the heat setting temperature. Alternatively, the post-compression porosity of the polyolefin microporous membrane can be adjusted to be in the above-described numerical range by controlling, for example, the molecular weight of a polyolefin raw material, the molecular weight and the content ratio of a polyethylene raw material, the stretching ratio in the biaxial stretching step, the preheating coefficient in the biaxial stretching step, the stretching coefficient in the biaxial stretching step, and the ratio of the preheating coefficient with respect to the stretching coefficient.

With regard to the polyolefin microporous membrane according to Embodiment 1, it is preferred to compare the porosity before and after a compression test from the standpoint of specifying the structure of the main component of the membrane that enables to achieve a high output and excellent cycle characteristics in a nonaqueous secondary battery through a reduction in the resistance and/or inhibition of an increase in the resistance. The porosity of the polyolefin microporous membrane prior to a compression test or the polyolefin microporous membrane which has not been subjected to the compression test (hereinafter simply referred to as "porosity") is measured by the method described in the section of Examples, and its preferred numerical range will be described below.

From the standpoint of achieving a size reduction in addition to the above-described reduction of the electrical resistance and inhibition of an increase in the resistance, the thickness of the polyolefin microporous membrane according to Embodiment 1 is preferably 3 to 20 $\mu$m, more preferably 5 $\mu$m to 16 $\mu$m, still more preferably 6 $\mu$m to 13 $\mu$m. The thickness of the microporous membrane can be optimized by adjusting the distance between casting rolls, the stretching ratio in the stretching step, and the like.

The air permeability of the polyolefin microporous membrane according to Embodiment 1 can be measured by the method described below for the item "(Pre-compression) Air Permeability Version 1 (sec/100 cm$^3$)" in the section of Examples. From the standpoint of the ion permeability of the microporous membrane and an increase in the output of a nonaqueous secondary battery in addition to the above-described reduction of the electrical resistance and inhibition of an increase in the resistance, the air permeability of the polyolefin microporous membrane according to Embodiment 1 is preferably 400 sec/100 cm$^3$ or less, more preferably 300 sec/100 cm$^3$ or less, still more preferably 200 sec/100 cm$^3$ or less, particularly preferably 160 sec/100 cm$^3$ or less and, from the standpoint of the mechanical strength of the microporous membrane, the air permeability is preferably 40 sec/100 cm$^3$ or more. The air permeability of the microporous membrane can be optimized in the same manner as the above-described means for controlling the post-compression porosity.

(Embodiment 2)

The polyolefin microporous membrane according to Embodiment 2 has the following characteristic features:

the polyolefin microporous membrane contains a polyethylene as a main component; and
the crystal long period of the polyolefin microporous membrane, which is determined by a small-angle X-ray scattering (SAXS) method, is 37.0 nm or longer.

By containing a polyethylene as a main component and having a crystal long period of 37.0 nm or longer, surprisingly, the polyolefin microporous membrane according to Embodiment 2 not only has an improved structural homogeneity and an improved compression resistance but also, in association with this, enables to improve the reaction homogeneity in a nonaqueous secondary battery and thereby achieve a high output and excellent cycle characteristics in the nonaqueous secondary battery even after the pressing step in, for example, the production of the nonaqueous secondary battery that includes the polyolefin microporous membrane as a separator. The improvements in the structural homogeneity and the compression resistance of the polyolefin microporous membrane according to Embodiment 2 are prominent when an electrode that is likely to expand and contract is used in a cell of the nonaqueous secondary battery, and it is more prominent when a high-capacity electrode or a silicon (Si)-containing negative electrode, which is used in vehicle-mounted batteries and the like, is used.

The SAXS measurement of the polyolefin microporous membrane is described below in detail in the section of Examples, and the crystal long period determined by the SAXS measurement is believed to be associated with the structure of a polyethylene that improves the structural homogeneity and the compression resistance of the membrane and the reaction homogeneity in a nonaqueous secondary battery. In addition, while not wishing to be bound by any theory, the crystal long period of the polyolefin microporous membrane is believed to correlated with the post-compression porosity of the membrane. From these standpoints, the crystal long period of the polyolefin microporous membrane according to Embodiment 2 is preferably in a range of 37.0 nm to 60.0 nm, 38.0 nm to 55.0 nm, 40.0 nm to 50.0 nm, or 42.0 nm to 50.0 nm.

The crystal long period of the polyolefin microporous membrane according to Embodiment 2 can be adjusted to be in the above-described numerical range by controlling, in the production process of the polyolefin microporous membrane, for example, the molecular weight of a polyolefin raw material, the molecular weight and the content ratio of a polyethylene raw material, the stretching ratio in the biaxial stretching step, the preheating coefficient in the biaxial stretching step, the stretching coefficient in the biaxial stretching step, the MD/TD stretching temperature in the biaxial stretching step, and the heat setting temperature.

For the purpose of providing a mechanical strength and maintaining insulation, a lower limit value of the thickness of the polyolefin microporous membrane according to Embodiment 2 is 1 μm or greater. In order to improve the safety of a battery by ensuring a certain resin amount per unit area, the thickness of the membrane is preferably 2 μm or greater, more preferably 3 μm or greater. In order to ensure insulation even with the growth of lithium dendrites, the thickness of the membrane is preferably 6 μm or greater, more preferably 10 μm or greater. From the standpoint of increasing the capacity of a nonaqueous secondary battery, the thickness of the polyolefin microporous membrane according to Embodiment 2 is preferably 16 μm or less. The thickness of the microporous membrane can be adjusted by, for example, controlling the distance between casting rolls, the stretching ratio in the stretching step, and the like.

The (pre-compression) air permeability of the polyolefin microporous membrane according to Embodiment 2 can be measured in the same manner as in Embodiment 1, and it is preferably 30 sec/100 cm$^3$ to 250 sec/100 cm$^3$, more preferably 40 sec/100 cm$^3$ to 200 sec/100 cm$^3$, still more preferably 50 sec/100 cm$^3$ to 180 sec/100 cm$^3$, yet still more preferably 60 sec/100 cm$^3$ to 150 sec/100 cm$^3$. From the standpoint of ensuring a certain puncture strength, the (pre-compression) air permeability of the microporous membrane is 40 sec/100 cm$^3$ or more and, from the standpoint of output characteristics, it is preferably 200 sec/100 cm$^3$ or less.

(Embodiment 3)

The polyolefin microporous membrane according to Embodiment 3 has the following characteristic features:

the basis weight-converted puncture strength is 50 gf/(g/m$^2$) or more;
the difference between a maximum value and a minimum value of the air permeability measured at a total of three spots along the TD, which spots consist of two spots at 10% of a full width from the respective ends inward to the center and one central spot (this difference is hereinafter also referred to as "difference R"), is 15 sec/100 cm$^3$ or less; and
the air permeability at 30°C in a pressurized state of 3 MPa is 140 sec/100 cm$^3$ or less.

By specifying the difference between a maximum value and a minimum value of the air permeability measured at a total of three spots along the TD, which spots consist of two spots at 10% of a full width from the respective ends inward to the center and one central spot, as well as the basis weight-converted puncture strength and the air permeability at 30°C in a pressurized state of 3 MPa as described above, the polyolefin microporous membrane according to Embodiment 3 can, with regard to a nonaqueous secondary battery including a polyolefin microporous membrane as a separator or the like, not only allow the battery to achieve both satisfactory battery characteristics, such as rate characteristics and cycle characteristics, and satisfactory safety in a nail penetration test and the like, but also allow the polyolefin microporous membrane to have an improved porosity and an improved ion permeability and to maintain a high porosity and a low air permeability even when, for example, an electrode that is likely to expand and contract is used in the nonaqueous secondary battery or the separator is compressed during modularization of the nonaqueous secondary battery.

(Basis Weight-Converted Puncture Strength, Puncture Strength, and Basis Weight of Polyolefin Microporous Membrane)

A basis weight-converted puncture strength of 50 gf/(g/m$^2$) or more represents a membrane structure which has a high membrane strength per resin basis weight and is unlikely to collapse against a compressive stress. Such a basis weight-converted puncture strength tends to improve the safety of a battery since it makes the polyolefin microporous membrane used as a separator less likely to be broken during, for example, a nail penetration test or a pressurization test even when the polyolefin microporous membrane has a high porosity and a low air permeability. The basis weight-converted puncture strength is determined in accordance with the method described below in the section of Examples by measuring the puncture strength not converted in terms of basis weight (hereinafter, simply referred to as "puncture strength") at a total of three spots along the TD of the membrane, which spots consist of two spots at 10% of a full width from the respective ends inward to the center and one central spot, and dividing the average of the thus measured values by the basis weight. The advantages obtained by the control of the puncture strength according to Embodiment 3 are prominent when an electrode that is likely to expand and contract is used in a cell of a nonaqueous secondary battery, and they are more prominent when a high-capacity electrode or a silicon (Si)-containing negative electrode, which is used in vehicle-mounted batteries and the like, is used. From this standpoint, the basis weight-converted puncture strength of the polyolefin microporous membrane is preferably 50 gf/(g/m$^2$) to 150 gf/(g/m$^2$), more preferably 55 gf/(g/m$^2$) to 130 gf/(g/m$^2$), still more preferably 70 gf/(g/m$^2$) to 120 gf/(g/m$^2$).

From the same standpoint as described above and the standpoint of achieving a certain membrane strength and a low air permeability, as well as the standpoint of improving the short circuit resistance of the polyolefin microporous membrane and a nonaqueous secondary battery, the basis weight of the polyolefin microporous membrane is preferably in a range of 1.0 g/m$^2$ to 15 g/m$^2$.

From the same standpoint as described above and the standpoint of inhibiting an interelectrode short circuit or poor voltage resistance that is caused by breakage of a separator due to a foreign matter unintentionally incorporated into a battery, the puncture strength of the polyolefin microporous membrane is preferably not less than 220 gf, more preferably not less than 250 gf, still more preferably not less than 280 gf, particularly preferably not less than 300 gf. An upper limit value of the puncture strength is not particularly limited and can be determined in accordance with the crystallinity of the membrane and the reduced electrical resistance, and it may be, for example, 700 gf or less, or 680 gf or less.

The puncture strength and the basis weight-converted puncture strength of the polyolefin microporous membrane according to Embodiment 3 can be adjusted to be in the above-described respective numerical ranges by controlling, in the production process of the polyolefin microporous membrane, for example, the molecular weight and the blending ratio of a polymer material such as polyolefin, the stretching ratio in the biaxial stretching step, the MD/TD stretching temperature in the biaxial stretching step, the heating coefficient per unit resin of a resin composition in the biaxial stretching step, and the heat setting (HS) ratio.

(Difference R between Maximum Value and Minimum Value of Pre-Compression Air Permeability Measured at Three Spots along TD, and Pre-Compression Air Permeability Distribution)

The difference R between a maximum value and a minimum value of the air permeability measured at three spots along the TD of the polyolefin microporous membrane as described above is determined by the method described below in the section of Examples, and represents the air permeability distribution of the polyolefin microporous membrane prior to a compression test. From the standpoint of the accuracy of the air permeability measurement, the full width W of the polyolefin microporous membrane is preferably not less than 50 mm, more preferably not less than 100 mm, still more preferably not less than 300 mm. An upper limit value of the full width W is not particularly limited, and can be determined in accordance with, for example, membrane-forming device, membrane-forming process, mother roll dimensions, slit roll dimensions, and coating process. The upper limit value of the full width W may be, for example, 5,000 mm or less, or 4,000 mm or less.

An air permeability distribution that is favorably maintained to satisfy R $\leq$ 15 sec/100 cm$^3$, together with the below-described air permeability at 30°C in a pressurized state of 3 MPa, represent a membrane structure having a small variation in the air permeability within a plane, and tend to improve the battery characteristics such as rate characteristics and cycle characteristics in, for example, a nonaqueous secondary battery including the polyolefin microporous membrane as a separator or the like by allowing electrochemical reactions to proceed uniformly in the plane. This tendency is prominent when an electrode that is likely to expand and contract is used in a cell of the nonaqueous secondary battery, and it is more prominent when a high-capacity electrode or a silicon (Si)-containing negative electrode, which is used in vehicle-mounted batteries and the like, is used. From this standpoint, the difference R is preferably 0 sec/100 cm$^3$ to 15 sec/100 cm$^3$, more preferably 0 sec/100 cm$^3$ to 13 sec/100 cm$^3$, still more preferably 0 sec/100 cm$^3$ to 11 sec/100 cm$^3$, particularly preferably 0 sec/100 cm$^3$ to 9 sec/100 cm$^3$.

An average of the measured values obtained at the above-described three spots is indicated as (pre-compression) air permeability, and can be determined by the method described below for the item "(Pre-compression) Air Permeability Version 2 (sec/100 cm$^3$)" in the section of Examples. From the same standpoint as described above, as well as the standpoint of maintaining a high (ion) permeability even in a compressed state and the standpoint of ensuring a certain puncture strength, the (pre-compression) air permeability is preferably 0 sec/100 cm$^3$ to 200 sec/100 cm$^3$, more preferably 30 sec/100 cm$^3$ to 180 sec/100 cm$^3$, still more preferably 40 sec/100 cm$^3$ to 150 sec/100 cm$^3$.

The difference R and the (pre-compression) air permeability of the polyolefin microporous membrane according to Embodiment 3 can be adjusted to be in the above-described respective numerical ranges by controlling, in the production process of the polyolefin microporous membrane, for example, the molecular weight and the blending ratio of a polymer material such as polyolefin, the stretching ratio in the biaxial stretching step, the MD/TD stretching temperature in the biaxial stretching step, the heating coefficient per unit resin of a resin composition in the biaxial stretching step, and the HS ratio.

(Post-Compression Membrane Properties)

In Embodiment 3, the properties of the polyolefin microporous membrane with which a nonaqueous secondary battery can achieve both satisfactory battery characteristics and satisfactory safety are determined by conducting a compression test of the polyolefin microporous membrane under specific conditions. The compression test, which will be described below in detail in the section of Examples, is generally performed at room temperature, preferably at 30°C, by combining a compression-press test and a compression TMA test in the following manner.

<Compression-Press Test>

(i) A microporous membrane or a separator is pressurized and compressed in the thickness direction using a flat press machine, and the pressure is subsequently unloaded, after which the change in the porosity is determined from the changes in the air permeability and the thickness of the microporous membrane or the separator before and after the test.
(ii) In addition, the microporous membrane or the separator is measured under four different pressure conditions (e.g., at pressures of 2.5 MPa, 5 MPa, 7.5 MPa, and 10 MPa) by the method described below in the section of Examples, and a relational equation of the porosity and the air permeability of the microporous membrane or the separator after the unloading is obtained from the results of the four measurements.

<Compression TMA Test>

Using a probe, the microporous membrane or the separator is compressed in the thickness direction with a specific load, and the thickness is measured in a pressurized state of 3 MPa (*in situ*).
When the air permeability of the polyolefin microporous membrane at 30°C in a pressurized state of 3 MPa (hereinafter, referred to as "air permeability$_{30°C,3MPa}$ in a pressurized state") is 140 sec/100 cm$^3$ or less, the polyolefin microporous membrane exhibits a property that can ensure a high ion permeability even in a state of being pressurized in the thickness direction. The air permeability$_{30°C,3MPa}$ in a pressurized state can be determined by, in the above-described compression TMA test, calculating the porosity in the very state where a load of 3 MPa is being applied *(in situ)* from the thickness measured in the very state where a load of 3 MPa is being applied *(in situ)* and the basis weight measured prior to the TMA measurement, and then calculating the air permeability in terms of seconds at the *in situ* porosity using the relational equation obtained in the above-described compression-press test (ii). A method of measuring the air permeability$_{30°C,3MPa}$ in a pressurized state will be described below in detail in the section of Examples.
An air permeability$_{30°C,3MPa}$ in a pressurized state of 140 sec/100 cm$^3$ or less, together with the above-described pre-compression air permeability distribution or difference R, tend to improve the battery characteristics such as rate characteristics and cycle characteristics in, for example, a nonaqueous secondary battery including the polyolefin microporous membrane as a separator or the like. This tendency is prominent for improvement of the rate characteristics when an electrode that is likely to expand and contract is used in a cell of the nonaqueous secondary battery or the separator is compressed by a pressure applied from outside of the cell, and it is more prominent when a high-capacity electrode or a silicon (Si)-containing negative electrode, which is used in vehicle-mounted batteries and the like, is used. From this standpoint, the air permeability$_{30°C,3MPa}$ in a pressurized state is preferably 120 sec/100 cm$^3$ or less, more preferably 100 sec/100 cm$^3$ or less, still more preferably 80 sec/100 cm$^3$ or less. A lower limit value of the air permeability$_{30°C,3MPa}$ in a pressurized state is not particularly limited and can be determined in accordance with the mechanical strength or the puncture strength of the microporous membrane, and it may be, for example, not less than 0 sec/100 cm$^3$, not less than 20 sec/100 cm$^3$, or not less than 40 sec/100 cm$^3$.
From the same standpoint as described above and the standpoint of improving the cycle characteristics of the battery by achieving a high porosity in a state where an electrode is expanded or contracted or the separator is compressed in the cell, the porosity of the polyolefin microporous membrane at 30°C in a pressurized state of 3 MPa (hereinafter, also referred to as "porosity$_{30°C,3MPa}$ in a pressurized state") is preferably 40% or higher, more preferably 40% to 60%, still more preferably 43% to 60%, particularly preferably 49% to 60%. The porosity$_{30°C,3MPa}$ in a pressurized state can be calculated from the thickness measured in the very state where a load of 3 MPa is being applied *(in situ)* and the basis weight measured prior to the TMA measurement in the above-described compression TMA test. A method of measuring the porosity30°C,3MPa in a pressurized state will be described below in detail in the section of Examples.

The air permeability30°C,3MPa in a pressurized state and the porosity30°C,3MPa in a pressurized state of the polyolefin microporous membrane according to Embodiment 3 can be adjusted to be in the above-described respective numerical ranges by controlling, in the production process of the polyolefin microporous membrane, for example, the molecular weight and the blending ratio of a polymer material such as polyolefin, the stretching ratio in the biaxial stretching step, the MD/TD stretching temperature in the biaxial stretching step, the heating coefficient per unit resin of a resin composition in the biaxial stretching step, the HS ratio, and the HS temperature.

(Embodiment 4)

In Embodiment 4, a polyolefin microporous membrane having a combination of the constitutions according to Embodiments 1 to 3 is provided.

The polyolefin microporous membrane according to Embodiment 4 contains a polyethylene as a main component, and has a membrane thickness of 1 $\mu$m to 30 $\mu$m. In this polyolefin microporous membrane, the (pre-compression) air permeability is 500 sec/100 cm$^3$ or less; the difference R between a maximum value and a minimum value of the (pre-compression) air permeability measured at a total of three spots along the TD, which spots consist of two spots at 10% of a full width from the respective ends inward to the center and one central spot, is 15 sec/100 cm$^3$ or less; the basis weight-converted puncture strength is 50 gf/(g/m$^2$) or more; the crystal long period measured by an SAXS method is 37.0 nm or longer; the air permeability at 30°C in a pressurized state of 3 MPa is 140 sec/100 cm$^3$ or less; and the post-compression porosity, which is measured in a compression test conducted at a temperature of 70°C and a pressure of 8 MPa for a compression time of 3 minutes, is 30% or higher.

Common constituents, preferred constituents, and other constituents in Embodiments 1 to 4 will now be described below.

(Constituents)

Examples of the polyolefin microporous membrane include: porous membranes containing a polyolefin resin; porous membranes containing a resin such as polyethylene terephthalate, polycycloolefin, polyether sulfone, polyamide, polyimide, polyimide amide, polyaramid, polycycloolefin, nylon, or polytetrafluoroethylene, in addition to a polyolefin resin; membranes obtained by weaving polyolefin fibers (woven fabrics); and nonwoven fabrics of polyolefin fibers. Thereamong, from the standpoint of, for example, inhibition of a decrease or increase in the electrical resistance of the membrane as well as the compression resistance and the structural homogeneity of the membrane, a microporous membrane containing a polyolefin resin (hereinafter, referred to as "polyolefin resin porous membrane") is preferred, and a microporous membrane containing a polyethylene as a main component is more preferred.

The polyolefin resin porous membrane will now be described. From the standpoint of improving the shutdown performance and the like in the formation of a polyolefin microporous membrane for a nonaqueous secondary battery, the polyolefin resin porous membrane is preferably a porous membrane formed of a polyolefin resin composition in which a polyolefin resin accounts for 50% by weight to 100% by weight of resin components constituting the porous membrane. The ratio of the polyolefin resin in the polyolefin resin composition is more preferably 60% by weight to 100% by weight, still more preferably 70% by weight to 100% by weight, most preferably 95% by weight to 100% by weight.

The polyolefin resin contained in the polyolefin resin composition is not particularly limited, and examples thereof include homopolymers, copolymers, and multistage polymers that are obtained using ethylene, propylene, 1-butene, 4-methyl-1-pentene, 1-hexene, 1-octene, or the like as a monomer. These polyolefin resins may be used singly, or in combination of two or more thereof.

Particularly, from the standpoint of, for example, inhibition of a decrease or increase in the electrical resistance of the membrane as well as the compression resistance and the structural homogeneity of the membrane, the polyolefin resin is preferably a polyethylene, a polypropylene, an ethylene-propylene copolymer, a copolymer of ethylene, propylene, and other monomer, or a mixture thereof.

Specific examples of the polyethylene include low-density polyethylenes, linear low-density polyethylenes, medium-density polyethylenes, high-density polyethylenes, and ultrahigh-molecular-weight polyethylenes, and specific examples of the polypropylene include isotactic polypropylenes, syndiotactic polypropylenes, and atactic polypropylene. Specific examples of the copolymer include ethylene-propylene random copolymers and ethylene-propylene rubbers.

From the standpoint of crystallinity, high strength, compression resistance, and the like in the formation of a polyolefin microporous membrane for a nonaqueous secondary battery, the polyolefin resin porous membrane is preferably a porous membrane formed of a polyethylene composition in which a polyethylene accounts for 50% by weight to 100% by weight of resin components constituting the microporous membrane. The ratio of the polyethylene in the resin composition constituting the porous membrane is more preferably 60% by weight to 100% by weight, still more preferably 70% by weight to 100% by weight, most preferably 90% by weight to 100% by weight.

As for the polyethylene contained as a main component in the polyolefin resin porous membrane, its crystal preferably has an MDND (110) plane crystallite size of 28 nm or smaller. The MDND (110) plane crystallite size of the polyethylene can be measured by an X-ray diffraction (XRD) method or a wide-angle X-ray scattering (WAXS) method as described below in detail in the section of Examples.

When the MDND (110) plane crystallite size of the polyethylene is 28.0 nm or smaller, the polyolefin microporous membrane containing the polyethylene is made rigid and the compression resistance of the membrane tends to be improved, whereby a high output and excellent cycle characteristics can both be achieved even after the pressing step in the production of a nonaqueous secondary battery. From this standpoint, the MDND (110) plane crystallite size of the polyethylene contained as a main component in the membrane is more preferably 27.0 nm or smaller, still more preferably 10.0 nm to 27.0 nm, 15.0 nm to 26.0 nm, 15.0 nm to 25.0 nm, or 15.0 nm to 22.0 nm. Particularly, the MDND (110) plane crystallite size of the polyethylene is 22.0 nm or smaller, the rigidity of the membrane is enhanced, and the compression resistance is thus improved.

The MDND (110) plane crystallite size of the polyethylene contained as a main component in the polyolefin microporous membrane can be adjusted to be in the above-described numerical range by controlling, in the production process of the polyolefin microporous membrane, for example, the molecular weight of a polyolefin raw material, the molecular weight of a polyethylene raw material, the stretching ratio in the biaxial stretching step, the preheating coefficient in the biaxial stretching step, and the stretching coefficient in the biaxial stretching step.

Further, from the standpoint of making the membrane rigid and thereby improving the compression resistance, the polyolefin resin contained in the polyolefin resin porous membrane has a melting point in a range of preferably 120°C to 150°C, more preferably 125°C to 140°C, and/or a DSC first peak temperature in a range of preferably 136°C to 144°C.

From the standpoint of crystallinity, high strength, compression resistance, reduction of electrical resistance, and the like in the formation of a polyolefin microporous membrane as a separator for a nonaqueous secondary battery, the ratio of the polyethylene in the polyolefin resin is preferably not less than 30% by weight, more preferably not less than 50% by weight, still more preferably not less than 70% by weight, particularly preferably not less than 80% by weight, but preferably 100% by weight or less, more preferably 97% by weight or less, still more preferably 95% by weight or less. The ratio of the polyethylene (PE) in the polyolefin resin is preferably 100% by weight from the standpoint of exertion of strength. The ratio of the PE in the polyolefin resin is also preferably 50% or higher from the standpoint of allowing the fuse behavior to be expressed with high responsiveness.

In the polyolefin resin composition, additives may be incorporated as desired. Examples of the additives include: polymers other than the polyolefin resin; inorganic fillers; phenolic, phosphorus-based, or sulfur-based antioxidants; metallic soaps, such as calcium stearate and zinc stearate; ultraviolet absorbers; light stabilizers; antistatic agents; antifogging agents; and color pigments. From the standpoint of improving the shutdown performance and the like, a total amount of these additives to be added is preferably 20% by weight or less, more preferably 10% by weight or less, still more preferably 5% by weight or less, with respect to 100% by weight of the polyolefin resin.

When the microporous membrane is a polyolefin resin porous membrane, the polyolefin resin used as a raw material has a viscosity-average molecular weight (Mv) of preferably 30,000 to 6,000,000, more preferably 80,000 to 3,000,000, still more preferably 150,000 to 2,000,000. When the viscosity-average molecular weight is 30,000 or more, the strength tends to be increased due to entanglement of polymers, which is preferred. Meanwhile, a viscosity-average molecular weight of 6,000,000 or less is preferred from the standpoint of improving the moldability in the extrusion and stretching steps.

When the polyolefin resin porous membrane contains polyethylenes as main components, from the standpoint of the orientation and the rigidity of the membrane, the Mv of at least one polyethylene is preferably not less than 600,000, more preferably not less than 700,000, and an Mv upper limit value of the polyethylene may be, for example, 2,000,000 or less. From the same standpoint, the ratio of a polyethylene having an Mv of 700,000 or more in the polyolefin resin constituting the polyolefin resin porous membrane is preferably not less than 50% by weight, more preferably not less than 60% by weight, still more preferably not less than 70% by weight, and it may be 100% by weight. From the standpoint of reduction in fluidity during melting of the membrane and short circuit resistance in a nail penetration test, the ratio of a polyethylene having an Mv of 600,000 or more in the polyolefin resin constituting the polyolefin resin porous membrane is preferably not less than 30% by weight, more preferably not less than 50% by weight, still more preferably not less than 60% by weight, particularly preferably not less than 70% by weight, and it may be 100% by weight.

The type, the molecular weight, and the composition of the polyolefin resin constituting the polyolefin resin porous membrane can be adjusted as described above by controlling, for example, the type, the molecular weight, the blending ratio, and the like of a polymer material such as polyolefin in the production process of the polyolefin microporous membrane. Further, a multilayer polyolefin resin microporous membrane having a structure in which polyolefin resin microporous membranes of the same kind or different kinds are laminated in two or more layers is also adjusted in the above-described manner.

(Details of Microporous Membrane)

The polyolefin microporous membrane has a porous structure in which a large number of extremely small pores together form dense communicating pores and, therefore, is characterized by having a very excellent ion permeability and a high strength at the same time in a state of containing an electrolyte solution.

From the standpoint of obtaining a high ion permeability and favorable rate characteristics as well as the standpoint of reducing the volume occupied by a separator and thereby contributing to an improvement in the battery capacity in the use of the polyolefin microporous membrane for a high-capacity battery, the (pre-compression) average thickness of the polyolefin microporous membrane is preferably 1 $\mu$m to 14 $\mu$m, more preferably 3 $\mu$m to 13 $\mu$m, still more preferably 5 $\mu$m to 12 $\mu$m. The average thickness of the polyolefin microporous membrane can be adjusted to be in this numerical range by controlling the distance between casting rolls, the casting clearance, the stretching ratio in the biaxial stretching step, the HS ratio, the HS temperature, and the like.

For example, from the standpoint of reducing the membrane electrical resistance after the pressing step in the production of a nonaqueous secondary battery that includes the microporous membrane as a separator and thereby obtaining both a high output and excellent cycle characteristics in the resulting battery, as well as the standpoint of achieving a certain membrane strength and a low air permeability, the (pre-compression) porosity of the microporous membrane is preferably 20% or higher, more preferably 35% or higher, still more preferably 38% or higher, yet still more preferably 40% or higher, particularly preferably 45% or higher. Further, from the standpoint of battery safety as well as the standpoint of achieving both a certain membrane strength and a low air permeability, the (pre-compression) porosity of the microporous membrane is preferably 70% or lower, more preferably 65% or lower, still more preferably 60% or lower. The porosity of the microporous membrane can be adjusted by controlling, for example, the mixing ratio of the polyolefin resin composition and a plasticizer, the stretching temperature, the stretching ratio, the heat setting temperature, the stretching ratio during heat setting, or the relaxation ratio during heat setting, or a combination thereof.

From the standpoint of achieving a high ion permeability, an excellent withstand voltage, and a high strength, the pore size of the microporous membrane is preferably 30 nm to 70 nm, more preferably 35 nm to 60 nm, when measured by a half-dry method. The pore size of the microporous membrane can be adjusted by controlling, for example, the stretching temperature, the stretching ratio, the heat setting temperature, the stretching ratio during heat setting, or the relaxation ratio during heat setting, or a combination thereof.

From the standpoint of reducing the fluidity during melting of the membrane to inhibit an interelectrode short circuit by fluidization of a separator in a heat-generating state during a nail penetration test, the melt flow index (MI) of the polyolefin microporous membrane is preferably 1.0 or less, more preferably 0.001 to 1.0, still more preferably 0.005 to 0.8, particularly preferably 0.01 to 0.4. The MI of the polyolefin microporous membrane can be adjusted to be in this numerical range by, for example, controlling the molecular weight and the blending ratio of a polymer material such as polyolefin.

As for the molecular weight distribution of the polyolefin microporous membrane that is measured by GPC, from the standpoint of reduction in fluidity during melting of the membrane and short circuit resistance in a nail penetration test, the content of a polyethylene component having an Mw of 1,000,000 or more is preferably not less than 7%, more preferably not less than 9%, still more preferably not less than 12%, particularly preferably not less than 15%, with respect to all eluted components. Further, from the standpoint of inhibiting an excessive stress at the time of contraction of the membrane in a high-temperature environment, the content of a polyethylene component having an Mw of 1,000,000 or more is preferably 57% or less, more preferably 42% or less, still more preferably 33% or less, particularly preferably 27% or less, with respect to all eluted components. The molecular weight distribution of the polyolefin microporous membrane can be adjusted to be in the above-described numerical range by, for example, controlling the type, the molecular weight, and the blending ratio of a polyolefin raw material.

The puncture strength not converted in terms of basis weight (hereinafter, simply referred to as "puncture strength") of the microporous membrane is preferably 250 gf to 700 gf. The puncture strength is preferably 250 gf or more from the standpoint of battery safety, but preferably 700 gf or less from the standpoint of the post-compression porosity and the crystallinity of the polyolefin microporous membrane as well as reduction of the electrical resistance. The puncture strength is more preferably 300 gf to 690 gf, still more preferably 310 gf to 680 gf.

The basis weight of the polyolefin microporous membrane is preferably 3.0 $g/m^2$ or more from the standpoint of inhibiting a thermal runaway of a nonaqueous secondary battery, but preferably 10 $g/m^2$ or less from the standpoint of increasing the battery capacity. The basis weight of the polyolefin microporous membrane is more preferably 3.0 $g/m^2$ to 7.0 $g/m^2$, still more preferably 3.0 $g/m^2$ to 6.0 $g/m^2$. By improving the compression resistance, battery safety can be ensured even at a lower basis weight.

From the standpoint of the safety of a nonaqueous secondary battery that includes the microporous membrane, the withstand voltage of the microporous membrane per basis weight is preferably not less than 0.13 $kV/(g/m^2)$.

As for the tensile strength at break of the polyolefin microporous membrane in both of the MD and the TD, from the standpoint of ensuring a membrane strength required for winding and laminating electrodes and a separator in the production process of a nonaqueous secondary battery, an upper limit value of the tensile strength at break is preferably 5,000 kgf/cm$^2$ or less, more preferably 4,500 kgf/cm$^2$ or less, still more preferably 4,000 kgf/cm$^2$ or less, yet still more preferably 3,500 kgf/cm$^2$ or less, particularly preferably 3,000 kgf/cm$^2$ or less, while a lower limit value of the tensile strength at break is 500 kgf/cm$^2$ or more, more preferably 700 kgf/cm$^2$ or more, still more preferably 1,000 kgf/cm$^2$ or more, 1,500 kgf/cm$^2$ or more, 2,000 kgf/cm$^2$ or more, or 2,500 kgf/cm$^2$ or more,. Further, from the standpoint of inhibiting heat shrinkage of the polyolefin microporous membrane, an upper limit value of the tensile strength at break of the polyolefin microporous membrane is preferably less than 5,000 kgf/cm$^2$ in both of the MD and the TD.

The closer the values of the tensile strength at break of the polyolefin microporous membrane between the MD and the TD, the further is the short circuit area minimized by uniform breakage of the membrane during a nail penetration test of a nonaqueous secondary battery, as a result of which the safety in the nail penetration test is improved. Further, the closer the values of the tensile strength of the polyolefin microporous membrane between the MD and the TD, the less likely is the membrane to be broken in a low-strength direction due to contamination with a foreign matter or upon receiving an impact from the outside, so that not only the safety is improved and the structure is made isotropic, but also the cycle characteristics of the battery are improved. From these standpoints, the ratio of the tensile strength at break in the MD and that in the TD of the polyolefin microporous membrane (MD/TD ratio of tensile strength at break) is preferably 0.5 to 2.0, more preferably 0.7 to 1.5, still more preferably 0.7 to 1.4 or 0.7 to 1.3, yet still more preferably in a range of 0.75 to 1.25 or 0.8 to 1.3, extremely preferably in a range of 0.8 to 1.2. The MD/TD ratio of tensile strength at break of the polyolefin microporous membrane can be adjusted to be in this numerical range by, for example, controlling the stretching ratio in the biaxial stretching step, the HS ratio, and the like.

When the tensile elongation at break of the polyolefin microporous membrane is controlled in an appropriate numerical range for both of the MD and the TD, the short circuit area is minimized by moderate elongation and breakage of the membrane during a nail penetration test of a nonaqueous secondary battery, as a result of which the safety in the nail penetration test is improved. When the tensile elongation at break is overly high, since the nail-penetrated portion is elongated excessively, the periphery of the membrane other than the nail-penetrated and broken portion is pulled and reduced in thickness, which leads to a short circuit over a large area. From these standpoints, the tensile elongation at break of the polyolefin microporous membrane is preferably 20% to 200%, more preferably 30% to 150%, still more preferably 40% to 120%, particularly preferably 50% to 110%, in both of the MD and the TD. The tensile elongation at break of the polyolefin microporous membrane in the MD and/or the TD can be adjusted to be in this numerical range by, for example, controlling the stretching ratio in the biaxial stretching step, the HS ratio, and the like.

The closer the values of the tensile elongation at break of the polyolefin microporous membrane between the MD and the TD, the further is the short circuit area minimized by moderate elongation and breakage of the membrane during a nail penetration test of a nonaqueous secondary battery, as a result of which the safety in the nail penetration test is improved. From this standpoint, the ratio of the tensile elongation at break in the MD and that in the TD of the polyolefin microporous membrane (MD/TD ratio of tensile elongation at break) is preferably 0.3 to 2.0, more preferably 0.35 to 1.5, still more preferably 0.4 to 1.3, particularly preferably 0.5 to 1.2. The MD/TD ratio of tensile elongation at break of the polyolefin microporous membrane can be adjusted to be in this numerical range by, for example, controlling the stretching ratio in the biaxial stretching step, the HS ratio, and the like.

From a standpoint of, in a nail penetration test where a nail is penetrated into a nonaqueous secondary battery and through a separator and electrodes to cause deformation, improving the safety by making the separator unlikely to be broken and preventing the nail from accomplishing a short circuit, the tensile elastic modulus of the polyolefin microporous membrane is preferably 1,000 kg/cm$^2$ to 10,000 kg/cm$^2$, more preferably 2,000 kg/cm$^2$ to 90,000 kg/cm$^2$, in both of the MD and the TD.

The closer the values of the tensile elastic modulus of the polyolefin microporous membrane between the MD and the TD, the further is the short circuit area minimized by uniform breakage of the membrane during a nail penetration test of a nonaqueous secondary battery, as a result of which the safety in the nail penetration test is improved. From this standpoint, the ratio of the tensile elastic modulus in the MD and that in the TD of the polyolefin microporous membrane (MD/TD ratio of tensile elastic modulus) is preferably 0.3 to 3.0, more preferably 0.35 to 2.0, still more preferably 0.4 to 1.5, particularly preferably 0.5 to 1.3. The MD/TD ratio of tensile elastic modulus of the polyolefin microporous membrane can be adjusted to be in this numerical range by, for example, controlling the stretching ratio in the biaxial stretching step, the HS ratio, and the like.

As for the heat shrinkage of the polyolefin microporous membrane, from the standpoint of obtaining a high shape stability of the membrane at a relatively high temperature and inhibiting a short circuit in a thermal runaway state of a nonaqueous secondary battery in a nail penetration test or the like, the heat shrinkage measured at 120°C in the MD is preferably -10% to 20%, more preferably -5% to 15%, still more preferably 0% to 10%. The heat shrinkage of the polyolefin microporous membrane measured at 120°C in the TD is preferably -10% to 20%, more preferably -5% to 18%, still more preferably 0% to 15%, particularly preferably 0% to 10%.

The shutdown (fuse) temperature of the microporous membrane is preferably 150°C or lower, more preferably 149°C or lower. A shutdown temperature of 150°C or lower means that, when an abnormal reaction of some kind occurs and causes the temperature inside a battery to increase, pores of a separator are blocked before the temperature reaches 150°C. Accordingly, the lower the shutdown temperature, the more quickly does the flow of lithium ions between electrodes come to stop at a low temperature, so that the safety is improved. Meanwhile, from the standpoint of preventing deterioration of the battery performance even when the battery is exposed to a high temperature that exceeds 100°C, the fuse temperature of the microporous membrane is preferably 130°C or higher, more preferably 135°C or higher, still more preferably 138°C or higher, particularly preferably 139°C or higher.

As for the surface smoothness of the polyolefin microporous membrane, from the standpoint of the cycle characteristics and the rate characteristics in a pressurized state, the average value of the smoothness of one surface of the polyolefin microporous membrane and that of the other surface is preferably 20,000 sec/10 cm$^3$ to 200,000 sec/10 cm$^3$, more preferably 30,000 sec/10 cm$^3$ to 180,000 sec/10 cm$^3$, still more preferably 40,000 sec/10 cm$^3$ to 160,000 sec/10 cm$^3$, particularly preferably 50,000 sec/10 cm$^3$ to 140,000 sec/10 cm$^3$. When the surface smoothness is lower than 20,000 sec/10 cm$^3$, since the battery reactions do not occur uniformly due to non-uniform physical distance between the polyolefin microporous membrane and electrode materials, the cycle characteristics may be deteriorated. Meanwhile, when the surface smoothness is higher than 200,000 sec/10 cm$^3$, the distance between the polyolefin microporous membrane and electrode materials is small, and this makes the gaps formed between the microporous membrane and the electrode materials small; therefore, uniform permeation of an electrolyte solution is hindered, as a result of which the cycle characteristics may be deteriorated. The surface smoothness of the polyolefin microporous membrane can be adjusted to be in the above-described numerical range by controlling, for example, the molecular weight and the blending ratio of a polymer material such as polyolefin, the distance between casting rolls, the stretching ratio in the biaxial stretching step, the MD/TD stretching temperature in the biaxial stretching step, the heating coefficient per unit resin of a resin composition in the biaxial stretching step, the HS ratio, and the HS temperature.

(Multilayer Porous Membrane)

In another mode of the present invention, a multilayer porous membrane which includes the above-described polyolefin microporous membrane and at least one layer arranged on at least one surface of the polyolefin microporous membrane is provided as well. In this multilayer porous membrane, the polyolefin microporous membrane can be imparted with a single or multiple functions depending on the property of the at least one layer, and the multilayer porous membrane can also be used as a separator for a nonaqueous secondary battery.

From the standpoint of achieving a certain membrane strength and a low air permeability, the (pre-compression) porosity of the multilayer porous membrane is preferably in a range of 20% to 80%. The porosity of the multilayer porous membrane is determined as described below in the section of Examples.

Specifically, the multilayer porous membrane can have any of the following layer configurations 1 to 3:

Layer configuration 1: includes the polyolefin microporous membrane and an inorganic porous layer arranged on at least one surface of the polyolefin microporous membrane;
Layer configuration 2: includes the polyolefin microporous membrane and a thermoplastic resin layer arranged on at least one surface of the polyolefin microporous membrane; and
Layer configuration 3: includes the polyolefin microporous membrane and at least one layer which is arranged on at least one surface of the polyolefin microporous membrane and selected from the group consisting of a multifunctional layer, an inorganic porous layer, and a thermoplastic resin layer.

(Inorganic Porous Layer)

The inorganic porous layer contains inorganic particles and a binder polymer. The multilayer porous membrane including such an inorganic porous layer has the porous structure of the inorganic porous layer; therefore, even when the multilayer porous membrane is a thin membrane, it exhibits an excellent heat shrinkage-inhibiting function while maintaining an ion permeability.

The inorganic particles are not particularly limited; however, they are preferably inorganic particles that have a high heat resistance and a high electrical insulation and are electrochemically stable in the working range of a nonaqueous secondary battery.

Examples of a material of the inorganic particles include: oxide-based ceramics, such as alumina, silica, titania, zirconia, magnesia, ceria, yttria, zinc oxide, and iron oxide; nitride-based ceramics, such as silicon nitride, titanium nitride, and boron nitride; ceramics, such as silicon carbide, calcium carbonate, magnesium sulfate, aluminum sulfate, barium sulfate, aluminum hydroxide, aluminum hydroxide oxide or boehmite, potassium titanate, talc, kaolinite, dickite, nacrite, halloysite, pyrophyllite, montmorillonite, sericite, mica, amesite, bentonite, asbestos, zeolite, calcium silicate, magnesium silicate, diatomaceous earth, and silica sand; and glass fibers. Thereamong, at least one selected from the group consisting of alumina, boehmite, and barium sulfate is preferred from the standpoint of stability in a nonaqueous secondary battery. Further, as boehmite, synthetic boehmite capable of reducing ionic impurities that adversely affect the properties of electrochemical elements is preferred. A single kind of inorganic particles may be used alone, or two or more kinds of inorganic particles may be used in combination.

Examples of the shape of the inorganic particles include a plate shape, a scale-like shape, a polyhedral shape, a needle shape, a columnar shape, a granular shape, a spherical shape, a spindle shape, and a block shape, and plural kinds of inorganic particles having these shapes may be used in combination. Among these shapes, the block shape is preferred from the standpoint of the balance between permeability and heat resistance.

The aspect ratio of the inorganic particles is preferably 1.0 to 3.0, more preferably 1.1 to 2.5. The aspect ratio is preferably 3.0 or lower from the standpoint of reducing the amount of moisture adsorbed to the multilayer porous membrane and thereby inhibiting capacity deterioration with repeated cycles, as well as the standpoint of inhibiting deformation at a temperature that exceeds the melting point of the PO microporous membrane.

The ratio of the inorganic particles in the inorganic porous layer is preferably 90% by weight to 99% by weight, more preferably 91% by weight to 98% by weight, still more preferably 92% by weight to 98% by weight. The ratio of the inorganic particles is preferably 90% by weight or higher from the standpoint of ion permeability as well as the standpoint of inhibiting deformation at a temperature that exceeds the melting point of the polyolefin microporous membrane. Further, this ratio is preferably 99% by weight or lower from the standpoint of maintaining a binding force between the inorganic particles, or an interfacial binding force between the inorganic particles and the polyolefin microporous membrane.

The binder polymer is a material that binds together plural inorganic particles in the inorganic porous layer and binds together the inorganic porous layer and the polyolefin microporous membrane. As for the type of the binder polymer, when the multilayer porous membrane is used as a separator, it is preferred to use a binder polymer that is insoluble in an electrolyte solution of a nonaqueous secondary battery and electrochemically stable in the working range of the nonaqueous secondary battery.

Specific examples of the binder polymer include the following 1) to 7):

1) polyolefins: for example, polyethylenes, polypropylenes, ethylene-propylene rubbers, and modified products of these polyolefins;
2) conjugated diene-based polymers: for example, styrene-butadiene copolymers and hydrides thereof, acrylonitrile-butadiene copolymers and hydrides thereof, and acrylonitrile-butadiene-styrene copolymers and hydrides thereof;
3) acrylic polymers: for example, methacrylate-acrylate copolymers, styrene-acrylate copolymers, and acrylonitrile-acrylate copolymers;
4) polyvinyl alcohol-based resins: for example, polyvinyl alcohols and polyvinyl acetates;
5) fluorine-containing resins: for example, polyvinylidene fluorides, polytetrafluoroethylenes, vinylidene fluoride-hexafluoropropylene-tetrafluoroethylene copolymers, and ethylene-tetrafluoroethylene copolymers;
6) cellulose derivatives: for example, ethyl cellulose, methyl cellulose, hydroxyethyl cellulose, and carboxymethyl cellulose; and
7) resins having a melting point and/or a glass transition temperature of 180°C or higher, and polymers having a decomposition temperature of 200°C or higher without a melting point: for example, polyphenylene ethers, polysulfones, polyether sulfones, polyphenylene sulfides, polyether imides, polyamide imides, polyamides, and polyesters.

From the standpoint of safety at the time of a short circuit, the 3) acrylic polymers, the 5) fluorine-containing resins, and the 7) polymers such as polyamides are preferred. From the standpoint of durability, the polyamides are preferably wholly aromatic polyamides, among which poly(m-phenylene isophthalamide) is preferred.

From the standpoint of compatibility between the binder polymer and electrodes, the 2) conjugated diene-based polymers are preferred and, from the standpoint of voltage resistance, the 3) acrylic polymers and the 5) fluorine-containing resins are preferred.

The 2) conjugated diene-based polymers are polymers containing a conjugated diene compound as a monomer unit.

Examples of the conjugated diene compound include 1,3-butadiene, 2-methyl-1,3-butadiene, 2,3-dimethyl-1,3-butadiene, 2-chloro-1,3-butadiene, substituted linear conjugated pentadienes, and substituted and side chain-conjugated hexadienes, and these conjugated diene compounds may be used singly, or in combination of two or more thereof. Thereamong, 1,3-butadiene is particularly preferred.

The 3) acrylic polymers are polymers containing a (meth)acrylic compound as a monomer unit. The "(meth)acrylic compound" refers to at least one selected from the group consisting of (meth)acrylic acids and (meth)acrylic acid esters.

Examples of a (meth)acrylic acid used in the 3) acrylic polymers include acrylic acid and methacrylic acid.

Examples of a (meth)acrylic acid ester used in the 3) acrylic polymers include (meth)acrylic acid alkyl esters, such as methyl acrylate, methyl methacrylate, ethyl acrylate, ethyl methacrylate, butyl acrylate, butyl methacrylate, 2-ethylhexyl acrylate, and 2-ethylhexyl methacrylate; and epoxy group-containing (meth)acrylic acid esters, such as glycidyl acrylate and glycidyl methacrylate, and these (meth)acrylic acid esters may be used singly, or in combination of two or more thereof. Thereamong, 2-ethylhexyl acrylate (EHA) and butyl acrylate (BA) are particularly preferred.

From the standpoint of the safety of a nonaqueous secondary battery, the acrylic polymers are preferably polymers containing EHA or BA as a main structural unit. The "main structural unit" refers to a polymer moiety that corresponds to a monomer that accounts for at least 40% by mole of all raw materials used for the formation of each polymer.

The above-described 2) conjugated diene polymers and 3) acrylic polymers may also be polymers obtained by further copolymerizing other monomers copolymerizable therewith. Examples of other copolymerizable monomers to be used include unsaturated carboxylic acid alkyl ester monomers, aromatic vinyl-based monomers, vinyl cyanide-based monomers, hydroxyalkyl group-containing unsaturated monomers, unsaturated carboxylic acid amide monomers, crotonic acid, maleic acid, maleic acid anhydride, fumaric acid, and itaconic acid, and these monomers may be used singly, or in combination of two or more thereof. Thereamong, unsaturated carboxylic acid alkyl ester monomers are particularly preferred. Examples of the unsaturated carboxylic acid alkyl ester monomers include dimethyl fumarate, diethyl fumarate, dimethyl maleate, diethyl maleate, dimethyl itaconate, monomethyl fumarate, and monoethyl fumarate, and these unsaturated carboxylic acid alkyl ester monomers may be used singly, or in combination of two or more thereof.

The above-described 2) conjugated diene polymers may also be polymers obtained by copolymerizing the above-described (meth)acrylic compound as other monomer.

From the standpoint of obtaining a high binding force between plural inorganic particles even at such a high temperature that exceeds normal temperature and inhibiting heat shrinkage, the binder polymer is preferably in the form of a latex, more preferably an acrylic polymer latex.

To a coating liquid used for the formation of the inorganic porous layer, a dispersant such as a surfactant may be added to improve the dispersion stability and the coatability. The dispersant adsorbs to the surfaces of the inorganic particles in a slurry and stabilizes the inorganic particles by electrostatic repulsion and the like, and examples of the dispersant include polycarboxylic acid salts, sulfonic acid salts, and polyoxyethers. The amount of the dispersant to be added is preferably 0.2 parts by weight to 5.0 parts by weight, more preferably 0.3 parts by weight to 1.0 part by weight, in terms of solid content.

A total thickness of the inorganic porous layer is preferably 0.1 $\mu$m to 10 $\mu$m, more preferably 0.2 $\mu$m to 7 $\mu$m, still more preferably 0.3 $\mu$m to 4 $\mu$m. The term "total thickness of the inorganic porous layer" used herein refers to the thickness of the inorganic porous layer when it is formed on one surface of the polyolefin microporous membrane, or a total thickness of two inorganic porous layers when the inorganic porous layer is formed on both surfaces of the PO microporous membrane. The total thickness of the inorganic porous layer is preferably 0.1 $\mu$m or greater from the standpoint of inhibiting deformation at a temperature that exceeds the melting point of the polyolefin microporous membrane, and the total thickness is preferably 10 $\mu$m or less from the standpoint of improving the battery capacity.

(Thermoplastic Resin Layer)

The thermoplastic resin layer is a layer containing a thermoplastic resin as a main component, and may also contain other components as desired. From the standpoint of obtaining a high adhesion, the thermoplastic resin layer and the polyolefin microporous membrane are preferably in direct contact with each other.

From the standpoint of adhesion to electrodes, the ratio of the thermoplastic resin in the thermoplastic resin layer is preferably higher than 3% by weight, more preferably 10% by weight or higher, still more preferably 20% by weight or higher, 40% by weight or higher, 60% by weight or higher, or 80% by weight or higher, particularly preferably 90% by weight or higher.

Examples of the thermoplastic resin include the above-described specific examples of the binder polymer contained in the inorganic porous layer and, thereamong, the 2) conjugated diene polymers, the 3) acrylic polymers, the 5) fluorine-containing resins, and the 7) polymers such as polyamides are preferred from the standpoint of adhesion as well as the standpoint of safety during a nail penetration test or a short circuit of a nonaqueous secondary battery.

The area ratio of the thermoplastic resin layer with respect to a total surface area of the polyolefin microporous membrane is preferably 100% or lower, 95% or lower, 80% or lower, 75% or lower, or 70% or lower, but preferably 5% or higher, 10% or higher, or 15% or higher. It is preferred to control the area ratio to be 100% or lower from the standpoint of inhibiting blockage of the pores of the polyolefin microporous membrane by the thermoplastic resin and thereby further improving the permeability of a separator. It is also preferred to control the area ratio to be 5% or higher from the standpoint of further improving the adhesion to electrodes.

When the thermoplastic resin layer is arranged on a portion of the surface of the polyolefin microporous membrane or the inorganic porous layer, the arrangement pattern of the thermoplastic resin layer may be, for example, a dot pattern, a diagonal line pattern, a stripe pattern, a lattice pattern, a band pattern, a tortoise shell pattern, a random pattern, or a combination of these patterns.

The thickness of the thermoplastic resin layer is preferably 0.1 $\mu$m or greater, more preferably 0.2 $\mu$m or greater,

still more preferably 0.3 μm or greater, but preferably 10 μm or less, more preferably 7 μm or less, still more preferably 4 μm or less, per one surface of the polyolefin microporous membrane. It is preferred to control the thickness of the thermoplastic resin layer to be 0.1 μm or greater from the standpoint of allowing an adhesive force to be uniformly exerted between electrodes and the multilayer porous membrane, and the battery characteristics can be improved as a result. It is also preferred to control the thickness of the thermoplastic resin layer to be 10 μm or less from the standpoint of inhibiting a reduction in the ion permeability.

(Multi-functional Layer)

The multi-functional layer is a layer that imparts the polyolefin microporous membrane or separator with multiple functions, and can have, for example, the functions of both the inorganic porous layer and the thermoplastic resin layer. More specifically, the multi-functional layer contains the above-described binder polymer or thermoplastic resin and inorganic particles and, if desired, may also contain additional components such as a dispersant. The thickness of the multi-functional layer is not limited, and can be determined in accordance with the functions to be imparted to the polyolefin microporous membrane and the coating conditions.

<Method of Producing Polyolefin Microporous Membrane>

A method of producing the polyolefin microporous membrane according to the present invention is not particularly limited, and one example thereof is a method comprising the following steps:

(A) the step of extruding a polyolefin composition that contains a polyolefin resin and a pore-forming material to form a gel-like sheet;
(B) the step of biaxially stretching this gel-like sheet to form a stretched sheet;
(C) the step of extracting the pore-forming material from the stretched sheet to form a porous membrane; and
(D) the step of heat-setting the porous membrane.

These production steps of the polyolefin microporous membrane and preferred embodiments thereof will now be described.

[Extrusion Step (A)]

In the step (A), a polyolefin composition is extruded to form a gel-like sheet. The polyolefin composition may contain a polyolefin resin, a pore-forming material, and the like. From the standpoint of making a stretching stress uniform and improving the air permeability and the air permeability distribution of the resulting membrane, the resin contained in the polyolefin composition preferably consists of only a polyolefin, without containing a non-resin component such as microparticles, or a high-heat-resistant resin having a largely different melting point. A gel-like sheet can be obtained by melt-kneading the polyolefin resin and the pore-forming material, and molding the resultant into the form of a sheet.
First, the polyolefin resin and the pore-forming material are melt-kneaded. One example of a melt-kneading method is a method of adding the polyolefin resin and, if necessary, other additives to a resin kneading apparatus such as an extruder, a kneader, a LABO-PLASTOMILL, a kneading roll, or a Banbury mixer, and introducing thereto the pore-forming material at an arbitrary ratio while heat-melting the resin component, followed by kneading.
The polyolefin resin contained in the polyolefin composition can be determined in accordance with a prescribed resin raw material of the polyolefin microporous membrane to be obtained. Specifically, the polyolefin resin used in the extrusion step (A) may be the polyolefin resin described above as a constituent of the polyolefin microporous membranes according to Embodiments 1 to 4.
The content ratio of a plasticizer in the resin composition is preferably 66% by weight to 90% by weight, more preferably 68% by weight to 88% by weight, still more preferably 70% by weight to 80% by weight. By adjusting the content ratio of the plasticizer to be 66% by weight or higher, the melt viscosity of the resin composition is reduced and melt-fracturing is inhibited, so that the membrane formability at the time of the extrusion tends to be improved. Meanwhile, by adjusting the content ratio of the plasticizer to be 90% by weight or lower, elongation of raw sheet during the membrane production process can be inhibited.
From the standpoint of uniformly dispersing a high-molecular-weight resin and thereby uniformly applying a stretching stress to improve the ion permeability and the air permeability distribution of the resulting membrane, the PC of the resin composition is preferably 20% by weight to 40% by weight, more preferably 22% by weight to 37% by weight, still more preferably 24% by weight to 33% by weight. It is noted here that the term "PC" used herein refers to a "ratio (% by weight) of polymer components in extruded components".
With regard to at least one of high-molecular-weight raw materials contained in the polyolefin composition, from the standpoint of adjusting the molecular weight, the MI, the puncture strength, the basis weight-converted puncture strength, the difference R between a maximum value and a minimum value of the air permeability measured at three spots along the TD, the (pre-compression) air permeability and porosity, the air permeability30°C,3MPa in a pressurized state, the porosity30°C,3MPa in a pressurized state, and the heat shrinkage of the resulting microporous membrane to be in the above-described respective numerical ranges, a lower limit value of the Mv is preferably not less than 700,000, and an upper limit value of the Mv may be, for example, 2,000,000 or less. From the same standpoint, the ratio of a high-molecular-weight raw material having an Mv of 700,000 or more in the resin contained in the polyolefin composition is preferably 30% by weight or higher, more preferably 40% by weight or higher, still more preferably 50% by weight or higher, and it may be 100% by weight.

When the polyolefin composition contains a polyethylene as a main component, from the standpoint of adjusting the post-compression porosity, the crystal long period, or the crystallite size of the resulting microporous membrane to be in the above-described numerical range, the Mv of the polyethylene is preferably not less than 600,000, more preferably not less than 700,000, and an upper limit value of the Mv of the polyethylene may be, for example, 2,000,000 or less. From the same standpoint, the ratio of a polyethylene having an Mv of 700,000 or more in the polyolefin resin constituting the polyolefin composition is preferably 50% by weight or higher, more preferably 60% by weight or higher, still more preferably 70% by weight or higher, and it may be 100% by weight.

When the polyolefin composition contains a polyethylene as a main component, from the standpoint of adjusting the molecular weight, the MI, the puncture strength, the basis weight-converted puncture strength, the difference R between a maximum value and a minimum value of the air permeability measured at three spots along the TD, the (pre-compression) air permeability and porosity, the air permeability30°C,3MPa in a pressurized state, the porosity30°C,3MPa in a pressurized state, and the heat shrinkage of the resulting microporous membrane to be in the above-described respective numerical ranges, the Mv of the polyethylene for at least one of raw materials is more preferably not less than 700,000, and an Mv upper limit value of the polyethylene may be, for example, 2,000,000 or less. From the same standpoint, the ratio of a polyethylene having an Mv of 700,000 or more in the polyolefin resin constituting the polyolefin composition is preferably 30% by weight or higher, more preferably 40% by weight or higher, still more preferably 50% by weight or higher, and it may be 100% by weight.

Further, from the standpoint of the heat resistance of the resulting microporous membrane, a polypropylene may be mixed into the polyolefin composition. In this case, from the standpoint of the strength and the compression resistance of the membrane, the ratio of the polypropylene with respect to all polyolefin resins in the polyolefin composition is preferably 1% by weight to 20% by weight, more preferably 2% by weight to 15% by weight, still more preferably 2% by weight to 10% by weight. From the standpoint of improving the moldability, the ratio of the polypropylene with respect to all polyolefin resins in the polyolefin composition is preferably 3% by weight to 10% by weight, more preferably 5% by weight to 9% by weight.

The pore-forming material is, for example, a plasticizer, an inorganic material, or a combination thereof.

The plasticizer is not particularly limited; however, it is preferably a nonvolatile solvent that can form a homogeneous solution at a temperature of equal to or higher than the melting point of the polyolefin. Specific examples of the nonvolatile solvent include: hydrocarbons, such as liquid paraffins and paraffin waxes; esters, such as dioctyl phthalate and dibutyl phthalate; and higher alcohols, such as oleyl alcohol and stearyl alcohol. These plasticizers may be recovered and recycled by operations such as extraction and subsequent distillation.

Among the above-described plasticizers, a liquid paraffin is preferred since, when the polyolefin resin is a polyethylene or a polypropylene, it is highly compatible with the polyolefin resin, and interfacial delamination between the resin and the plasticizer is thus unlikely to occur even if a melt-kneaded product thereof is stretched, which tends to make it easy to perform stretching uniformly.

Examples of the inorganic material include, but not particularly limited to: oxide ceramics, such as alumina, silica (silicon oxide), titania, zirconia, magnesia, ceria, yttria, zinc oxide, and iron oxide; nitride ceramics, such as silicon nitride, titanium nitride, and boron nitride; ceramics, such as silicon carbide, calcium carbonate, aluminum sulfate, aluminum hydroxide, potassium titanate, talc, kaolin clay, kaolinite, halloysite, pyrophyllite, montmorillonite, sericite, mica, amesite, bentonite, asbestos, zeolite, calcium silicate, magnesium silicate, diatomaceous earth, and silica sand; and glass fibers. These inorganic materials may be used singly, or in combination of two or more thereof. Thereamong, silica is particularly preferred since it can be easily extracted.

As for the ratio of the polyolefin resin composition and the inorganic material, from the standpoint of obtaining good isolation, the amount of the inorganic material with respect to a total weight of the polyolefin resin composition and the inorganic material is preferably not less than 3% by weight, more preferably not less than 10% by weight and, from the standpoint of ensuring a high strength, it is preferably 60% by weight or less, more preferably 50% by weight or less.

Next, the thus obtained melt-kneaded product is molded into the form of a sheet to obtain a gel-like sheet. In the case of performing the melt-kneading using an extruder, the ratio (Q/N, unit: kg/(h·rpm)) between the extrusion rate of the polyolefin composition (i.e., the discharge rate Q of the extruder: kg/h) and the screw rotation speed N (rpm) of the extruder is preferably 0.1 to 7.0, more preferably 0.5 to 6.0, still more preferably 1.0 to 5.0. When the melt-kneading is performed under a Q/N condition of 0.1 or higher but lower than 7.0, liquid paraffin that has been phase-separated from the resin is more easily dispersed, so that the resulting pore structure tends to be dense and have a high strength.

One example of a method of producing a sheet-like molded body is a method of extruding the melt-kneaded product into the form of a sheet through a T-die or the like, and bringing the thus extruded sheet into contact with a thermal conductor to cool the sheet to a temperature sufficiently lower than the crystallization temperature of the resin component and thereby solidify the sheet. Examples of the thermal conductor used for this cooling and solidification include metals, water, air, and plasticizers. Among these thermal conductors, it is preferred to use metal rolls because of its high heat conduction efficiency. Further, at the time of bringing the extruded gel-like sheet into contact with the metal rolls, it is more preferred to sandwich the gel-like sheet between the rolls since this not only further improves the heat conduction efficiency but also increases the membrane strength through orientation of the sheet, so that the surface smoothness of the sheet tends to be improved as well.

For example, with regard to casting rolls, from the standpoint of controlling the casting clearance at the time of extruding the melt-kneaded product through a T-die into the form of a sheet and thereby adjusting the (pre-compression) average thickness of the resulting microporous membrane to be in the above-described numerical range, the distance between the casting rolls is preferably 200 μm to 3,000 μm, more preferably 500 μm to 2,500 μm. When the distance between the casting rolls is 200 μm or more, risks such as membrane breakage can be reduced in the subsequent stretching step, while when the distance between the casting rolls is 3,000 μm or less, a high cooling rate is obtained, so that cooling unevenness can be prevented. Further, from the standpoint of obtaining a thin membrane and improving the planar orientation and the crystallinity to achieve a stretching ratio required for improving the compression, the casting thickness is preferably 500 μm to 2,200 μm, more preferably 700 μm to 2,000 μm.

Moreover, the extruded sheet-like molded body or gel-like sheet may be rolled as well. This rolling can be performed by, for example, a method using rolls or the like. By the rolling, particularly the orientation of a surface layer portion can be enhanced. The rolling area ratio is preferably higher than 1 but 3 or lower, more preferably higher than 1 but 2 or lower. When the rolling ratio is higher than 1, the planar orientation is enhanced, so that the strength of the eventually obtained porous membrane tends to be increased. When the rolling ratio is 3 or lower, the difference in orientation between a surface layer portion and an inner central portion is small, so that a porous structure that is uniform in the membrane thickness direction tends to be formed.

[Biaxial Stretching Step (B)]

In the step (B), the gel-like sheet obtained in the step (A) is stretched. The step (B) is performed prior to the step (C) of extracting the pore-forming material from the sheet. In the step (B), from the standpoint of controlling the bending stiffness of the resulting polyolefin microporous membrane, the gel-like sheet is stretched at least once in each of the longitudinal direction and the width direction (i.e., biaxial stretching).

Examples of a stretching method include simultaneous biaxial stretching, sequential biaxial stretching, multistage stretching, and repetitive stretching. Thereamong, simultaneous biaxial stretching is preferred from the standpoint of improvement in the membrane strength and the stretching uniformity, as well as the standpoint of making the stem structure isotropic in a plane and improving the safety in a nail penetration test through isotropic dispersion of stress during the nail penetration test. The term "simultaneous biaxial stretching" used herein refers to a stretching method of simultaneously performing MD stretching and TD stretching, and the stretching ratio may be different between the directions. The term "sequential biaxial stretching" used herein refers to a stretching method of independently performing MD stretching and TD stretching and, during the stretching in either the MD or the TD, the gel-like sheet is in a non-restrained state or a fixed-length state in the other direction.

In the step (B), from the standpoint of adjusting the post-compression porosity, the crystal long period, or the crystallite size of the resulting microporous membrane to be in the above-described numerical range, it is preferred to preheat the gel-like sheet in a stretching furnace immediately before the stretching, and it is more preferred to increase the preheating coefficient. The preheating coefficient is a value obtained by multiplying the preheating temperature by the preheating air flow rate and the preheating time, and it is preferably in a range of 130,000°C·m to 300,000°C·m, more preferably in a range of 150,000°C·m to 300,000°C·m, still more preferably in a range of 180,000°C·m to 300,000°C·m. In a case where the preheating furnace is divided into plural chambers having different air flow rates, the preheating coefficient is calculated as the air flow rate of the whole preheating furnace from a total of "(air flow rate in each chamber) × (furnace length of each chamber)/furnace length of whole preheating furnace".

In the MD stretching of the step (B), from the standpoint of adjusting the post-compression porosity, the crystal long period, or the crystallite size of the resulting microporous membrane to be in the above-described numerical range, as well as the standpoint of highly orienting the polyethylene contained as a main component to form a highly rigid stem and the standpoint of improving the compression by increasing the crystallinity in addition to increasing the membrane strength through stretch-orientation, the MD stretching ratio is preferably 5 or higher, more preferably 5 to 10, still more preferably 5 to 9, or 6 to 10, particularly preferably 6 to 8. The MD stretching ratio can be adjusted in accordance with, for example, the MD stretching temperature, the MD stretching air flow rate, the MD stretching time, and the MD stretching coefficient. From the same standpoints as described above, as well as the standpoint of uniformly applying a stress even to a high-molecular-weight resin and thereby improving the permeability and the air permeability distribution of the resulting membrane, a lower limit of the MD stretching temperature is preferably 122.0°C or higher, more preferably 123.0°C or higher, still more preferably 124.0°C or higher, yet still more preferably 125.0°C or higher, particularly preferably 126.0°C or higher, most preferably 127.0°C or higher, while an upper limit of the MD stretching temperature is preferably 145.0°C or lower, more preferably 140.0°C or lower, and may be, for example, 131.0°C or lower. An MD stretching temperature of not lower than (melting point of main component - 12°C) but not higher than the melting point of the main component is presumed to be preferred for stretching and molding since it allows a stress to be applied to the membrane in moderation. The MD stretching temperature is more preferably not lower than (melting point of main component - 10°C) but not higher than the melting point of the main component, still more preferably not lower than (melting point of main component - 8°C) but not higher than the melting point of the main component.

In the TD stretching of the step (B), from the standpoint of adjusting the post-compression porosity, the crystal long period, or the crystallite size of the resulting microporous membrane to be in the above-described numerical range, as well as the standpoint of highly orienting the polyethylene contained as a main component to form a highly rigid stem and the standpoint of improving the compression by increasing the crystallinity in addition to increasing the membrane strength through stretch-orientation, the TD stretching ratio is preferably 5 or higher, more preferably 5 to 10, still more preferably 5 to 9, or 6 to 10, particularly preferably 6 to 8.

Further, from the standpoint of improving the cycle characteristics of a nonaqueous secondary battery provided with the resulting microporous membrane by making it easy to uniformly perform the TD stretching in the step (B) even when the polyolefin composition for which the step (A) has been performed has a high-molecular-weight formulation, as well as the standpoint of uniformly applying a stress even to a high-molecular-weight resin and thereby improving the permeability and the air permeability distribution of the resulting membrane, a lower limit of the TD stretching temperature in the step (B) is preferably 122.0°C or higher, more preferably 123.0°C or higher, still more preferably 124.0°C or higher, yet still more preferably 125.0°C or higher, particularly preferably 126.0°C or higher, most preferably 127.0°C or higher, while an upper limit of the TD stretching temperature is preferably 145.0°C or lower, more preferably 140.0°C or lower, and may be, for example, 131.0°C or lower.

The MD stretching ratio and the TD stretching temperature in the step (B) can be adjusted in accordance with, for example, the TD stretching air flow rate, the TD stretching time, and the TD stretching coefficient.

In the step (B), from the standpoint of adjusting the post-compression porosity, the crystal long period, or the crystallite size of the resulting microporous membrane to be in the above-described numerical range, the ratio of the preheating coefficient with respect to the stretching coefficient (i.e., preheating coefficient/stretching coefficient) is adjusted to be preferably 5.7 to 7.0, particularly preferably 5.8 to 7.0. When this ratio is adjusted to be 5.7 or higher, the sheet is made more easily stretchable and more likely to have a uniform structure by applying thereto a greater amount of heat in the preheating performed immediately before the stretching, so that the cycle characteristics of a nonaqueous secondary battery provided with the eventually obtained microporous membrane tend to be improved. Meanwhile, when this ratio is adjusted to be 7.0 or higher, the structure of the resulting membrane is likely to be heterogeneous due to the occurrence of stretching unevenness, as a result of which the cycle characteristics of a nonaqueous secondary battery provided with the eventually obtained microporous membrane tend to be deteriorated. The stretching coefficient is a value obtained by multiplying the stretching temperature by the stretching air flow rate and the membrane retention time in the stretching step, and it is preferably in a range of 20,000°C·m to 50,000°C·m, more preferably in a range of 30,000°C·m to 50,000°C·m. In a case where the stretching furnace is divided into plural chambers having different air flow rates, the stretching coefficient is calculated as the air flow rate of the whole stretching furnace from a total of "(air flow rate in each chamber) × (furnace length of each chamber)/furnace length of whole stretching furnace". Further, the retention time in the stretching furnace is calculated by (furnace length of whole stretching furnace)/(average speed in whole stretching furnace).

In the step (B), from the standpoint of adjusting the puncture strength, the basis weight-converted puncture strength, the difference R between a maximum value and a minimum value of the air permeability measured at three spots along the TD, the (pre-compression) air permeability and porosity, the air permeability30°C,3MPa in a pressurized state, the porosity30°C,3MPa in a pressurized state, the heat shrinkage, the tensile strength at break, and the MD/TD ratio of tensile strength at break of the resulting microporous membrane to be in the above-described respective numerical ranges, the biaxial stretching ratio is preferably 5 × 5 or higher, more preferably 5 × 5 to 10 × 10, still more preferably 6 × 6 to 10 × 10. From the same standpoint, the biaxial stretching ratio is preferably a simultaneous biaxial stretching ratio.

In the step (B), from the standpoint of adjusting the puncture strength, the basis weight-converted puncture strength, the difference R between a maximum value and a minimum value of the air permeability measured at three spots along the TD, the (pre-compression) air permeability and porosity, the air permeability30°C,3MPa in a pressurized state, the porosity30°C,3MPa in a pressurized state, the heat shrinkage, the tensile strength at break, and the MD/TD ratio of tensile strength at break of the resulting microporous membrane to be in the above-described respective numerical ranges, the biaxial stretching temperature is preferably 122°C to 147°C, more preferably 123°C to 146°C, still more preferably 124°C to 145°C, particularly preferably 127°C to 140°C.

From the standpoint of increasing the amount of heat applied per unit resin and making the stretching stress uniform to improve the permeability distribution of the resulting membrane, the PC of the gel-like sheet for which the step (B) is performed is preferably 22% to 30%, or 25% to 32%.

In the step (B), from the standpoint of adjusting the puncture strength, the basis weight-converted puncture strength, the difference R between a maximum value and a minimum value of the air permeability measured at three spots along the TD, the (pre-compression) air permeability and porosity, the air permeability$_{30°C,3MPa}$ in a pressurized state, the porosity$_{30°C,3MPa}$ in a pressurized state, and the heat shrinkage of the resulting microporous membrane to be in the above-described respective numerical ranges, the value represented by the following equation (I) is preferably not less than 0.26°C/%:

$$\text{Heating coefficient per unit resin} = (\text{Biaxial stretching temperature} - 115°C) \div PC \quad \text{(I)}$$

From the standpoint of increasing the amount of heat applied per unit resin and thereby making the stretching stress uniform to improve the permeability distribution of the resulting membrane, this value is preferably 0.26°C/% to 1.2°C/%, more preferably 0.34°C/% to 1.0°C/%, still more preferably 0.37°C/% to 0.98°C/%, particularly preferably 0.40°C/% to 0.95°C/%. However, in a case of employing a dry process in which membrane production and porosification are performed in the absence of a liquid, a greater amount of heat is required for making the stretching stress uniform because of the absence of plasticization; therefore, such a case is excluded from the value calculated by the above-described equation.

[Extraction Step (C)]

In the step (C), the pore-forming material is removed from the sheet-like molded body to obtain a porous membrane. One example of a method of removing the pore-forming material is a method of immersing the sheet-like molded body in an extraction solvent to extract the pore-forming material, and subsequently thoroughly drying the molded body. A method of extracting the pore-forming material may be a batch process or a continuous process. In order to prevent the resulting porous membrane from shrinking, it is preferred to restrain the ends of the sheet-like molded body during the series of the immersion and drying operations. Further, the amount of the pore-forming material remaining in the porous membrane is preferably less than 1% by weight with respect to the weight of the whole porous membrane.

The extraction solvent used for extracting the pore-forming material is preferably a solvent which is a poor solvent for the polyolefin resin but a good solvent for the pore-forming material, and has a boiling point lower than the melting point of the polyolefin resin. Examples of such an extraction solvent include: hydrocarbons, such as n-hexane and cyclohexane; halogenated hydrocarbons, such as methylene chloride and 1,1,1-trichloroethane; non-chlorine-based halogenated solvents, such as hydrofluoroethers and hydrofluorocarbons; alcohols, such as ethanol and isopropanol; ethers, such as diethyl ether and tetrahydrofuran; and ketones, such as acetone and methyl ethyl ketone. These extraction solvents may be recovered and recycled by an operation such as distillation. When an inorganic material is used as the pore-forming material, an aqueous solution of sodium hydroxide, potassium hydroxide, or the like can be used as the extraction solvent.

[Heat Setting Step (D)]

In the heat setting step (D), in order to prevent the resulting polyolefin microporous membrane from shrinking, a heat treatment of the microporous membrane is performed for the purpose of heat setting (HS) after the plasticizer extraction of the step (C). Examples of the heat treatment of the porous membrane include: a stretching operation that is performed at a prescribed stretching ratio in an atmosphere having a prescribed temperature for the purpose of adjusting the physical properties; and a relaxation operation that is performed at a prescribed relaxation ratio in an atmosphere having a prescribed temperature for the purpose of reducing the stretching stress. The relaxation operation refers to a membrane-reducing operation performed after the stretching operation. These heat treatments can be performed using a tenter or a roll stretching machine. It is noted here that the heat setting, which includes such stretching and relaxation operations after the plasticizer extraction, is preferably performed in the TD.

In the step (D), from the standpoint of adjusting the post-compression porosity, the crystal long period, or the crystallite size of the resulting microporous membrane to be in the above-described numerical range, it is preferred to perform preheating immediately before the stretching of the microporous membrane. The preheating in the step (D) can be controlled by, for example, the preheating temperature.

The TD stretching operation in the step (D) is performed such that the TD stretching temperature is preferably 130°C to 150°C, more preferably 132°C to 145°C, still more preferably 133°C to 140°C. As a result, heat shrinkage of the resulting membrane in the TD at a temperature of 120°C is reduced, so that the safety in a nail penetration test of a nonaqueous secondary battery can be improved.

The TD stretching operation in the step (D) is performed such that the TD stretching ratio of the membrane is preferably 1.1 or higher, more preferably 1.4 or higher, still more preferably 1.5 or higher. Further, the TD stretching ratio in the step (D) is preferably 3 or lower, more preferably 2.5 or lower. By adjusting the TD stretching ratio in the step (D) to be in the above-described numerical range, not only the strength of the membrane is increased through stretch-orientation and the porosity can be controlled to optimize the balance between the compression and the permeability, but also the stress inside the membrane is relaxed to reduce heat shrinkage, specifically heat shrinkage in the TD at a temperature of 120°C, so that the safety in a nail penetration test can be improved.

From the standpoint of crystallizing the polyethylene contained as a main component in the resulting microporous membrane and thereby forming a highly rigid stem, as well as the standpoint of adjusting the (pre-compression) average thickness, the puncture strength, the basis weight-converted puncture strength, the difference R between a maximum value and a minimum value of the air permeability measured at three spots along the TD, the (pre-compression) air permeability and porosity, the air permeability$_{30°C,3MPa}$ in a pressurized state, the porosity$_{30°C,3MPa}$ in a pressurized state, the heat shrinkage, the tensile strength at break, and the MD/TD ratio of tensile strength at break of the resulting microporous membrane to be in the above-described respective numerical ranges, the heat setting ratio in the step (D), i.e., relaxation ratio, is preferably 1.4 or higher, more preferably 1.5 or higher, still more preferably 1.5 to 3. By this, not only the strength of the membrane is increased through stretch-orientation and the porosity can be controlled to optimize the balance between the compression and the permeability, but also the stress inside the membrane is relaxed to reduce heat shrinkage in the TD at a temperature of 120°C, so that the safety in a nail penetration test of a nonaqueous secondary battery can be improved.

From the standpoint of adjusting the (pre-compression) average thickness, the air permeability$_{30°C,3MPa}$ in a pressurized state, and the porosity$_{30°C,3MPa}$ in a pressurized state of the resulting microporous membrane to be in the above-described respective numerical ranges and thereby reducing the heat shrinkage of the microporous membrane in the TD at a temperature of 120°C to improve the safety of a nonaqueous secondary battery in a nail penetration test, the heat setting temperature in the step (D), i.e., relaxation temperature, is preferably 130°C to 150°C, more preferably 132°C to 145°C, still more preferably 133°C to 140°C, particularly preferably 135°C to 140°C.

The polyolefin microporous membranes according to Embodiments 1 to 4 can be obtained by a production method that includes the steps (A) to (D). In order to crystallize the polyethylene contained as a main component in each microporous membrane and thereby form a highly rigid stem, a total stretching ratio of each of the eventually obtained polyolefin microporous membranes is preferably 60 or higher, more preferably 61 to 81.

Through the steps (A) to (D), from the standpoint of increasing the amount of heat applied per unit resin to make the stretching stress uniform and improve the permeability distribution in each of the eventually obtained membranes, the PC of the resin composition, gel-like sheet, or porous membrane is preferably 22% to 30%, or 25% to 32%.

<Method of Producing Multilayer Porous Membrane>

The method of producing a multilayer porous membrane according to one mode of the present invention may include, for example, but not particularly limited to: the step of arranging at least one layer selected from the group consisting of a multi-functional layer, an inorganic porous layer, and a thermoplastic resin layer on at least one surface of a polyolefin microporous membrane produced in the above-described manner.

A method of arranging the multi-functional layer, the inorganic porous layer, or the thermoplastic resin layer is not particularly limited, and one example thereof is a method of applying a coating liquid, which contains the constituents of one of these layers, to one or both surfaces of the polyolefin microporous membrane, or onto a layer formed on the polyolefin microporous membrane. The thickness of the resulting coating layer is preferably 0.1 to 10 μm, more preferably 0.2 to 7 μm, still more preferably 0.3 to 4 μm. Further, the number of coating layers is preferably 0 to 5, more preferably 0 to 3. By properly controlling the thickness of the coating layer, the capacity of a battery can be increased. Inorganic coating has an effect of improving the safety of a battery by inhibiting shrinkage of a substrate, while organic coating has an effect of improving the workability by increasing the adhesion with electrodes. Both of these characters can be achieved in a balanced manner by using a mixture of an inorganic component and an organic polymer component.

A coating method is not particularly limited as long as it can realize desired coating pattern, coating thickness, and coating area, and examples thereof include a gravure coater method, a small-diameter gravure coater method, a reverse roll coater method, a transfer roll coater method, a kiss coater method, a dip coater method, a knife coater method, an air doctor coater method, a blade coater method, a rod coater method, a squeeze coater method, a cast coater method, a die coater method, a screen printing method, a spray coating method, and an ink-jet coating method.

As a medium of the coating liquid, water or a mixed solvent of water and a water-soluble organic medium is preferred. The water-soluble organic medium is not particularly limited, and examples thereof include ethanol and methanol.

Prior to the application of the coating liquid, a surface treatment is preferably performed on the polyolefin microporous membrane since this not only makes it easier to apply the coating liquid but also improves the adhesion between the polyolefin microporous membrane and the resulting coating layer. Examples of a surface treatment method include a corona discharge treatment method, a plasma treatment method, a mechanical roughening method, a solvent treatment method, an acid treatment method, and a UV oxidation method.

After the application of the coating liquid, the solvent may be removed from the resulting coating film by drying at a temperature of not higher than the melting point of the polyolefin microporous membrane, vacuum drying, solvent extraction, or the like.

Alternatively, a polyolefin microporous membrane and at least one layer selected from the group consisting of a multi-functional layer, an inorganic porous layer, and a thermoplastic resin layer may be produced separately, and subsequently integrated together by pasting, lamination, adhesion, fusion, or the like.

<Separator for Nonaqueous Secondary Battery, and Nonaqueous Secondary Battery>

The polyolefin microporous membranes according to Embodiments 1 to 4 can each be used in, for example, a nonaqueous secondary battery, specifically as a separator for the nonaqueous secondary battery. The nonaqueous secondary battery is, for example, a lithium ion secondary battery. By integrating any of the polyolefin microporous membranes according to Embodiments 1 to 4 into a lithium ion secondary battery, not only a thermal runaway of the lithium ion secondary battery can be inhibited, but also the lithium ion secondary battery can achieve both satisfactory safety and satisfactory battery characteristics, such as excellent output characteristics and excellent cycle characteristics, even when the battery includes an readily shrinkable electrode, a high-capacity electrode, or a Si-containing negative electrode.

EXAMPLES

The present invention will now be described more specifically by way of Examples and Comparative Examples; however, the present invention is not limited to the below-described Examples within the gist of the present invention. In Example, physical properties were measured by the following methods. Unless otherwise specified, all measurements were performed at a room temperature of 23°C $\pm$ 2°C under a humidity of 40% $\pm$ 5%.

[Viscosity-Average Molecular Weight]

The limiting viscosity [$\eta$] (dl/g) at 135°C in a decalin solvent was determined in accordance with ASTM-D4020.

For a polyethylene, the Mv was calculated by the following equation.

$$[\eta] = 6.77 \times 10^{-4}\, \mathrm{Mv}^{0.67}$$

For a polypropylene, the Mv was calculated by the following equation.

$$[\eta] = 1.10 \times 10^{-4}\, \mathrm{Mv}^{0.80}$$

[Weight-Average Molecular Weight and Number-Average Molecular Weight]

Using ALC/GPC Model 150C (trademark) manufactured by Waters Corporation, a standard polystyrene was measured under the following conditions to prepare a calibration curve. Further, chromatograms were measured for the below-described polymers under the same conditions, and the weight-average molecular weight of each polymer was determined by the following method based on the calibration curve.

Columns: two GMH$_6$-HT (trademark) columns + two GMH$_6$-HTL (trademark) columns, manufactured by Tosoh Corporation
Mobile phase: o-dichlorobenzene
Detector: differential refractometer
Flow rate: 1.0 ml/min
Column temperature: 140°C

Sample concentration: 0.1% by weight

(Weight-Average Molecular Weight and Number-Average Molecular Weight of Polyethylene and Polypropylene)

Each molecular weight component in the above-obtained calibration curve was multiplied by 0.43 (Q factor of polyethylene/Q factor of polystyrene = 17.7/41.3) or 0.64 (Q factor of polypropylene/Q factor of polystyrene = 26.4/41.3) to obtain a molecular weight distribution curve in terms of polyethylene or polypropylene, and the weight-average molecular weight and the number-average molecular weight were calculated.

(Weight-Average Molecular Weight and Number-Average Molecular Weight of Resin Composition or Resin Microporous Membrane)

The weight-average molecular weight and the number-average molecular weight were calculated in the same manner as in the case of polyethylene, except that the Q factor value of a polyolefin having the largest mass fraction was used.

[Melt Flow Index (MI)]

The melt flow index (MI) of a microporous membrane was determined in accordance with JIS K7210:1999 (Plastics - Determination of the melt mass-flow rate (MFR) and the melt volume-flow rate (MVR) of thermoplastics). A load of 21.6 kgf was applied to the membrane at 190°C to measure the amount (g) of resin discharged in 10 minutes from an orifice of 2 mm in diameter and 10 mm in length, and a value obtained by rounding the thus measured value to the nearest whole number was defined as the MI.

[DSC Measurement (Differential Scanning Calorimetry)]

DSC measurement was performed using DSC60 manufactured by Shimadzu Corporation. First, a PO microporous membrane was punched out into circular pieces of 5 mm in diameter, and several of these pieces were laminated to a total weight of 3 mg and used as a measurement sample. This sample was placed on an aluminum open sample pan of 5 mm in diameter, a clamping cover was placed thereon, and the sample was immobilized on the aluminum pun using a sample sealer. In a nitrogen atmosphere, the sample was heated from 30°C to 200°C at a heating rate of 10°C/min (first heating) and maintained at 200°C for 5 minutes, followed by cooling from 200°C to 30°C at a cooling rate of 10°C/min. Subsequently, the sample was maintained at 30°C for 5 minutes and then heated again from 30°C to 200°C at a heating rate of 10°C/min (second heating). The temperature of a peak in the melting endothermic curve of the second heating was defined as the melting point of the PO microporous membrane. When there were plural peak values, the first peak and the largest peak were detected. It is noted here that the temperature of a peak of the largest melting endothermic curve may be adopted as the melting point (Tm) of the PO microporous membrane.

[Density (g/cm$^3$)]

The density of a sample was measured by a density gradient column method (23°C) in accordance with JIS K7112:1999.

[Basis Weight (g/m$^2$)]

The term "basis weight" used herein refers to the weight (g) of a polyolefin microporous membrane per unit area (1 m$^2$). The polyolefin microporous membrane was sampled at a size of 1 m × 1 m, and the weight thereof was subsequently measured using an electronic scale (AUW120D) manufactured by Shimadzu Corporation. When the polyolefin microporous membrane could not be sampled at a size of 1 m × 1 m, a piece having an appropriate area was cut out from the polyolefin microporous membrane, and the weight of this piece was measured and then converted into the weight (g) per unit area (1 m$^2$).

[Average Thickness (μm) of (Pre-compression) Microporous Membrane]

The thickness was measured at an ambient temperature of 23 ± 2°C using a microthickness meter (Type KBN, probe diameter: Φ5 mm) manufactured by Toyo Seiki Seisaku-sho, Ltd. In this thickness measurement, a microporous membrane was sampled into 10 cm × 10 cm pieces, and several of these pieces were laminated to a total thickness of 15 μm or more, after which the thickness was measured at 9 spots, and a value obtained by dividing the average of the thus measured values by the number of laminated pieces was defined as the thickness of a single microporous membrane.

[Thickness ($\mu$m) of (Pre-compression) Multilayer Porous Membrane and Coating Layer]

The thickness of a multilayer porous membrane was measured at room temperature (23 $\pm$ 2°C) using a microthickness meter "KBM (trademark)" manufactured by Toyo Seiki Seisaku-sho, Ltd., and the thickness of a coating layer was calculated from the average thickness of the (pre-compression) microporous membrane and the average thickness of the (pre-compression) multilayer porous membrane. From the standpoint of detection from the multilayer porous membrane, it is also possible to use a cross-sectional SEM image to measure the thickness of each layer.

[(Pre-compression) Porosity (%)]

A 3 cm $\times$ 3 cm, 1 cm $\times$ 1 cm, 5 cm $\times$ 5 cm, or 10 cm $\times$ 10 cm square sample was cut out from a polyolefin microporous membrane, and the volume (cm$^3$) and the mass (g) of the sample were determined from the results of the above-described thickness measurement. The (pre-compression) porosity was calculated from the thus obtained values and the density (g/cm$^3$) using the following equation:

$$\text{Porosity (\%)} = (\text{Volume - Mass/Density of mixed composition})/\text{Volume} \times 100$$

It is noted here that, as the density of a mixed composition, a value calculated from the density and the mixing ratio of each of the polyolefin resin and other components that were used in the mixed composition was used.
Further, the (pre-compression) porosity of a multilayer porous membrane can be calculated by the following equation:

$$\text{Porosity of multilayer porous membrane} = (\text{Porosity of polyolefin resin microporous membrane used as substrate}) \times (\text{Average thickness of polyolefin resin microporous membrane used as substrate}) \div (\text{Thickness of whole multilayer porous membrane}) + (\text{Porosity of coating layer}) \times (\text{Thickness of coating layer}) \div (\text{Thickness of whole multilayer porous membrane})$$

In this case, the porosity of a multilayer porous membrane was calculated, assuming that the porosity of a coating layer was 50%. When the porosity of the coating layer is not 50%, as required, the porosity of the coating layer can be calculated using the above-described equation in the same manner as the porosity of a polyolefin microporous membrane. Specifically, the thickness of the coating layer is measured by direct observation under an SEM or determined from the change in membrane thickness before and after coating, and the volume of a coating layer sample having a specific area is determined, after which the porosity of the coating layer is calculated using the mass-average density of coating components that is calculated from the material ratio of the constituents of the coating layer.

[Post-compression Porosity (%)]

A 0.8 mm-thick buffer material made of rubber, a 0.1 mm-thick PET film, two microporous membranes, the PET film, and the buffer material were laminated in the order mentioned, and the thus obtained laminate was left to stand, after which a compression test was conducted by applying a pressure to the surface of the buffer material on one side of the laminate. This compression test was conducted using a press machine under the following conditions: temperature = 70°C, pressure = 8 MPa, compression time = 3 minutes. As required, the compression rate was measured after pressing and relaxation. The measurement of the compression rate was performed in a period between 2 hours and 24 hours after pressing and relaxation. The post-compression porosity (%) was measured in the same manner as the above-described "(pre-compression) porosity (%)", except that the laminate was pressed and relaxed after the compression test, and the microporous membranes were taken out of the laminate and used as samples after the compression test.

[(Pre-compression) Air Permeability Version 1 (sec/100 cm$^3$)]

The air permeability was measured using an Oken-type air permeability tester "EGO2" manufactured by Asahi Seiko Co., Ltd.

A measurement value of the air permeability is a value obtained by measuring the air permeability at a total of three spots along the membrane width direction, which spots consisted of spots at 5 cm from the respective ends and a central spot, and calculating the average of the thus measured values.

[(Pre-compression) Air Permeability Version 2 (sec/100 cm$^3$)]

The air permeability was measured using an Oken-type air permeability tester "EGO2" manufactured by Asahi Seiko Co., Ltd.

A measurement value of the air permeability is a value obtained by measuring the air permeability at a total of three spots along the membrane width direction (TD), which spots consisted of two spots at 10% of a full width from the respective ends inward to the center and one central spot, and calculating the average of the thus measured values.

[Compression-Press Test]

A 0.8 mm-thick buffer material made of rubber, a 0.1 mm-thick PET film, two microporous membranes, the PET film, and the buffer material were laminated in the order mentioned, and the thus obtained laminate was left to stand, after which a compression test was conducted by applying a pressure to the surface of the buffer material on one side of the laminate. The microporous membranes used in this test had a 5 cm × 5 cm square shape, and the average membrane thickness (9-point average), the basis weight, and the air permeability (according to the Version 2 measurement method) of the microporous membranes were measured before the use in the press test. In addition, the porosity prior to the compression-press test was calculated from the thus measured basis weight and average membrane thickness.

The compression test was conducted using a press machine at a temperature of 30°C for a compression time of 3 minutes with a pressure of 2.5 MPa, 5 MPa, 7.5 MPa, and 10 MPa. The microporous membranes were taken out of the laminate one hour after unloading of the pressure, and the post-compression average membrane thickness (9-point average) and the post-compression air permeability were measured. Further, the post-compression porosity was calculated from the thus measured basis weight and post-compression average membrane thickness.

Lastly, from the values measured at four spots compressed with the above-described four different pressures, the approximation curve shown in FIG. 1 was prepared by power approximation for the post-compression porosity and the post-compression air permeability.

[Compression TMA]

A TMA (Thermo-Mechanical Analyzer) SS6100 manufactured by Hitachi High-Tech Corporation was used for the measurement. As a probe for applying a load to a sample, a 0.5-mmΦ probe made of quartz was used.

Sixteen 1 cm × 1 cm square pieces of a microporous membrane for which the basis weight and the thickness have been measured and the porosity has been calculated are prepared and laminated in the thickness direction to obtain a laminate. This laminate is set on a sample stage, and an initial load of 0.06 MPa is applied thereto. After a lapse of 1 minute, another load is applied in the thickness direction at a rate of 6 MPa/min and, once the load reaches 3 MPa, the load of 3 MPa is maintained for 3 minutes. The membrane thickness after this 3-minute period is defined as the membrane thickness in a pressurized state of 3 MPa *(in situ)*.

[Porosity at Room Temperature in Pressurized State of 3 MPa (*in situ*)]

In the above-described compression TMA test, the porosity in the very state where a load of 3 MPa is being applied *(in situ)* is calculated from the thickness measured in the very state where a load of 3 MPa is being applied *(in situ)* and the basis weight measured prior to the TMA measurement. This calculation is performed based on the result of the above-described measurement of the thickness in the very state where a load of 3 MPa is being applied *(in situ)*, using the same equation as the one used for the above-described calculation of the (pre-compression) porosity (%).

[Air Permeability at Room Temperature in Pressurized State of 3 MPa (*in situ*)]

The thus obtained value of the porosity at room temperature in a pressurized state of 3 MPa *(in situ)* was input to the approximation curve relating to the post-compression porosity and the post-compression air permeability, which was prepared in the above-described press test, and the value of the air permeability at room temperature in a pressurized state of 3 MPa *(in situ)* was calculated.

[Difference between Maximum Value and Minimum Value of Air Permeability Measured at Three Spots (Consisting of Two Spots at 10% of Full Width from Respective Ends inward to Center and One Central Spot) along TD]

Using an Oken-type air permeability tester manufactured by Asahi Seiko Co., Ltd. (diameter of measuring part: 30 mmφ), the air permeability was measured at a total of three spots which, defining the left end and the light end of the membrane as 0% and 100%, respectively, consisted of a center point at a position of 50%, a spot at 10% from the left end on the center side (at a 10% position), and a spot at 10% from the right end on the center side (at a 90% position), and the difference R between the largest and the smallest values obtained at these three spots was determined.

In accordance with the width of a sample to be measured, specifically when the sample width is 150 mm or less, the air permeability distribution in the width direction is measured in the same manner using a nozzle having a measuring part diameter of 13 mmφ.

[Heat Shrinkage (%) at 120°C in 1 Hour]

As a sample, a porous membrane was cut into a piece having a pre-heating length (mm) of 100 mm in the MD and 100 mm in the TD, 50 mm in the MD and 50 mm in the TD, or 30 mm in the MD and 30 mm in the TD, and the thus obtained sample was left to stand in an oven at 120°C for 1 hour. In this process, the sample was sandwiched by 10 sheets of paper such that the sample was not directly exposed to hot air. The sample was subsequently taken out of the oven and cooled, after which the length was measured as post-heating length (mm), and the heat shrinkage was calculated using the following equation. The calculation was performed in each of the MD and the TD, and a larger value was defined as the heat shrinkage.

$$\text{Heat shrinkage (\%)} = \{(\text{Pre-heating length} - \text{Post-heating length})/\text{Pre-heating length}\} \times 100$$

[Puncture Strength and Basis Weight-Converted Puncture Strength]

Using a handy compression tester KES-G5 (trademark) manufactured by Kato Tech Co., Ltd., a microporous membrane was immobilized on a sample holder having an opening of 11.3 mm in diameter. Subsequently, a puncture test was conducted on a center portion of the immobilized microporous membrane using a needle with a tip having a radius of curvature of 0.5 mm at a puncture rate of 2 mm/sec in an atmosphere having a room temperature of 23°C and a humidity of 40%, whereby the puncture strength (gf) was measured in terms of maximum puncture load. A measurement value of this puncture test is a value obtained by measuring the puncture strength at a total of three spots along the membrane width direction (TD), which spots consisted of two spots at 10% of a full width from the respective ends inward to the center and one central spot, and calculating the average of the thus measured values.

The basis weight-converted puncture strength was calculated by the following equation:

$$\text{Basis weight-converted puncture strength } [\text{gf/(g/m}^2)] = \text{Puncture strength } [\text{gf}]/\text{Basis weight } [\text{g/m}^2]$$

It is noted here that, with regard to the puncture strength and the basis weight-converted puncture strength of a multilayer porous membrane in which at least one layer was arranged on a polyolefin microporous membrane substrate, from the standpoint of evaluating the resin strength and the strength per basis weight, these properties were evaluated in terms of the puncture strength and the basis weight-converted puncture strength of the polyolefin microporous membrane substrate.

[Pore Size (nm): Half-dry]

In accordance with a half-dry method, the average pore size (nm) was measured using a perm-porometer (CFP-1500AE, manufactured by Porous Materials, Inc.). As an immersion liquid, perfluoropolyester manufactured by Porous Materials, Inc. (trade name "GALWICK", surface tension = 15.6 dyn/cm) was used. The applied pressure and the air permeation amount were measured for a dry curve and a wet curve and, from the pressure PHD (Pa) at which one-half of the thus obtained dry curve intersected with the wet curve, the average pore size dHD (nm) was calculated by the following equation and defined as the pore size:

$$dHD = 2,860 \times \gamma/PHD$$

[Fuse (Shutdown) Temperature]

Two sheets of 10 $\mu$m-thick Ni foil (A and B) were prepared, and the Ni foil A was masked with a TEFLON (registered trademark) tape such that a rectangular portion of 15 mm in length and 10 mm in width was left unmasked, while a separator as a measurement sample was placed on the other Ni foil B and both ends of this separator were immobilized by a TEFLON (registered trademark) tape. This Ni foil B was immersed in a 1-mol/L electrolytic solution of lithium borofluoride (solvent: a mixed solvent of propylene carbonate/ethylene carbonate/$\gamma$-butyl lactone = 1/1/2 (volume ratio)) to impregnate the separator with the electrolytic solution, after which the Ni-foil sheets (A and B) were pasted together and held from both sides with two glass plates and a clip. A Ni foil electrode produced in this manner was placed in a 25°C oven and heated to 200°C at a rate of 2°C/min. In this process, the change in impedance was measured using an electrical resistance analyzer "AG-4311" (manufactured by Ando Electric Co., Ltd.) under the conditions of 1 V and 1 kHz. In this measurement, the temperature at which the impedance value reached 1,000 $\Omega$ was defined as the fuse (shutdown) temperature (°C).

[Measurement of (Pre-compression) Withstand Voltage per Basis Weight]

A widthwise central portion of a polyolefin microporous membrane was cut out in a size of 10 cm in the MD and 10 cm in the TD, sandwiched by aluminum plates of 5 mm in diameter, and measured using a withstand voltage tester (TOS9201) manufactured by Kikusui Electronics Corporation. As for the measurement conditions, the application of direct-current voltage was started from an initial voltage of 0 V and increased at a rate of 100 V/sec, and the voltage value (kV) at which the current value reached 0.2 mA was defined as the measured withstand voltage value of the microporous membrane. The measurement was performed at 15-mm intervals for a total of 25 spots (5 spots in the MD $\times$ 5 spots in the TD), and an average of the measured values was calculated as the withstand voltage. As the withstand voltage per basis weight, the ratio of the withstand voltage with respect to the basis weight (withstand voltage/basis weight) was calculated.

[Analysis of Crystal Structure]

With regard to the crystal long period in a polyolefin microporous membrane, small-angle X-ray scattering measurement was performed in accordance with a transmission method using NANOPIX manufactured by Rigaku Corporation. A sample was irradiated with CuK$\alpha$ radiation, and scattering was detected using a semiconductor detector HyPix-6000. The measurement was performed at a sample-detector distance of 1,312 mm under the output conditions of 40 kV and 30 mA. A point-focus optical system was employed, and the slit conditions were set as follows: 1st slit: $\varphi$ = 0.55 mm, 2nd slit: open, guard slit: $\varphi$ = 0.35 mm. It is noted here that the sample was set such that the sample surface and the X-ray incident direction were perpendicular to each other.

Further, with regard to the polyethylene MDND plane (110) crystallite size in a polyolefin microporous membrane, wide-angle X-ray scattering measurement was performed in accordance with a transmission method using NANOPIX manufactured by Rigaku Corporation. A sample was irradiated with CuK$\alpha$ radiation, and scattering was detected using an imaging plate. The measurement was performed at a sample-detector distance of 110 mm under the output conditions of 40 kV and 30 mA. A point-focus optical system was employed, and the slit conditions were set as follows: 1st slit: $\varphi$ = 1.2 mm, guard slit: $\varphi$ = 0.35 mm. It is noted here that the sample was set such that the sample surface and the X-ray incident direction formed an angle of 11.0°. In this case, the X-ray incident direction and the MD of the sample were arranged perpendicular to each other.

(Crystal Long Period [nm])

For the X-ray scattering pattern obtained from HyPix-6000, an SAXS profile I(q) was obtained by circular averaging. In the linear-linear plot of the thus obtained one-dimensional profile I(q), a straight baseline was drawn in a range of 0.1 nm$^{-1}$ < q < 0.6 nm$^{-1}$ and fitted with the Gaussian function. Taking the position of maximum intensity as the position $q_m$ of a crystal long period-derived peak, the crystal long period was calculated by the following equation (4):

$$d = 2\pi/q_m \qquad (4)$$

f wherein,

d (nm): crystal long period, and

$q_m$ (mm$^{-1}$): position of lamella-derived peak in SAXS profile}

(Crystallite Size)

In the above-obtained XRD profile, peaks in a range of $2\theta = 10.0°$ to $2\theta = 30.0°$ were separated into an orthorhombic (110) plane diffraction peak, an orthorhombic (200) plane diffraction peak, and a noncrystalline peak, and the crystallite size was calculated from the full-width at half maximum of the (110) plane diffraction peak in accordance with the below-described Scherrer equation (1). The (110) plane diffraction peak and the (200) plane diffraction peak were approximated by the Voigt function, and the noncrystalline peak was approximated by the Gaussian function. It is noted here that the position and the full-width at half maximum of the noncrystalline peak was fixed at $2\theta = 19.6°$ and 6.3°, respectively, while those of the crystal peaks were not particularly fixed to perform the peak separation. From the full-width at half maximum of the (110) plane diffraction peak that was determined by the peak separation, the crystallite size was calculated by the following Scherrer equation (1):

$$D(110) = K\lambda/(\beta\cos\theta) \quad (1)$$

{wherein,

D(110): crystallite size (nm),
K: 0.9 (constant),
$\lambda$: X-ray wavelength (nm),
$\beta(\beta1^2-\beta2^2)^{0.5}$,
$\beta_1$: full-width at half maximum (rad) of (hkl) peak calculated as result of peak separation,
$\beta_2$: full-width at half maximum (rad) of spread of incoming beam, and
$\theta$: Bragg angle}

[Tensile Strength at Break (MPa), MD/TD ratio of Tensile Strength at Break, Tensile Elongation at Break (%), MD/TD ratio of Tensile Elongation at Break]

In accordance with JIS K7127, MD and TD samples (shape: 10 mm in width $\times$ 100 mm in length) were measured using a tensile tester AUTOGRAPH AG-A (trademark) manufactured by Shimadzu Corporation. The chuck distance of the tensile tester was set at 50 mm, and a CELLOPHANE (registered trademark) tape (trade name: N.29, manufactured by Nitto Denko Corporation) was attached to both end portions (25 mm each) of each sample on either surface. Further, in order to prevent the samples from slipping during the test, a 1 mm-thick fluororubber was attached to the inside of the chucks of the tensile tester.

The measurement was performed at a temperature of $23 \pm 2°C$, a chuck pressure of 0.40 MPa, and a tensile speed of 100 mm/min.

The tensile strength at break (MPa) was calculated by dividing the strength of a polyolefin microporous membrane at break by the pre-test sample cross-sectional area. Further, the elongation of the polyolefin microporous membrane at break was defined as the tensile elongation at break (%).

The tensile strength at break was determined for each of the MD and the TD, and the ratio of the MD tensile strength at break and the TD tensile strength at break (MD/TD ratio of tensile strength at break) was also calculated. In the same manner, the tensile elongation at break was determined for each of the MD and the TD, and the ratio of the MD tensile elongation at break and the TD tensile elongation at break (MD/TD ratio of tensile elongation at break) was calculated as well.

[Tensile Elastic Modulus (MPa) in MD and TD, and MD/TD Ratio of Tensile Elastic Modulus]

For measurement in the MD and the TD, an MD sample (120 mm in MD $\times$ 10 mm in TD) and a TD sample (10 mm in MD $\times$ 120 mm in TD) were cut out. In accordance with JIS K7127, the tensile elastic moduli of the MD and TD samples were measured at an ambient temperature of $23 \pm 2°C$ and a humidity of $40 \pm 2\%$ using a tensile tester AUTOGRAPH AG-A (trademark) manufactured by Shimadzu Corporation. Each sample was set at a chuck distance of 50 mm, and stretched at a tensile speed of 200 mm/min until the chuck distance was increased to 60 mm, i.e., until the strain reached 20.0%. The tensile elastic modulus (MPa) was determined from the slope of the resulting stress-strain curve in a strain range of 1.0% to 4.0%.

The tensile elastic modulus was determined for each of the MD and the TD, and the ratio of the MD tensile elastic modulus and the TD tensile elastic modulus (MD/TD ratio of tensile elastic modulus) was calculated as well.

<Smoothness (sec/10 cm$^3$)>

In accordance with ISO 8791-5:2020, using an air permeability-smoothness tester EYO-5 manufactured by Asahi Seiko Co., Ltd. along with a stainless steel nozzle having an inner diameter of 0.15 mm and a length of 50 mm, the smoothness of a polyolefin microporous membrane was measured in an atmosphere having a temperature of 30°C and a humidity of 40%. The surface smoothness was measured for each surface of the polyolefin microporous membrane, and the average value of the smoothness was calculated for each surface in the above-described manner.

[Battery Test]

a. Production of Positive Electrode

Lithium-cobalt composite oxide LiCoO$_2$ as a positive electrode active material, as well as graphite and acetylene black as conductive materials were dissolved in polyvinylidene fluoride (PVDF) as a binder and N-methylpyrrolidone (NMP) to prepare a slurry. This slurry was applied to a 15 $\mu$m-thick aluminum foil as a positive electrode current collector using a die coater and subsequently dried at 130°C for 3 minutes, after which the resultant was compression-molded using a roll press. The thus obtained molded body was slit to a width of 57.0 mm, whereby a positive electrode was obtained.

b. Production of Negative Electrode

Artificial graphite as a negative electrode active material, as well as ammonium salt of carboxymethyl cellulose and a styrene-butadiene copolymer latex as binders were dissolved in purified water to prepare a slurry. This slurry was applied to a copper foil as a negative electrode current collector using a die coater and subsequently dried at 120°C for 3 minutes, after which the resultant was compression-molded using a roll press. The thus obtained molded body was slit to a width of 58.5 mm, whereby a negative electrode was obtained.

c. Preparation of Nonaqueous Electrolyte Solution

In a mixed solvent of ethylene carbonate: dimethyl carbonate: ethyl methyl carbonate = 1:1:2 (volume ratio), LiPF$_6$ was dissolved as a solute to a concentration of 1 mol/L, whereby a nonaqueous electrolyte solution was prepared.

d. Battery Assembly

The positive electrode, a porous membrane obtained in an Example or a Comparative Example, and the negative electrode were wound, and a wound electrode body was subsequently produced by a conventional method and pressed using a press machine such that the wound electrode body would be fitted into an outer casing. The number of windings was adjusted based on the thickness of the polyolefin microporous membrane and the degree of spring-back. An outermost peripheral end of the thus obtained wound electrode body was immobilized by pasting thereto an insulating tape. A negative electrode lead and a positive electrode lead were welded to a battery can and a safety valve, respectively, and the wound electrode body was inserted into the battery can. Thereafter, 5 g of the nonaqueous electrolyte solution was injected into the battery can, and a lid was caulked on the battery can via a gasket, whereby a prismatic secondary battery having a width of 42.0 mm, a height of 63.0 mm, and a thickness of 10.5 mm was obtained. This prismatic secondary battery was charged in a 25°C atmosphere for a total of 3 hours by a method in which the battery was charged to a battery voltage of 4.2 V at a current value of 0.2 C (current of 0.2 times the hourly rated capacity (1 C)) and the current value was subsequently started to be reduced in such a manner that a battery voltage of 4.2 V was maintained. Thereafter, the battery was discharged to a battery voltage of 3.0 V at a current value of 0.2 C.

e. Output Characteristic Test (25°C)

For a prismatic secondary battery that was assembled in the same manner as in the above-described d. and selected for evaluation, a total of 3 hours of charging was performed in a 25°C environment by charging the battery at a constant current of 1 C and, after the battery voltage reached 4.2 V, further charging the battery at a constant voltage of 4.2 V. For the thus charged battery, the 1 C discharge capacity and the 5 C discharge capacity to a discharge final voltage of 3 V were measured under a constant-temperature condition in a 25°C atmosphere, and the value of 5 C capacity/1 C capacity was calculated as an output characteristic value. This output characteristic value was evaluated based on the following criteria.

A: The output characteristic value was 0.95 or larger.
B: The output characteristic value was 0.90 or larger but less than 0.95.
C: The output characteristic value was 0.85 or larger but less than 0.90.
D: The output characteristic value was 0.80 or larger but less than 0.85.
E: The output characteristic value was less than 0.80.

f. Cycle Test (25°C)

A prismatic secondary battery that was assembled in the same manner as in the above-described d. and selected for evaluation was charged and discharged for a total of 100 times under the cycle conditions of: (i) a total of 3 hours of constant-current constant-voltage charging to an upper limit voltage of 4.2 V at a current of 0.5 C; (ii) 10-minute rest; (iii) constant-current discharging to a final voltage of 3.0 V at a current of 0.5 C; and (iv) 10-minute rest. These charging and discharging operations were all performed in a 25°C atmosphere. Thereafter, the capacity retention rate (%) was determined by multiplying the ratio of the discharge capacity in the 100th cycle with respect to the initial battery capacity X (mAh) by 100. The capacity retention rate was evaluated based on the following criteria.

A: The capacity retention rate (%) was 90% or higher.
B: The capacity retention rate (%) was 88% or higher but lower than 90%.
C: The capacity retention rate (%) was 84% or higher but lower than 88%.
D: The capacity retention rate (%) was 80% or higher but lower than 84%.
E: The capacity retention rate (%) was lower than 80%.

g. Rate Characteristic Test (Charging and Discharging at 30°C under Pressure of 3 MPa)

For a prismatic secondary battery that was assembled in the same manner as in the above-described d. and selected for evaluation, charging was performed in a total of 3 hours in a 30°C environment in a pressurized state of 3 MPa by charging the battery at a constant current of 1 C and, after the battery voltage reached 4.2 V, further charging the battery at a constant voltage of 4.2 V. For the thus charged battery, the 1 C discharge capacity and the 5 C discharge capacity to a discharge final voltage of 3 V were measured under a constant-temperature condition in a 30°C atmosphere, and the 5 C capacity/1 C capacity ratio was calculated as an output characteristic value. The rate characteristic was evaluated based on the following criteria.

A: The output characteristic value was 90% or higher.
B: The output characteristic value was 80% or higher but lower than 90%.
C: The output characteristic value was 70% or higher but lower than 80%.
D: The output characteristic value was higher than 50% but lower than 70%.
E: The output characteristic value was 50% or lower.

h. Cycle Test (Charging and Discharging at 30°C under Pressure of 3 MPa)

A prismatic secondary battery that was assembled in the same manner as in the above-described d. and selected for evaluation was charged and discharged in a 30°C environment in a pressurized state of 3 MPa for a total of 100 times under the cycle conditions of: (i) a total of 3 hours of constant-current constant-voltage charging to an upper limit voltage of 4.2 V at a current of 0.5 C; (ii) 10-minute rest; (iii) constant-current discharging to a final voltage of 3.0 V at a current of 0.5 C; and (iv) 10-minute rest. These charging and discharging operations were all performed in a 30°C atmosphere. Thereafter, the capacity retention rate (%) was determined by multiplying the ratio of the discharge capacity in the 100th cycle with respect to the initial battery capacity X (mAh) by 100. The capacity retention rate was evaluated based on the following criteria.

A: The capacity retention rate (%) was 90% or higher.
B: The capacity retention rate (%) was 80% or higher but lower than 90%.
C: The capacity retention rate (%) was 70% or higher but lower than 80%.
D: The capacity retention rate (%) was higher than 50% but lower than 70%.
E: The capacity retention rate (%) was 50% or lower.

i. Nail Penetration Safety Test

A battery that was assembled in the same manner as in the above-described d. and selected for evaluation was placed on an iron plate inside a temperature-controllable explosion-proof booth. An iron nail having a diameter of 3.0 mm was prepared, and a thermocouple was arranged inside the nail. In a 30°C environment in a pressurized state of 3 MPa inside the explosion-proof booth, the iron nail was penetrated through a central portion of the battery at a rate of 2 mm/sec and maintained in this state. The battery was observed from the start to the completion of the nail penetration, and the safety was evaluated based on the following criteria.

A: Nothing happened.
B: The battery emitted smoke.
C: Cell swelling and deformation were observed.
D: The battery was ignited.
E: The battery exploded.

[Example 1]

(A) As shown in Table 1, a raw material resin composition was obtained by adjusting the ratio of a polyethylene (PE) having an Mv of 700,000 or more. The Mv of the thus obtained raw material resin composition was 900,000. Next, a polyolefin composition was obtained by blending the raw material resin composition with a liquid paraffin and 0.1% by weight of an antioxidant such that the resin content ratio (PC) was as shown in Table 1. Then, this polyolefin composition was introduced to a twin-screw extruder and extruded in a molten state to form a gel-like sheet, which was subsequently cooled and solidified on a casting roll.
(B) Using a simultaneous biaxial stretching machine, the thus cooled and solidified sheet was biaxially stretched under the conditions shown in Table 1 to obtain a stretched sheet.
(C) Thereafter, this stretched sheet was immersed in methylene chloride to extract and remove the liquid paraffin, and subsequently porosified by drying.
(D) Further, using a uniaxial stretching machine, the thus obtained porosified sheet was heat-set under the conditions shown in Table 1, whereby a polyolefin microporous membrane was obtained. The thus obtained polyolefin microporous membrane had a total stretching ratio of 67. The polyolefin microporous membrane was evaluated in accordance with the above-described methods, and a battery equipped with the polyolefin microporous membrane was evaluated as well. The evaluation results are shown in Table 3.

[Examples 2 to 23 and Comparative Examples 1 to 7]

Polyolefin microporous membranes were obtained and evaluated in the same manner as in Example 1, except that the respective resin raw materials and production conditions shown in Tables 1 and 2 were used. The evaluation results are shown in Tables 3 and 4 below.

[Table 1-1]

| | | | Example 1 | Example 2 | Example 3 | Example 4 | Example 5 | Example 6 | Example 7 | Example 8 |
|---|---|---|---|---|---|---|---|---|---|---|
| Raw material composition | PE having Mv of 700,000 or more | % by weight | 100 | 100 | 100 | 100 | 70 | 70 | 100 | 100 |
| | PE average molecular weight | ×10,000 | 90 | 70 | 90 | 82 | 82.5 | 82.5 | 70 | 70 |
| | PP | % by weight | 0 | 0 | 0 | 0 | 0 | 0 | 0 | 0 |
| Extrusion | Plasticizer | % by weight | 74 | 73 | 74 | 75 | 75 | 75 | 73 | 73 |

| | | | Example 1 | Example 2 | Example 3 | Example 4 | Example 5 | Example 6 | Example 7 | Example 8 |
|---|---|---|---|---|---|---|---|---|---|---|
| Biaxial stretching | Preheating temperature | °C | 129 | 129 | 129 | 128 | 128 | 128 | 127 | 130 |
| | Preheating coefficient | °C × m | 197,370 | 197,370 | 197,370 | 195,840 | 195,840 | 195,840 | 272,034 | 198,135 |
| | Longitudinal stretching ratio | times | 7 | 7 | 7 | 7 | 7 | 7 | 7 | 7 |
| | Longitudinal stretching temperature | °C | 129.0 | 129.0 | 129.0 | 126.0 | 126.0 | 126.0 | 127.0 | 129.5 |
| | Transverse stretching ratio | times | 6.4 | 6.4 | 6.4 | 6.4 | 6.4 | 6.4 | 6.4 | 6.4 |
| | Transverse stretching temperature | °C | 129.0 | 129.0 | 129.0 | 126.0 | 126.0 | 126.0 | 127.0 | 129.5 |
| | Stretching coefficient | °C × m | 34,017 | 34,017 | 34,017 | 33,226 | 33,226 | 33,226 | 44,653 | 34,149 |
| | Preheating coefficient/ Stretching coefficient | - | 5.80 | 5.80 | 5.80 | 5.89 | 5.89 | 5.89 | 6.09 | 5.80 |
| | Stretching method | - | simultaneous, biaxial | simultaneous, biaxial | simultaneous, biaxial | simultaneous, biaxial | simultaneous, biaxial | simultaneous, biaxial | simultaneous, biaxial | simultaneous, biaxial |
| Heat setting | Transverse stretching temperature | °C | 130 | 115 | 125 | 130 | 125 | 125 | 120 | 115 |
| | Heat setting ratio | times | 1.50 | 1.70 | 1.50 | 1.75 | 1.60 | 1.65 | 1.50 | 1.50 |
| | Heat setting temperature | °C | 137 | 135 | 136 | 137 | 136 | 135 | 134 | 135 |

|  |  | Example 1 | Example 2 | Example 3 | Example 4 | Example 5 | Example 6 | Example 7 | Example 8 |
|---|---|---|---|---|---|---|---|---|---|
| Total stretching ratio | times | 67 | 76 | 67 | 78 | 71 | 74 | 67 | 67 |

[Table 1-2]

| | | | Example 9 | Example 10 | Example 11 | Example 12 | Example 13 | Example 14 | Example 15 | Example 16 |
|---|---|---|---|---|---|---|---|---|---|---|
| Raw material composition | PE having Mv of 700,000 or more | % by weight | 100 | 100 | 70 | 100 | 93 | 93 | 100 | 93 |
| | PE average molecular weight | ×10,000 | 83 | 80 | 82.5 | 80 | 90 | 90 | 70 | 70 |
| | PP | % by weight | 0 | 0 | 0 | 0 | 7 | 7 | 0 | 7 |
| Extrusion | Plasticizer | % by weight | 75 | 75 | 75 | 75 | 76 | 76 | 73 | 72 |

| | | | Example 9 | Example 10 | Example 11 | Example 12 | Example 13 | Example 14 | Example 15 | Example 16 |
|---|---|---|---|---|---|---|---|---|---|---|
| Biaxial stretching | Preheating temperature | °C | 128 | 129 | 128 | 129 | 122 | 122 | 125 | 124 |
| | Preheating coefficient | °C × m | 195,840 | 197,370 | 195,840 | 197,370 | 186,660 | 186,660 | 257,452 | 235,430 |
| | Longitudinal stretching ratio | times | 7 | 7 | 7 | 7 | 7 | 7 | 7 | 7 |
| | Longitudinal stretching temperature | °C | 127.5 | 128.5 | 128.0 | 128.5 | 122.0 | 122.0 | 124.8 | 124.8 |
| | Transverse stretching ratio | times | 6.4 | 6.4 | 6.4 | 6.4 | 6.4 | 6.4 | 6.4 | 6.4 |
| | Transverse stretching temperature | °C | 127.5 | 128.5 | 128.0 | 128.5 | 122.0 | 122.0 | 124.8 | 124.8 |
| | Stretching coefficient | °C × m | 33,622 | 33,885 | 33,754 | 33,885 | 32,171 | 32,171 | 42,120 | 33,920 |
| | Preheating coefficient/ Stretching coefficient | - | 5.82 | 5.82 | 5.80 | 5.82 | 5.80 | 5.80 | 6.11 | 6.94 |
| | Stretching method | - | simultaneous, biaxial | simultaneous, biaxial | simultaneous, biaxial | simultaneous, biaxial | simultaneous, biaxial | simultaneous, biaxial | simultaneous, biaxial | simultaneous, biaxial |
| Heat setting | Transverse stretching temperature | °C | 115 | 115 | 130 | 115 | 125 | 125 | 121 | 120 |
| | Heat setting ratio | times | 1.45 | 1.55 | 1.50 | 1.55 | 1.50 | 1.45 | 1.54 | 1.50 |
| | Heat setting temperature | °C | 135 | 136 | 135 | 137 | 132 | 124 | 135 | 134 |

(continued)

| | | Example 9 | Example 10 | Example 11 | Example 12 | Example 13 | Example 14 | Example 15 | Example 16 |
|---|---|---|---|---|---|---|---|---|---|
| Total stretching ratio | times | 65 | 69 | 67 | 69 | 67 | 65 | 69 | 67 |

[Table 1-3]

| | | | Example 17 | Example 18 | Example 19 | Example 20 | Example 21 | Example 22 | Example 23 |
|---|---|---|---|---|---|---|---|---|---|
| Raw material composition | PE having Mv of 700,000 or more | % by weight | 93 | 100 | 93 | 30 | 30 | 70 | 93 |
| | PE average molecular weight | x10,000 | 70 | 70 | 70 | 48 | 42 | 72 | 70 |
| | PP | % by weight | 7 | 0 | 7 | 0 | 0 | 0 | 7 |
| Extrusion | Plasticizer | % by weight | 72 | 73 | 72 | 70 | 72 | 74 | 74 |
| Biaxial stretching | Preheating temperature | °C | 125 | 127 | 126 | 127 | 126 | 129 | 122 |
| | Preheating coefficient | °C × m | 231,895 | 276,493 | 231,226 | 194,310 | 192,780 | 197,370 | 169,575 |
| | Longitudinal stretching ratio | times | 7 | 7 | 7 | 7 | 7 | 7 | 7 |
| | Longitudinal stretching temperature | °C | 124.5 | 126.5 | 126.2 | 128.0 | 126.0 | 129.0 | 122.0 |
| | Transverse stretching ratio | times | 6.4 | 6.4 | 6.4 | 6.4 | 6.4 | 6.4 | 6.4 |
| | Transverse stretching temperature | °C | 124.5 | 126.5 | 126.2 | 128.0 | 126.0 | 129.0 | 122.0 |
| | Stretching coefficient | °C × m | 38,000 | 45,308 | 37,860 | 33,696 | 33,170 | 33,959 | 21,864 |
| | Preheating coefficient/ Stretching coefficient | - | 6.10 | 6.10 | 6.11 | 5.77 | 5.81 | 5.81 | 7.76 |
| | Stretching method | - | simultaneous, biaxial | simultaneous, biaxial | simultaneous, biaxial | simultaneous, biaxial | simultaneous, biaxial | simultaneous, biaxial | simultaneous, biaxial |

(continued)

| | | | Example 17 | Example 18 | Example 19 | Example 20 | Example 21 | Example 22 | Example 23 |
|---|---|---|---|---|---|---|---|---|---|
| Heat setting | Transverse stretching temperature | °C | 115 | 124 | 120 | 131 | 131 | 133 | 130 |
| | Heat setting ratio | times | 1.50 | 1.51 | 1.50 | 1.75 | 1.70 | 1.67 | 1.60 |
| | Heat setting temperature | °C | 136 | 134 | 135 | 131 | 131 | 133 | 133 |
| Total stretching ratio | | times | 67 | 67 | 67 | 78 | 76 | 75 | 72 |

[Table 2]

| | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| Raw material composition | PE having Mv of 700,000 or more | % by weight | 47 | 47.5 | 47 | 70 | 60 | 40 | 30 |
| | PE average molecular weight | x10,000 | 48 | 48 | 48 | 55 | 64 | 123 | 99 |
| | PP | % by weight | 7 | 5 | 7 | 7 | 0 | 0 | 0 |
| Extrusion | Plasticizer | % by weight | 68 | 67 | 66 | 71 | 48 | 77 | 70 |
| Biaxial stretching | Preheating temperature | °C | 120 | 124 | 119 | 124 | 120 | 115 | 117 |
| | Preheating coefficient | °C × m | 108,362 | 212,963 | 115,538 | 169,703 | 116,509 | 111,655 | 113,596 |
| | Longitudinal stretching ratio | times | 7 | 7 | 7 | 7 | 6 | 5 | 8 |
| | Longitudinal stretching temperature | °C | 119.3 | 122.0 | 119.0 | 123.8 | 120.0 | 115.0 | 117.0 |
| | Transverse stretching ratio | times | 6.4 | 6.4 | 6.4 | 6.4 | 2 | 5 | 8 |
| | Transverse stretching temperature | °C | 119.3 | 122.0 | 119.0 | 123.8 | 120.0 | 115.0 | 117.0 |
| | Stretching coefficient | °C × m | 32,657 | 37,442 | 34,878 | 30,154 | 35,171 | 33,705 | 34,292 |
| | Preheating coefficient/ Stretching coefficient | - | 3.32 | 5.69 | 3.31 | 5.63 | 3.31 | 3.31 | 3.31 |
| | Stretching method | - | simultaneous, biaxial | simultaneous, biaxial | simultaneous, biaxial | simultaneous, biaxial | simultaneous, biaxial | simultaneous, biaxial | sequential, biaxial |

EP 4 238 752 A1

(continued)

|  |  |  | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| Heat setting | Transverse stretching temperature | °C | 130 | 124 | 130 | 127 | 127 | 127 | 125 |
|  | Heat setting ratio | times | 1.51 | 1.80 | 1.48 | 1.58 | 1.50 | 1.40 | 1.00 |
|  | Heat setting temperature | °C | 131 | 128 | 132 | 129 | 135 | 127 | 125 |
| Total stretching ratio |  | times | 67 | 80 | 66 | 71 | 18 | 35 | 64 |

[Table 3-1]

| | | Example 1 | Example 2 | Example 3 | Example 4 | Example 5 | Example 6 | Example 7 | Example 8 |
|---|---|---|---|---|---|---|---|---|---|
| Post-compression porosity | % | 36.9 | 36.5 | 35.8 | 35.2 | 34.7 | 33.9 | 33.7 | 33.3 |
| Crystal long period | nm | 48.3 | 40.6 | 46.2 | 39.9 | 43.6 | 37.0 | 43.4 | 44.1 |
| Crystallite size PE(110)MDND | nm | 22.2 | 18.9 | 21.8 | 20.4 | 22.8 | 21.6 | 24.6 | 25.1 |
| Pre-compression porosity | % | 52.3 | 54.5 | 57.6 | 49.7 | 49.3 | 51.0 | 48.3 | 48.5 |
| Tensile strength ratio | - | 0.9 | 0.8 | 0.9 | 1.0 | 0.9 | 0.9 | 0.9 | 0.9 |
| Cycle characteristics | - | A | A | A | A | A | B | B | C |
| Output characteristics | - | A | A | A | A | A | B | B | B |
| Basis weight | g/m² | 6.4 | 5.2 | 6.3 | 6.4 | 5.7 | 5.6 | 6.2 | 5.9 |
| Membrane thickness | μm | 14.2 | 12.0 | 15.7 | 13.4 | 11.8 | 12.0 | 12.7 | 12.1 |
| (Pre-compression) air permeability Version 1 | s/100 cm³ | 88 | 64 | 76 | 92 | 81 | 75 | 88 | 81 |
| Puncture strength | gf | 531 | 465 | 547 | 585 | 425 | 438 | 337 | 334 |
| Pore size (half dry) | nm | 52 | 53 | 45 | 50 | 50 | 51 | 58 | 57 |
| Withstand voltage per basis weight | kv/(g/m²) | 0.18 | 0.19 | 0.20 | 0.21 | 0.21 | 0.22 | 0.17 | 0.17 |
| Smoothness | s/10 cm³ | 57,945 | 73,355 | 58,005 | 68,020 | 70,725 | 75,590 | 21,890 | 41,615 |
| Tensile elastic modulus ratio | - | 0.9 | 1.0 | 0.9 | 1.4 | 1.2 | 1.2 | 0.9 | 0.8 |
| Tensile elongation ratio | - | 1.1 | 1.3 | 1.0 | 1.0 | 1.2 | 1.2 | 1.1 | 1.1 |
| Fuse temperature | °C | 148 | 147 | 148 | 148 | 143 | 143 | 140 | 140 |

[Table 3-2]

| | | Example 9 | Example 10 | Example 11 | Example 12 | Example 13 | Example 14 | Example 15 | Example 16 |
|---|---|---|---|---|---|---|---|---|---|
| Post-compression porosity | % | 32.6 | 32.2 | 32.2 | 31.2 | 32.3 | 30.5 | 32.7 | 32.4 |
| Crystal long period | nm | 38.2 | 45.1 | 43.7 | 46.5 | 35.7 | 30.5 | 41.5 | 41.4 |
| Crystallite size PE(110)MDND | nm | 24.1 | 22.9 | 25.8 | 22.6 | 18.1 | 17.7 | 28.0 | 24.1 |
| Pre-compression porosity | % | 52.3 | 48.3 | 42.4 | 41.3 | 50.9 | 53.5 | 45.5 | 43.9 |
| Tensile strength ratio | - | 1.0 | 0.9 | 0.9 | 1.0 | 1.0 | 1.1 | 2.3 | 1.8 |
| Cycle characteristics | - | C | B | C | D | C | D | B | B |
| Output characteristics | - | B | B | C | D | C | D | B | B |
| Basis weight | $g/m^2$ | 5.9 | 5.5 | 5.8 | 5.7 | 5.7 | 5.3 | 4.2 | 3.8 |
| Membrane thickness | $\mu m$ | 13.1 | 11.2 | 10.5 | 10.2 | 12.2 | 11.9 | 8.0 | 7.2 |
| (Pre-compression) air permeability Version 1 | $s/100\ cm^3$ | 78 | 80 | 110 | 106 | 119 | 108 | 72 | 80 |
| Puncture strength | gf | 406 | 411 | 341 | 425 | 580 | 567 | 241 | 231 |
| Pore size (half dry) | nm | 50 | 50 | 57 | 49 | 37 | 35 | 61 | 64 |
| Withstand voltage per basis weight | $kv/(g/m^2)$ | 0.17 | 0.18 | 0.16 | 0.17 | 0.26 | 0.26 | 0.16 | 0.17 |
| Smoothness | $s/10\ cm^3$ | 58,750 | 56,890 | 39,605 | 42,975 | 133,320 | 152,195 | 55,620 | 45,790 |
| Tensile elastic modulus ratio | - | 1.0 | 0.9 | 1.4 | 1.2 | 1.9 | 2.3 | 3.7 | 2.4 |
| Tensile elongation ratio | - | 1.0 | 1.1 | 1.0 | 1.0 | 0.7 | 0.7 | 0.4 | 0.5 |
| Fuse temperature | °C | 144 | 143 | 140 | 140 | 150 | 149 | 143 | 143 |

[Table 3-3]

| | | Example 17 | Example 18 | Example 19 | Example 20 | Example 21 | Example 22 | Example 23 |
|---|---|---|---|---|---|---|---|---|
| Post-compression porosity | % | 31.8 | 32.8 | 32.2 | 34.6 | 31.0 | 30.8 | 31.1 |
| Crystal long period | nm | 38.8 | 42.3 | 39.1 | 36.1 | 36.0 | 39.1 | 38.0 |
| Crystallite size PE(110)MDND | nm | 24.0 | 23.6 | 24.7 | 25.2 | 21.5 | 21.8 | 24.0 |
| Pre-compression porosity | % | 46.8 | 48.9 | 49.5 | 59.7 | 58.0 | 56.7 | 46.0 |
| Tensile strength ratio | - | 1.1 | 1.0 | 1.1 | 0.8 | 0.8 | 0.8 | 1.4 |
| Cycle characteristics | - | A | A | A | C | D | B | A |
| Output characteristics | - | A | A | A | C | D | B | A |
| Basis weight | g/m$^2$ | 4.6 | 6.1 | 5.9 | 4.2 | 4.4 | 4.5 | 4.5 |
| Membrane thickness | $\mu$m | 9.1 | 12.5 | 12.4 | 11.0 | 11.0 | 11.0 | 8.9 |
| (Pre-compression) air permeability Version 1 | s/100 cm$^3$ | 81 | 84 | 86 | 42 | 50 | 52 | 85 |
| Puncture strength | gf | 273 | 340 | 328 | 280 | 350 | 414 | 250 |
| Pore size (half dry) | nm | 56 | 55 | 55 | 57 | 48 | 52 | 56 |
| Withstand voltage per basis weight | kv/ (g/m$^2$) | 0.19 | 0.16 | 0.17 | 0.21 | 0.23 | 0.23 | 0.19 |
| Smoothness | s/10 cm$^3$ | 74,285 | 31,170 | 44,340 | 103,520 | 91,050 | 80,435 | 86,500 |
| Tensile elastic modulus ratio | - | 1.3 | 0.9 | 1.1 | 0.8 | 0.9 | 1.1 | 2.1 |
| Tensile elongation ratio | - | 0.9 | 1.2 | 1.0 | 0.9 | 1.1 | 1.1 | 0.8 |
| Fuse temperature | °C | 142 | 140 | 142 | 140 | 144 | 146 | 141 |

[Table 4]

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Post-compression porosity | % | 29.5 | 29.2 | 28.2 | 28.3 | 29.6 | 29.9 | 29.8 |
| Crystal long period | nm | 35.1 | 31.2 | 33.8 | 35.9 | 35.5 | 31.2 | 30.5 |
| Crystallite size PE (110)MDND | nm | 32.7 | 28.2 | 28.3 | 29.7 | 26.5 | 17.5 | 18.7 |
| Pre-compression porosity | % | 39.9 | 56.7 | 38.0 | 47.3 | 62.0 | 45.8 | 47.1 |
| Tensile strength ratio | - | 1.3 | 0.8 | 1.2 | 1.1 | 6.9 | 0.8 | 0.8 |
| Cycle characteristics | - | E | E | E | E | E | E | E |
| Output characteristics | - | E | E | E | E | E | E | E |
| Basis weight | g/m$^2$ | 3.4 | 6.0 | 3.5 | 5.1 | 7.2 | 6.0 | 5.0 |
| Membrane thickness | μm | 5.9 | 14.7 | 6.0 | 10.2 | 20.0 | 11.6 | 10.0 |
| (Pre-compression) air permeability Version 1 | s/100 cm$^3$ | 108 | 76 | 152 | 86 | 55 | 120 | 150 |
| Puncture strength | gf | 223 | 375 | 258 | 257 | 418 | 350 | 455 |
| Pore size (half dry) | nm | 47 | 53 | 50 | 58 | 110 | 33 | 30 |
| Withstand voltage per basis weight | kv/ (g/m$^2$) | 0.20 | 0.22 | 0.23 | 0.17 | - | - | - |
| Smoothness | s/10 cm$^3$ | 110,445 | 79,880 | 119,340 | 77,755 | 10,530 | 16,750 | - |
| Tensile elastic modulus ratio | - | 1.8 | 0.8 | 1.6 | 1.5 | 6.7 | 0.8 | 0.8 |
| Tensile elongation ratio | - | 0.8 | 1.3 | 0.9 | 0.9 | 0.1 | 1.4 | 1.1 |

(continued)

| | °C | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Fuse temperature | °C | 141 | 141 | 146 | 139 | - | 137 | 139 |

[Example 24]

<Production of Polyolefin Microporous Membrane>

A polyolefin microporous membrane was produced by the following procedure.

(A) As shown in Table 5, 30 parts by weight of a polyethylene having an Mv of 900,000 and 70 parts by weight of a polyethylene having an Mv of 300,000 were dry-blended, and the resultant was further blended with 0.3 parts by weight of tetrakis(methylene-3-(3',5'-di-t-butyl-4'-hydroxyphenyl)propionate)methane as an antioxidant to obtain a raw material composition. Next, the thus obtained composition was introduced to a twin-screw extruder via a feeder. Subsequently, a liquid paraffin (kinematic viscosity at 37.78°C = 75.90 cSt) as a pore-forming material was injected into the extruder using a side feeder such that the "Ratio of polymer components in extruded components (PC)" shown in Table 5 was 30%, taking a total amount of the resin raw materials and the liquid paraffin as 100 parts by weight, after which kneading was performed at a kneading temperature of 160°C, and the resultant was extruded from a T-die installed at the tip of the extruder.
(B) Immediately after the extrusion, the extruded material was cooled and solidified on a casting roll cooled to 30°C, whereby a 1.530 mm-thick sheet was formed. This sheet was stretched by $7 \times 6.4$ times using a simultaneous biaxial stretching machine at 128°C such that the MD strain rate was 35%/sec and the TD strain rate was 30%/sec.
(C) After the stretching, the sheet was immersed in methylene chloride to extract and remove the liquid paraffin.
(D) Subsequently, the sheet was dried and stretched by 1.85 times in the width direction (TD) using a tenter stretching machine. Thereafter, this stretched sheet was heat-treated at 131°C such that the sheet was relaxed in the width direction (TD) to a post-relaxation ratio of 1.75 at a strain rate of -4.2%/sec, whereby a polyolefin microporous membrane was obtained.
(E) The thus obtained polyolefin microporous membrane was evaluated in accordance with the above-described methods, and a battery equipped with the polyolefin microporous membrane was evaluated as well. The evaluation results are shown in Table 7.

[Examples 25 to 45 and Comparative Examples 8 to 21]

Polyolefin microporous membranes and their coating films were obtained and evaluated in the same manner as in Example 24, except that the respective resin raw materials, production conditions, and coating conditions shown in Tables 5 and 6 were used. The evaluation results are shown in Tables 7 and 8.
In Examples 42 to 45, the following step (F) was further performed for the thus obtained polyolefin microporous membranes:
(F) Each polyolefin microporous membrane was coated with a first layer, a second layer, and a third layer such that the layers each had the coating thickness shown in Table 5.
It is noted here that, in Examples 42 to 45, boehmite was used as an inorganic filler, and an acryl latex and sodium carboxymethyl cellulose were used as binders for inorganic coating; an acryl latex was used for organic coating; and alumina was used as an inorganic filler and PVdF was used as a binder for organic-inorganic mixed coating. In the coating of a substrate, a coating liquid was applied to the corona-discharged surface of the substrate using a gravure coater, and the thus applied liquid was subsequently dried, whereby each separator of Examples 42 to 45 that had a coating layer was obtained. The evaluation results of Examples 42 to 45 are shown in Table 7.
In Comparative Example 16, referring to Example 1 of Japanese Unexamined Patent Publication (Kokai) No. 2018-162438, a polyolefin microporous membrane was obtained under the production conditions of Comparative Example 16 shown in Table 6 and evaluated.
In Comparative Example 17, referring to Example 5 of Japanese Unexamined Patent Publication (Kokai) No. 2020-164861, a polyolefin microporous membrane was obtained under the production conditions of Comparative Example 17 shown in Table 6 and evaluated.
In Comparative Example 18, referring to Example 10 of Japanese Unexamined Patent Publication (Kokai) No. 2020-164861, a polyolefin microporous membrane was obtained under the production conditions of Comparative Example 18 shown in Table 6 and evaluated.
In Comparative Example 19, referring to Example 1 of Japanese Unexamined Patent Publication (Kokai) No. 2002-88188, a polyolefin microporous membrane was obtained under the production conditions of Comparative Example 19 shown in Table 6 and evaluated.
In Comparative Example 20, referring to Example 7 of WO 2008/093572, a polyolefin microporous membrane was obtained under the production conditions of Comparative Example 20 shown in Table 6 and evaluated.
In Comparative Example 21, referring to Example 1 of Japanese Unexamined Patent Publication (Kokai) No. 2017-25294 (PTL 8), a polyolefin microporous membrane was obtained by a dry porosification method under the production conditions of Comparative Example 21 shown in Table 6 and evaluated.

[Table 5-1]

| | | | | Example 24 | Example 25 | Example 26 | Example 27 | Example 28 |
|---|---|---|---|---|---|---|---|---|
| Membrane-forming conditions | Raw material composition ratio | PE1 | Mv, % by weight | 900,000/30% | 900,000/30% | 700,000/30% | 700,000/30% | 700,000/30% |
| | | PE2 | Mv, % by weight | 300,000/70% | 300,000/70% | 300,000/70% | 300,000/70% | 300,000/70% |
| | | PP | Mv, % by weight | - | - | - | - | - |
| | Extrusion | Ratio of polymer components in extruded components (PC) | % by weight | 30 | 30 | 32 | 34 | 40 |
| | | Molded sheet thickness | μm | 1,530 | 1,043 | 1,350 | 1,040 | 780 |
| | Stretching | Longitudinal stretching ratio | times | 7 | 7 | 7 | 7 | 7 |
| | | Longitudinal stretching temperature | °C | 128 | 128 | 126 | 128 | 131 |
| | | Transverse stretching ratio | times | 6.4 | 6.4 | 6.4 | 6.4 | 6.4 |
| | | Transverse stretching temperature | °C | 128 | 128 | 126 | 128 | 131 |
| | | Stretching method | - | simultaneous, biaxial | simultaneous, biaxial | simultaneous, biaxial | simultaneous, biaxial | sequential, biaxial |
| | Heat setting | Transverse stretching ratio | times | 1.85 | 1.80 | 1.80 | 1.80 | 1.80 |
| | | Post-relaxation ratio | times | 1.75 | 1.72 | 1.70 | 1.60 | 1.60 |
| | | Relaxation temperature | °C | 131 | 131 | 131 | 131 | 131 |
| | Heating coefficient per unit resin | | °C/% by weight | 0.43 | 0.43 | 0.34 | 0.38 | 0.40 |
| | Coating type of first layer/thickness | | um | - | - | - | - | - |
| | Coating type of second layer/thickness | | um | - | - | - | - | - |
| | Coating type of third layer/thickness | | um | - | - | - | - | - |

[Table 5-2]

| Membrane-forming conditions | | | Example 29 | Example 30 | Example 31 | Example 32 | Example 33 |
|---|---|---|---|---|---|---|---|
| Raw material composition ratio | PE1 | Mv, % by weight | 900,000/70% | 900,000/70% | 900,000/70% | 900,000/70% | 900,000/100% |
| | PE2 | Mv, % by weight | 300,000/30% | 300,000/30% | 300,000/30% | 300,000/30% | - |
| | PP | Mv, % by weight | - | - | - | - | - |
| Extrusion | Ratio of polymer components in extruded components (PC) | % by weight | 26 | 26 | 22 | 22 | 25 |
| Molded sheet thickness | | μm | 1,500 | 710 | 2,130 | 750 | 1,960 |
| Stretching | Longitudinal stretching ratio | times | 7 | 7 | 7 | 7 | 7 |
| | Longitudinal stretching temperature | °C | 129 | 129 | 133 | 127 | 127 |
| | Transverse stretching ratio | times | 6.4 | 6.4 | 6.4 | 6.4 | 6.4 |
| | Transverse stretching temperature | °C | 129 | 129 | 133 | 127 | 127 |
| | Stretching method | - | simultaneous, biaxial | simultaneous, biaxial | simultaneous, biaxial | sequential, biaxial | simultaneous, biaxial |
| Heat setting | Transverse stretching ratio | times | 1.75 | 1.80 | 1.85 | 1.75 | 1.60 |
| | Post-relaxation ratio | times | 1.67 | 1.75 | 1.80 | 1.67 | 1.60 |
| | Relaxation temperature | °C | 133 | 133 | 133 | 134 | 136 |
| Heating coefficient per unit resin | | °C/% by weight | 0.54 | 0.54 | 0.82 | 0.55 | 0.48 |
| Coating type of first layer/thickness | | um | - | - | - | - | - |
| Coating type of second layer/thickness | | um | - | - | - | - | - |
| Coating type of third layer/thickness | | um | - | - | - | - | - |

[Table 5-3]

| Membrane-forming conditions | | Unit | Example 34 | Example 35 | Example 36 | Example 37 | Example 38 |
|---|---|---|---|---|---|---|---|
| Raw material composition ratio | PE1 | Mv, % by weight | 900,000/100% | 900,000/100% | 700,000/93% | 700,000/93% | 700,000/93% |
| | PE2 | Mv, % by weight | - | - | - | - | - |
| | PP | Mv, % by weight | - | - | 400,000/7% | 400,000/7% | 400,000/7% |
| Extrusion | Ratio of polymer components in extruded components (PC) | % by weight | 25 | 20 | 28 | 28 | 26 |
| Molded sheet thickness | | μm | 1,510 | 1,350 | 1,880 | 1,203 | 1,130 |
| Stretching | Longitudinal stretching ratio | times | 7 | 7 | 7 | 7 | 7 |
| | Longitudinal stretching temperature | °C | 127 | 125 | 127 | 127 | 122 |
| | Transverse stretching ratio | times | 6.4 | 6.4 | 6.4 | 6.4 | 6.4 |
| | Transverse stretching temperature | °C | 127 | 125 | 127 | 127 | 122 |
| | Stretching method | - | simultaneous, biaxial | sequential, biaxial | simultaneous, biaxial | simultaneous, biaxial | simultaneous, biaxial |
| Heat setting | Transverse stretching ratio | times | 1.70 | 1.60 | 1.55 | 1.60 | 1.75 |
| | Post-relaxation ratio | times | 1.60 | 1.55 | 1.50 | 1.50 | 1.60 |
| | Relaxation temperature | °C | 136 | 136 | 133 | 133 | 133 |
| Heating coefficient per unit resin | | °C/% by weight | 0.48 | 0.50 | 0.43 | 0.43 | 0.27 |
| Coating type of first layer/thickness | | um | - | - | - | - | - |
| Coating type of second layer/thickness | | um | - | - | - | - | - |
| Coating type of third layer/thickness | | um | - | - | - | - | - |

[Table 5-4]

| Membrane-forming conditions | | | Example 39 | Example 40 | Example 41 | Example 42 |
|---|---|---|---|---|---|---|
| Raw material composition ratio | PE1 | Mv, % by weight | 700,000/100% | 700,000/100% | 700,000/70% | 900,000/30% |
| | PE2 | Mv, % by weight | - | - | 300,000/23% | 300,000/70% |
| | PP | Mv, % by weight | - | - | 400,000/7% | - |
| Extrusion | Ratio of polymer components in extruded components (PC) | % by weight | 27 | 25 | 30 | 30 |
| Molded sheet thickness | | μm | 1,950 | 2,500 | 1,370 | 1,530 |
| Stretching | Longitudinal stretching ratio | times | 7 | 7 | 7 | 7 |
| | Longitudinal stretching temperature | °C | 127 | 130 | 126 | 128 |
| | Transverse stretching ratio | times | 6.4 | 6.4 | 6.4 | 6.4 |
| | Transverse stretching temperature | °C | 127 | 130 | 126 | 128 |
| | Stretching method | - | simultaneous, biaxial | simultaneous, biaxial | simultaneous, biaxial | simultaneous, biaxial |
| Heat setting | Transverse stretching ratio | times | 1.60 | 1.60 | 1.90 | 1.85 |
| | Post-relaxation ratio | times | 1.50 | 1.50 | 1.60 | 1.75 |
| | Relaxation temperature | °C | 134 | 134 | 130 | 131 |
| Heating coefficient per unit resin | | °C/% by weight | 0.44 | 0.60 | 0.37 | 0.43 |
| Coating type of first layer/ thickness | | um | - | - | - | inorganic coating/3 μm |
| Coating type of second layer/ thickness | | um | - | - | - | - |
| Coating type of third layer/ thickness | | um | - | - | - | - |

[Table 5-5]

| Membrane-forming conditions | | | | Example 43 | Example 44 | Example 45 |
|---|---|---|---|---|---|---|
| Raw material composition ratio | PE1 | | Mv, % by weight | 900,000/30% | 900,000/30% | 700,000/100% |
| | PE2 | | Mv, % by weight | 300,000/70% | 300,000/70% | - |
| | PP | | Mv, % by weight | - | - | - |
| Extrusion | Ratio of polymer components in extruded components (PC) | | % by weight | 30 | 30 | 27 |
| Molded sheet thickness | | | μm) | 1,530 | 1,530 | 1,950 |
| Stretching | Longitudinal stretching ratio | | times | 7 | 7 | 7 |
| | Longitudinal stretching temperature | | °C | 128 | 128 | 127 |
| | Transverse stretching ratio | | times | 6.4 | 6.4 | 6.4 |
| | Transverse stretching temperature | | °C | 128 | 128 | 127 |
| | Stretching method | | - | simultaneous, biaxial | simultaneous, biaxial | simultaneous, biaxial |
| Heat setting | Transverse stretching ratio | | times | 1.85 | 1.85 | 1.50 |
| | Post-relaxation ratio | | times | 1.75 | 1.75 | 1.50 |
| | Relaxation temperature | | °C | 131 | 131 | 134 |
| Heating coefficient per unit resin | | | °C/% by weight | 0.43 | 0.43 | 0.44 |
| Coating type of first layer/thickness | | | um | organic coating/0.5 μm | inorganic coating/2 μm | organic-inorganic mixed coating/2 μm |
| Coating type of second layer/thickness | | | um | organic coating/0.5 μm | organic coating/0.5 μm | organic-inorganic mixed coating/2 μm |
| Coating type of third layer/thickness | | | um | - | organic coating/0.5 μm | - |

[Table 6-1]

| Membrane-forming conditions | | | | Comparative Example 8 | Comparative Example 9 | Comparative Example 10 | Comparative Example 11 | Comparative Example 12 |
|---|---|---|---|---|---|---|---|---|
| Raw material composition ratio | PE1 | | Mv, % by weight | 700,000/70% | 700,000/30% | 2,000,000/30% | 700,000/30% | 2,700,000/30% |
| | PE2 | | Mv, % by weight | 300,000/23% | 300,000/70% | 350,000/70% | 300,000/70% | 260,000/70% |
| | PP | | Mv, % by weight | 400,000/7% | - | - | - | - |
| Extrusion | Ratio of polymer components in extruded components (PC) | | % by weight | 29 | 32 | 22.5 | 32 | 30 |
| Molded sheet thickness | | | μm | 1,310 | 610 | 800 | 960 | 1,450 |
| Stretching | Longitudinal stretching ratio | | times | 7 | 4.5 | 5 | 7 | 8.2 |
| | Longitudinal stretching temperature | | °C | 124.5 | 123 | 119.2 | 124 | 123 |
| | Transverse stretching ratio | | times | 6.4 | 4.5 | 5 | 6.4 | 8.3 |
| | Transverse stretching temperature | | °C | 124.5 | 123 | 119.2 | 124 | 113 |
| | Stretching method | | - | simultaneous, biaxial | simultaneous, biaxial | simultaneous, biaxial | simultaneous, biaxial | sequential, biaxial |
| Heat setting | Transverse stretching ratio | | times | 1.90 | 2.20 | 1.55 | 1.55 | 2.20 |
| | Post-relaxation ratio | | times | 1.58 | 1.70 | 1.40 | 1.20 | 1.60 |
| | Relaxation temperature | | °C | 129 | 131 | 110 | 133 | 132 |
| Heating coefficient per unit resin | | | °C/% by weight | 0.33 | 0.25 | 0.19 | 0.28 | -0.07 |
| Coating type of first layer/thickness | | | um | - | - | - | - | - |
| Coating type of second layer/thickness | | | um | - | - | - | - | - |
| Coating type of third layer/thickness | | | um | - | - | - | - | - |

EP 4 238 752 A1

[Table 6-2]

| Membrane-forming conditions | | | Comparative Example 13 | Comparative Example 14 | Comparative Example 15 | Comparative Example 16 | Comparative Example 17 |
|---|---|---|---|---|---|---|---|
| Raw material composition ratio | PE1 | Mv, % by weight | 2,000,000/35% | 700,000/30% | 700,000/47.5% | 700,000/47.5% | 2,000,000/100% |
| | PE2 | Mv, % by weight | 350,000/65% | 300,000/70% | 300,000/47.5% | 300,000/47.5% | - |
| | PP | Mv, % by weight | - | - | 400,000/5% | 400,000/5% | - |
| Extrusion | Ratio of polymer components in extruded components (PC) | % by weight | 35 | 22 | 35 | 34 | 16 |
| Molded sheet thickness | | μm | 2,540 | 890 | 1,600 | 750 | 2,350 |
| Stretching | Longitudinal stretching ratio | times | 5 | 4.5 | 7 | 7→1.5 | 8 |
| | Longitudinal stretching temperature | °C | 115 | 123 | 120 | 120→120 | 115 |
| | Transverse stretching ratio | times | 5 | 4.5 | 6.4 | 7→1.7 | 8 |
| | Transverse stretching temperature | °C | 115 | 123 | 120 | 120→133 | 115 |
| | Stretching method | - | simultaneous, biaxial | simultaneous, biaxial | simultaneous, biaxial | simultaneous, biaxial → sequential stretching | simultaneous, biaxial |
| Heat setting | Transverse stretching ratio | times | 1.50 | 1.95 | 2.00 | 1.75 | - |
| | Post-relaxation ratio | times | 1.40 | 1.70 | 1.60 | 1.50 | - |
| | Relaxation temperature | °C | 129 | 136 | 130 | 130 | 120 |
| Heating coefficient per unit resin | | °C/% by weight | 0.00 | 0.36 | 0.14 | 0.15 | 0.00 |
| Coating type of first layer/thickness | | um | - | - | - | - | - |
| Coating type of second layer/thickness | | um | - | - | - | - | - |

EP 4 238 752 A1

56

(continued)

| Membrane-forming conditions | | Comparative Example 13 | Comparative Example 14 | Comparative Example 15 | Comparative Example 16 | Comparative Example 17 |
|---|---|---|---|---|---|---|
| Coating type of third layer/thickness | um | - | - | - | - | - |

[Table 6-3]

| Membrane-forming conditions | | | Comparative Example 18 | Comparative Example 19 | Comparative Example 20 | Comparative Example 21 |
|---|---|---|---|---|---|---|
| Raw material composition ratio | PE1 | Mv, % by weight | 2,000,000/30% | 2,000,000/12% | 2,000,000/30% | PE 320,000 |
| | PE2 | Mv, % by weight | 300,000/70% | 12% and 150,000 | 150,000/70% | - |
| | PP | Mv, % by weight | - | silica 18% | silica 20% | PP 470,000 |
| Extrusion | Ratio of polymer components in extruded components (PC) | % by weight | 17 | 58 | 34 | 35 |
| Molded sheet thickness | | μm | 1580 | 90 | 110 | 800 |
| Stretching | Longitudinal stretching ratio | times | 10 | 5.3 | 5 | 2.9 |
| | Longitudinal stretching temperature | °C | 115 | 118 | 115 | 130 |
| | Transverse stretching ratio | times | 10 | 1.8 | 2 | - |
| | Transverse stretching temperature | °C | 115 | 118 | 115 | - |
| | Stretching method | - | simultaneous, biaxial | sequential, biaxial | sequential, biaxial | dry-stretching, uniaxial |
| Heat setting | Transverse stretching ratio | times | - | - | - | - |
| | Post-relaxation ratio | times | - | - | - | - |
| | Relaxation temperature | °C | 120 | - | 125 | - |
| Heating coefficient per unit resin | | °C/% by weight | 0.00 | 0.05 | 0.00 | not applicable since dry porosification method was employed |
| Coating type of first layer/ thickness | | um | - | - | - | - |
| Coating type of second layer/ thickness | | um | - | - | - | - |
| Coating type of third layer/ thickness | | um | - | - | - | - |

Table 7-1]

| Properties of microporous membrane | | Example 24 | Example 25 | Example 26 | Example 27 | Example 28 |
|---|---|---|---|---|---|---|
| MI | g/10 min | 0.90 | 0.90 | 0.46 | 0.46 | 0.46 |
| Ratio of PE having Mw of 1,000,000 or more | % | 9.1 | 9.1 | 8.0 | 8.0 | 8.0 |
| Membrane thickness | μm | 11.0 | 8.5 | 11.0 | 8.0 | 8.0 |
| Porosity | % | 59.7 | 60.2 | 58.0 | 59.2 | 58.5 |
| (Pre-compression) air permeability Version 2 | s/100 cm$^3$ | 42 | 61 | 50 | 36 | 36 |
| Air permeability distribution in TD | sec | 3 | 3 | 5 | 3 | 3 |
| Puncture strength | gf | 280 | 226 | 350 | 272 | 304 |
| Resin basis weight of substrate | g/m$^2$ | 4.21 | 3.22 | 4.39 | 3.10 | 3.15 |
| Basis weight-converted puncture strength of substrate | gf/g/m$^2$ | 66 | 70 | 80 | 88 | 96 |
| MD tensile strength at break | kg/cm$^2$ | 1,020 | 998 | 1,450 | 1,482 | 1,402 |
| MD tensile elongation at break | % | 70 | 66 | 82 | 72 | 65 |
| MD tensile elastic modulus | kg/cm$^2$ | 5,580 | 4,980 | 7,020 | 7,304 | 7,020 |
| TD tensile strength at break | kg/cm$^2$ | 1,250 | 1,320 | 1,740 | 1,632 | 1,802 |
| TD tensile elongation at break | % | 82 | 94 | 77 | 95 | 82 |
| TD tensile elastic modulus | kg/cm$^2$ | 6,880 | 7,023 | 8,240 | 8,010 | 8,198 |
| MD/TD ratio of tensile strength | - | 0.82 | 0.76 | 0.83 | 0.91 | 0.78 |
| MD/TD ratio of tensile elongation | - | 0.85 | 0.70 | 1.06 | 0.76 | 0.79 |
| MD/TD ratio of tensile elastic modulus | - | 0.81 | 0.71 | 0.85 | 0.91 | 0.86 |
| MD heat shrinkage at 120°C | % | 8.4 | 9.2 | 11.0 | 12.5 | 13.4 |
| TD heat shrinkage at 120°C | % | 14.9 | 15.8 | 14.0 | 15.2 | 14.5 |
| Porosity in compressed environment at 3 MPa | % | 49.9 | 50.2 | 49.0 | 48.9 | 49.5 |
| Air permeability in compressed environment at 3 MPa | s/100 cm$^3$ | 90 | 61 | 100 | 73 | 53 |
| Smoothness | sec | 103,520 | 115,020 | 91,050 | 102,540 | 112,390 |
| Nail penetration test | - | A | B | A | A | A |
| Cycle test | - | A | A | A | A | A |
| Rate test | - | A | A | B | A | A |

[Table 7-2]

| Properties of microporous membrane | | Example 29 | Example 30 | Example 31 | Example 32 | Example 33 |
|---|---|---|---|---|---|---|
| MI | g/10 min | 0.27 | 0.27 | 0.27 | 0.27 | 0.12 |

(continued)

| Properties of microporous membrane | | Example 29 | Example 30 | Example 31 | Example 32 | Example 33 |
|---|---|---|---|---|---|---|
| Ratio of PE having Mw of 1,000,000 or more | % | 19.2 | 19.2 | 19.2 | 19.2 | 23.5 |
| Membrane thickness | μm | 11.0 | 5.5 | 14.0 | 4.5 | 12.8 |
| Porosity | % | 56.7 | 55.8 | 56.2 | 55.1 | 50.1 |
| (Pre-compression) air permeability Version 2 | s/100 cm$^3$ | 52 | 26 | 66 | 26 | 84 |
| Air permeability distribution in TD | sec | 5 | 2 | 7 | 2 | 8 |
| Puncture strength | gf | 414 | 225 | 319 | 225 | 439 |
| Resin basis weight of substrate | g/m$^2$ | 4.52 | 2.31 | 5.83 | 1.92 | 6.07 |
| Basis weight-converted puncture strength of substrate | gf/g/m$^2$ | 91 | 97 | 55 | 117 | 72 |
| MD tensile strength at break | kg/cm$^2$ | 1,607 | 1,576 | 1,522 | 1,720 | 1,650 |
| MD tensile elongation at break | % | 110 | 92 | 79 | 102 | 101 |
| MD tensile elastic modulus | kg/cm$^2$ | 6,546 | 6,234 | 5,987 | 7,027 | 8,350 |
| TD tensile strength at break | kg/cm$^2$ | 2,134 | 2,259 | 2,435 | 2,254 | 1,680 |
| TD tensile elongation at break | % | 99 | 88 | 94 | 95 | 108 |
| TD tensile elastic modulus | kg/cm$^2$ | 6,220 | 7,023 | 7,401 | 6,102 | 9,150 |
| MD/TD ratio of tensile strength | - | 0.75 | 0.70 | 0.63 | 0.76 | 0.98 |
| MD/TD ratio of tensile elongation | - | 1.11 | 1.05 | 0.84 | 1.07 | 0.94 |
| MD/TD ratio of tensile elastic modulus | - | 1.05 | 0.89 | 0.81 | 1.15 | 0.91 |
| MD heat shrinkage at 120°C | % | 11.9 | 12.0 | 6.5 | 13.3 | 4.0 |
| TD heat shrinkage at 120°C | % | 8.9 | 9.5 | 4.5 | 11.5 | 8.5 |
| Porosity in compressed environment at 3 MPa | % | 51.5 | 50.0 | 53.1 | 52.3 | 41.2 |
| Air permeability in compressed environment at 3 MPa | s/100 cm$^3$ | 60 | 30 | 76 | 37 | 135 |
| Smoothness | sec | 80,435 | 84,210 | 75,470 | 111,320 | 38,370 |
| Nail penetration test | - | A | B | B | B | A |
| Cycle test | - | A | A | A | A | B |
| Rate test | - | A | A | A | A | C |

[Table 7-3

| Properties of microporous membrane | | Example 34 | Example 35 | Example 36 | Example 37 | Example 38 |
|---|---|---|---|---|---|---|
| MI | g/10 min | 0.12 | 0.12 | 0.30 | 0.30 | 0.30 |
| Ratio of PE having Mw of 1,000,000 or more | % | 23.5 | 23.5 | 16.8 | 16.8 | 16.8 |

(continued)

| Properties of microporous membrane | | Example 34 | Example 35 | Example 36 | Example 37 | Example 38 |
|---|---|---|---|---|---|---|
| Membrane thickness | μm | 10.0 | 7.0 | 12.5 | 8.0 | 9.0 |
| Porosity | % | 49.8 | 51.1 | 48.2 | 47.5 | 47.0 |
| (Pre-compression) air permeability Version 2 | s/100 cm$^3$ | 66 | 46 | 90 | 58 | 87 |
| Air permeability distribution in TD | sec | 7 | 5 | 10 | 5 | 9 |
| Puncture strength | gf | 348 | 264 | 320 | 221 | 250 |
| Resin basis weight of substrate | g/m$^2$ | 4.77 | 3.25 | 6.15 | 3.99 | 4.50 |
| Basis weight-converted puncture strength of substrate | gf/g/m$^2$ | 73 | 81 | 52 | 55 | 56 |
| MD tensile strength at break | kg/cm$^2$ | 1,634 | 1,599 | 1,450 | 1,372 | 1,625 |
| MD tensile elongation at break | % | 99 | 91 | 87 | 95 | 99 |
| MD tensile elastic modulus | kg/cm$^2$ | 8,023 | 8,882 | 7,010 | 6,992 | 9,009 |
| TD tensile strength at break | kg/cm$^2$ | 1,720 | 1,550 | 1,652 | 1,550 | 1,180 |
| TD tensile elongation at break | % | 98 | 113 | 101 | 99 | 132 |
| TD tensile elastic modulus | kg/cm$^2$ | 8,872 | 10,200 | 8,300 | 8,423 | 4,211 |
| MD/TD ratio of tensile strength | - | 0.95 | 1.03 | 0.88 | 0.89 | 1.38 |
| MD/TD ratio of tensile elongation | - | 1.01 | 0.81 | 0.86 | 0.96 | 0.75 |
| MD/TD ratio of tensile elastic modulus | - | 0.90 | 0.87 | 0.84 | 0.83 | 2.14 |
| MD heat shrinkage at 120°C | % | 4.3 | 5.1 | 7.0 | 6.2 | 6.5 |
| TD heat shrinkage at 120°C | % | 7.8 | 9.2 | 10.0 | 8.7 | 10.8 |
| Porosity in compressed environment at 3 MPa | % | 40.9 | 42.3 | 44.0 | 45.1 | 41.0 |
| Air permeability in compressed environment at 3 MPa | s/100 cm$^3$ | 105 | 74 | 120 | 77 | 124 |
| Smoothness | sec | 45,820 | 51,820 | 70,050 | 85,030 | 95,320 |
| Nail penetration test | - | A | A | B | B | C |
| Cycle test | - | B | B | B | A | C |
| Rate test | - | B | A | C | A | C |

[Table 7-4]

| Properties of microporous membrane | | Example 39 | Example 40 | Example 41 | Example 42 |
|---|---|---|---|---|---|
| MI | g/10 min | 0.25 | 0.25 | 0.41 | 0.90 |
| Ratio of PE having Mw of 1,000,000 or more | % | 17.3 | 17.3 | 14.0 | 9.1 |
| Membrane thickness | μm | 12.5 | 14.0 | 10.0 | 14.0 |
| Porosity | % | 48.9 | 48.0 | 45.5 | 57.8 |
| (Pre-compression) air permeability Version 2 | s/100 cm$^3$ | 84 | 94 | 70 | 60 |

(continued)

| Properties of microporous membrane | | Example 39 | Example 40 | Example 41 | Example 42 |
|---|---|---|---|---|---|
| Air permeability distribution in TD | sec | 10 | 11 | 7 | 6 |
| Puncture strength | gf | 340 | 352 | 260 | 283 |
| Resin basis weight of substrate | g/m$^2$ | 6.07 | 6.92 | 5.10 | 4.20 |
| Basis weight-converted puncture strength of substrate | gf/g/m$^2$ | 56 | 51 | 51 | 67 |
| MD tensile strength at break | kg/cm$^2$ | 1,314 | 1,250 | 1,103 | 801 |
| MD tensile elongation at break | % | 114 | 120 | 91 | 60 |
| MD tensile elastic modulus | kg/cm$^2$ | 6,532 | 5,782 | 6,239 | 4,384 |
| TD tensile strength at break | kg/cm$^2$ | 1,298 | 1,052 | 1,004 | 982 |
| TD tensile elongation at break | % | 98 | 108 | 120 | 71 |
| TD tensile elastic modulus | kg/cm$^2$ | 7,126 | 6,648 | 4,220 | 5,406 |
| MD/TD ratio of tensile strength | - | 1.01 | 1.19 | 1.10 | 0.82 |
| MD/TD ratio of tensile elongation | - | 1.16 | 1.11 | 0.76 | 0.85 |
| MD/TD ratio of tensile elastic modulus | - | 0.92 | 0.87 | 1.48 | 0.81 |
| MD heat shrinkage at 120°C | % | 5.0 | 4.2 | 6.5 | 0.5 |
| TD heat shrinkage at 120°C | % | 8.3 | 6.3 | 8.5 | 1.0 |
| Porosity in compressed environment at 3 MPa | % | 44.9 | 44.2 | 41.0 | 47.5 |
| Air permeability in compressed environment at 3 MPa | s/100 cm$^3$ | 105 | 118 | 138 | 105 |
| Smoothness | sec | 40,500 | 39,540 | 65,720 | 76,900 |
| Nail penetration test | - | B | B | B | A |
| Cycle test | - | B | B | C | A |
| Rate test | - | B | C | C | B |

[Table 7-5]

| Properties of microporous membrane | | Example 43 | Example 44 | Example 45 |
|---|---|---|---|---|
| MI | g/10 min | 0.90 | 0.90 | 0.30 |
| Ratio of PE having Mw of 1,000,000 or more | % | 9.1 | 9.1 | 17.3 |
| Membrane thickness | μm | 12.0 | 14.0 | 12.0 |
| Porosity | % | 59.2 | 58.5 | 47.0 |
| (Pre-compression) air permeability Version 2 | s/100 cm$^3$ | 45 | 65 | 95 |
| Air permeability distribution in TD | sec | 4 | 5 | 10 |
| Puncture strength | gf | 285 | 290 | 223 |
| Resin basis weight of substrate | g/m$^2$ | 4.11 | 4.16 | 4.01 |
| Basis weight-converted puncture strength of substrate | gf/g/m$^2$ | 69 | 70 | 56 |
| MD tensile strength at break | kg/cm$^2$ | 935 | 810 | 915 |
| MD tensile elongation at break | % | 71 | 66 | 74 |

(continued)

| Properties of microporous membrane | | Example 43 | Example 44 | Example 45 |
|---|---|---|---|---|
| MD tensile elastic modulus | kg/cm$^2$ | 5,115 | 4,402 | 4,661 |
| TD tensile strength at break | kg/cm$^2$ | 1,146 | 1,023 | 1,033 |
| TD tensile elongation at break | % | 56 | 80 | 87 |
| TD tensile elastic modulus | kg/cm$^2$ | 6,307 | 5,672 | 5,615 |
| MD/TD ratio of tensile strength | - | 0.82 | 0.79 | 0.89 |
| MD/TD ratio of tensile elongation | - | 1.27 | 0.83 | 0.85 |
| MD/TD ratio of tensile elastic modulus | - | 0.81 | 0.78 | 0.83 |
| MD heat shrinkage at 120°C | % | 7.5 | 0.4 | 4.0 |
| TD heat shrinkage at 120°C | % | 12.0 | 0.8 | 6.4 |
| Porosity in compressed environment at 3 MPa | % | 49.2 | 48.2 | 42.0 |
| Air permeability in compressed environment at 3 MPa | s/100 cm$^3$ | 95 | 110 | 130 |
| Smoothness | sec | 49,460 | 37,885 | 26,310 |
| Nail penetration test | - | A | A | A |
| Cycle test | - | A | A | B |
| Rate test | - | A | C | C |

[Table 8-1]

| Properties of microporous membrane | | Comparative Example 8 | Comparative Example 9 | Comparative Example 10 | Comparative Example 11 | Comparative Example 12 |
|---|---|---|---|---|---|---|
| MI | g/10 min | 0.41 | 0.46 | 0.45 | 0.46 | 0.55 |
| Ratio of PE having Mw of 1,000,000 or more | % | 14.0 | 8.0 | 17.6 | 8.0 | 20.1 |
| Membrane thickness | $\mu$m | 10.0 | 11.0 | 16.0 | 9.0 | 12.0 |
| Porosity | % | 46.5 | 58.0 | 63.8 | 47.8 | 43.9 |
| (Pre-compression) air permeability Version 2 | s/100 cm$^3$ | 88 | 40 | 40 | 75 | 165 |
| Air permeability distribution in TD | sec | 9 | 3 | 15 | 18 | 16 |
| Puncture strength | gf | 258 | 208 | 176 | 190 | 540 |
| Resin basis weight of substrate | g/m$^2$ | 5.10 | 4.39 | 5.50 | 4.46 | 6.40 |
| Basis weight-converted puncture strength of substrate | gf/g/m$^2$ | 51 | 47 | 32 | 43 | 84 |
| MD tensile strength at break | kg/cm$^2$ | 1,096 | 830 | 1,008 | 1,164 | 2,521 |
| MD tensile elongation at break | % | 92 | 90 | 166 | 78 | 77 |

(continued)

| Properties of microporous membrane | | Comparative Example 8 | Comparative Example 9 | Comparative Example 10 | Comparative Example 11 | Comparative Example 12 |
|---|---|---|---|---|---|---|
| MD tensile elastic modulus | kg/cm$^2$ | 6,191 | 4,203 | 4,308 | 5,890 | 8,901 |
| TD tensile strength at break | kg/cm$^2$ | 933 | 920 | 731 | 1,260 | 2,115 |
| TD tensile elongation at break | % | 107 | 89 | 129 | 99 | 90 |
| TD tensile elastic modulus | kg/cm$^2$ | 3,997 | 2,401 | 2,237 | 3,350 | 3,913 |
| MD/TD ratio of tensile strength | - | 1.17 | 0.90 | 1.38 | 0.92 | 1.19 |
| MD/TD ratio of tensile elongation | - | 0.86 | 1.01 | 1.29 | 0.79 | 0.86 |
| MD/TD ratio of tensile elastic modulus | - | 1.55 | 1.75 | 1.93 | 1.76 | 2.27 |
| MD heat shrinkage at 120°C | % | 7.8 | 7.5 | 24.0 | 12.0 | 7.0 |
| TD heat shrinkage at 120°C | % | 9.5 | 9.0 | 30.0 | 16.0 | 9.0 |
| Porosity in compressed environment at 3 MPa | % | 39.0 | 48.1 | 55.0 | 41.0 | 37.0 |
| Air permeability in compressed environment at 3 MPa | s/100 cm$^3$ | 160 | 90 | 100 | 135 | 220 |
| Smoothness | sec | 77,755 | 80,310 | 18,230 | 28,110 | 155,310 |
| Nail penetration test | - | B | E | E | E | A |
| Cycle test | - | D | A | D | D | E |
| Rate test | - | D | A | B | C | E |

[Table 8-2]

| Properties of microporous membrane | | Comparative Example 13 | Comparative Example 14 | Comparative Example 15 | Comparative Example 16 | Comparative Example 17 |
|---|---|---|---|---|---|---|
| MI | g/10 min | 0.42 | 0.46 | 0.75 | 0.75 | 0.05 |
| Ratio of PE having Mw of 1,000,000 or more | % | 19.5 | 8.0 | 11.6 | 11.6 | 75.0 |
| Membrane thickness | μm | 22.4 | 8.0 | 20.0 | 3.0 | 7.1 |
| Porosity | % | 48.3 | 41.3 | 45.3 | 54.0 | 47.2 |

(continued)

| Properties of microporous membrane | | Comparative Example 13 | Comparative Example 14 | Comparative Example 15 | Comparative Example 16 | Comparative Example 17 |
|---|---|---|---|---|---|---|
| (Pre-compression) air permeability Version 2 | s/100 cm³ | 389 | 150 | 110 | 30 | 92 |
| Air permeability distribution in TD | sec | 30 | 10 | 16 | 3 | 18 |
| Puncture strength | gf | 748 | 201 | 450 | 135 | 379 |
| Resin basis weight of substrate | g/m² | 11.00 | 4.46 | 10.40 | 1.30 | 3.56 |
| Basis weight-converted puncture strength of substrate | gf/g/m² | 68 | 45 | 43 | 104 | 106 |
| MD tensile strength at break | kg/cm² | 1,725 | 1,330 | 1,227 | 2,071 | 2,431 |
| MD tensile elongation at break | % | 128 | 72 | 82 | 25 | 105 |
| MD tensile elastic modulus | kg/cm² | 3,910 | 3,542 | 6,092 | 16,385 | 18,924 |
| TD tensile strength at break | kg/cm² | 1,698 | 1,943 | 1,117 | 1,697 | 2,298 |
| TD tensile elongation at break | % | 133 | 82 | 76 | 41 | 95 |
| TD tensile elastic modulus | kg/cm² | 5,302 | 5,823 | 3,863 | 10,198 | 13,323 |
| MD/TD ratio of tensile strength | - | 1.02 | 0.68 | 1.10 | 1.22 | 1.06 |
| MD/TD ratio of tensile elongation | - | 0.96 | 0.88 | 1.08 | 0.61 | 1.11 |
| MD/TD ratio of tensile elastic modulus | - | 0.74 | 0.61 | 1.58 | 1.61 | 1.42 |
| MD heat shrinkage at 120°C | % | 15.0 | 12.0 | 18.0 | 5.5 | 24.2 |
| TD heat shrinkage at 120°C | % | 21.0 | 16.0 | 19.0 | 12.3 | 24.3 |
| Porosity in compressed environment at 3 MPa | % | 39.0 | 37.5 | 40.0 | 35.0 | 38.2 |
| Air permeability in compressed environment at 3 MPa | s/100 cm³ | 800 | 205 | 180 | 145 | 163 |
| Smoothness | sec | 25,830 | 18,200 | 45,370 | 286,460 | 234,530 |
| Nail penetration test | - | A | E | D | A | E |

(continued)

| Properties of microporous membrane | | Comparative Example 13 | Comparative Example 14 | Comparative Example 15 | Comparative Example 16 | Comparative Example 17 |
|---|---|---|---|---|---|---|
| Cycle test | - | E | D | D | D | E |
| Rate test | - | E | E | D | D | E |

[Table 8-3]

| Properties of microporous membrane | | Comparative Example 18 | Comparative Example 19 | Comparative Example 20 | Comparative Example 21 |
|---|---|---|---|---|---|
| MI | g/10 min | 0.42 | 1.21 | 1.97 | 2.05 |
| Ratio of PE having Mw of 1,000,000 or more | % | 20.0 | 14.0 | 20.5 | 3.0 |
| Membrane thickness | $\mu$m | 8.0 | 22.0 | 20.0 | 10.5 |
| Porosity | % | 51.5 | 50.0 | 62.4 | 45.2 |
| (Pre-compression) air permeability Version 2 | s/100 cm$^3$ | 85 | 70 | 57 | 180 |
| Air permeability distribution in TD | sec | 14 | 15 | 22 | 25 |
| Puncture strength | gf | 338 | 342 | 355 | 180 |
| Resin basis weight of substrate | g/m$^2$ | 3.70 | 11.40 | 7.32 | 5.30 |
| Basis weight-converted puncture strength of substrate | gf/g/m$^2$ | 91 | 30 | 48 | 34 |
| MD tensile strength at break | kg/cm$^2$ | 1,950 | 1,850 | 1,732 | 1,720 |
| MD tensile elongation at break | % | 72 | 63 | 45 | 91 |
| MD tensile elastic modulus | kg/cm$^2$ | 4,250 | 8,201 | 6,720 | 12,340 |
| TD tensile strength at break | kg/cm$^2$ | 2,003 | 403 | 253 | 120 |
| TD tensile elongation at break | % | 67 | 321 | 350 | 686 |
| TD tensile elastic modulus | kg/cm$^2$ | 3,810 | 1,653 | 1,003 | 487 |
| MD/TD ratio of tensile strength | - | 0.97 | 4.59 | 6.85 | 14.33 |
| MD/TD ratio of tensile elongation | - | 1.07 | 0.20 | 0.13 | 0.13 |
| MD/TD ratio of tensile elastic modulus | - | 1.12 | 4.96 | 6.70 | 25.34 |
| MD heat shrinkage at 120°C | % | 23.0 | 4.9 | 23.0 | 16.0 |

(continued)

| Properties of microporous membrane | | Comparative Example 18 | Comparative Example 19 | Comparative Example 20 | Comparative Example 21 |
|---|---|---|---|---|---|
| TD heat shrinkage at 120°C | % | 27.0 | 6.7 | 21.0 | 0.5 |
| Porosity in compressed environment at 3 MPa | % | 39.5 | 39.0 | 43.0 | 43.0 |
| Air permeability in compressed environment at 3 MPa | s/100 cm$^3$ | 147 | 125 | 105 | 190 |
| Smoothness | sec | 210,800 | 14,700 | 10,530 | 71,295 |
| Nail penetration test | - | E | E | E | E |
| Cycle test | - | D | E | D | D |
| Rate test | - | D | D | B | E |

**Claims**

1. A polyolefin microporous membrane, having:

   a membrane thickness of 1 $\mu$m to 30 $\mu$m;
   an air permeability of 500 sec/100 cm$^3$ or less; and
   a post-compression porosity, which is measured in a compression test conducted at a temperature of 70°C and a pressure of 8 MPa for a compression time of 3 minutes, of 30% or higher.

2. A polyolefin microporous membrane, comprising a polyethylene as a main component,
   wherein the polyolefin microporous membrane has a crystal long period of 37.0 nm or longer as measured by a small-angle X-ray scattering (SAXS) method.

3. The polyolefin microporous membrane according to claim 1 or 2, comprising a polyethylene as a main component,
   wherein the polyethylene has a crystallite size of 28.0 nm or smaller.

4. The polyolefin microporous membrane according to any one of claims 1 to 3, having a porosity of 35% or higher.

5. A polyolefin microporous membrane, having:

   a basis weight-converted puncture strength of 50 gf/(g/m$^2$) or more;
   a difference of 15 sec/100 cm$^3$ or less between a maximum value and a minimum value of an air permeability measured at a total of three spots along the width direction (TD), which spots consist of two spots at 10% of a full width from the respective ends inward to the center and one central spot; and
   a pressurized-state air permeability of 140 sec/100 cm$^3$ or less at 30°C in a pressurized state of 3 MPa.

6. The polyolefin microporous membrane according to any one of claims 1 to 5, having a porosity of 40% or higher at 30°C in a pressurized state of 3 MPa.

7. The polyolefin microporous membrane according to any one of claims 1 to 6, having a puncture strength of 220 gf or more.

8. The polyolefin microporous membrane according to any one of claims 1 to 7, wherein the content of a polyethylene component having a weight-average molecular weight (Mw) of 1,000,000 or more as measured by GPC is not less than 7% with respect to all eluted components measured by GPC.

9. The polyolefin microporous membrane according to any one of claims 1 to 8, having a melt flow index (MI) of 1.0 or less.

**10.** The polyolefin microporous membrane according to any one of claims 1 to 9, having a TD heat shrinkage of 20% or less at 120°C.

**11.** The polyolefin microporous membrane according to any one of claims 1 to 10, wherein a ratio (MD/TD tensile strength ratio) of a tensile strength in the longitudinal direction (MD) to a tensile strength in the width direction (TD) is 0.5 to 2.0.

**12.** A separator, comprising:

the polyolefin microporous membrane according to any one of claims 1 to 11; and
an inorganic porous layer arranged on at least one surface of the polyolefin microporous membrane.

**13.** A separator, comprising:

the polyolefin microporous membrane according to any one of claims 1 to 11; and
a thermoplastic resin layer arranged on at least one surface of the polyolefin microporous membrane.

**14.** A separator, comprising:

the polyolefin microporous membrane according to any one of claims 1 to 11; and
at least one layer which is arranged on at least one surface of the polyolefin microporous membrane and selected from the group consisting of a multi-functional layer, an inorganic porous layer, and a thermoplastic resin layer.

**15.** A nonaqueous secondary battery, comprising the polyolefin microporous membrane according to any one of claims 1 to 11, or the separator according to any one of claims 12 to 14.

# FIG. 1

## INTERNATIONAL SEARCH REPORT

International application No.

**PCT/JP2021/040160**

### A. CLASSIFICATION OF SUBJECT MATTER

*B29K 23/00*(2006.01)n; *B29K 105/04*(2006.01)n; *B29L 7/00*(2006.01)n; *C08J 9/26*(2006.01)i; *C08J 9/36*(2006.01)i; *H01G 11/52*(2013.01)i; *B29C 67/20*(2006.01)i; *H01G 9/02*(2006.01)i; *H01M 50/414*(2021.01)i; *H01M 50/417*(2021.01)i; *H01M 50/449*(2021.01)i; *H01M 50/451*(2021.01)i; *H01M 50/457*(2021.01)i; *H01M 50/489*(2021.01)i; *H01M 50/491*(2021.01)i; *H01M 50/494*(2021.01)i

FI: C08J9/26 CES; H01M50/417; H01M50/489; H01M50/491; H01M50/494; H01M50/451; H01M50/414; H01M50/449; H01M50/457; H01G11/52; H01G9/02; C08J9/36 CES; B29C67/20 B; C08J9/26 102; B29K23:00; B29K105:04; B29L7:00

According to International Patent Classification (IPC) or to both national classification and IPC

### B. FIELDS SEARCHED

Minimum documentation searched (classification system followed by classification symbols)

B29K23/00; B29K105/04; B29L7/00; C08J9/26; C08J9/36; H01G11/52; B29C67/20; H01G9/02; H01M50/414; H01M50/417; H01M50/449; H01M50/451; H01M50/457; H01M50/489; H01M50/491; H01M50/494

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2018/043331 A1 (TORAY INDUSTRIES) 08 March 2018 (2018-03-08) | 1-15 |
| A | WO 2014/175252 A1 (SEKISUI CHEMICAL CO., LTD.) 30 October 2014 (2014-10-30) | 1-15 |
| A | JP 2020-92068 A (ASAHI KASEI CORP) 11 June 2020 (2020-06-11) | 1-15 |
| A | JP 5021461 B2 (TORAY BATTERY SEPARATOR FILM CO., LTD.) 05 September 2012 (2012-09-05) | 1-15 |
| A | JP 2018-162438 A (ASAHI KASEI CORP) 18 October 2018 (2018-10-18) | 1-15 |
| P, A | JP 2021-105165 A (TORAY INDUSTRIES) 26 July 2021 (2021-07-26) claims, paragraphs [0029], [0050]-[0053], [0067], [0094], table 1 | 1-15 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 January 2022** | **18 January 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2021/040160**

| Patent document cited in search report | | | Publication date (day/month/year) | Patent family member(s) | | | Publication date (day/month/year) |
|---|---|---|---|---|---|---|---|
| WO | 2018/043331 | A1 | 08 March 2018 | US | 2019/0252664 | A1 | |
| | | | | EP | 3505559 | A1 | |
| | | | | CN | 109563299 | A | |
| | | | | KR | 10-2019-0046756 | A | |
| WO | 2014/175252 | A1 | 30 October 2014 | US | 2016/0079580 | A1 | |
| | | | | CN | 104981506 | A | |
| | | | | KR | 10-2016-0002678 | A | |
| JP | 2020-92068 | A | 11 June 2020 | (Family: none) | | | |
| JP | 5021461 | B2 | 05 September 2012 | US | 2009/0008816 | A1 | |
| | | | | WO | 2006/104165 | A1 | |
| | | | | EP | 1873193 | A1 | |
| | | | | KR | 10-2007-0114283 | A | |
| | | | | CN | 101151308 | A | |
| JP | 2018-162438 | A | 18 October 2018 | CN | 108623876 | A | |
| | | | | KR | 10-2018-0108509 | A | |
| JP | 2021-105165 | A | 26 July 2021 | (Family: none) | | | |

Form PCT/ISA/210 (patent family annex) (January 2015)

**REFERENCES CITED IN THE DESCRIPTION**

**Patent documents cited in the description**

- WO 2014175252 A
- WO 2015012324 A
- WO 2018164056 A
- WO 2015194504 A
- WO 2018043331 A
- WO 2007023918 A
- WO 2007037289 A

- JP 2017025294 A
- JP 5295834 B
- JP 2018162438 A
- JP 2020164861 A
- JP 2002088188 A
- WO 2008093572 A